# EUROPEAN PATENT APPLICATION

(11) **EP 1 847 954 A1**
(43) Date of publication of application: **24.10.2007**
(21) Application number: 06713501.2
(22) Date of filing: 10.02.2006
(51) Int. Cl.: G06Q 50/00, G09G 5/00

(54) **INFORMATION PROVIDING DEVICE, AND INFORMATION PROVIDING SYSTEM**

(30) Priority: 10.02.2005 WO PCT/JP2005/002080
(71) Applicant: FUJITSU LIMITED, Kawasaki-shi, Kanagawa 211-8588 (JP)
(72) Inventor: NAITO, Hirohisa, kahara-ku, Kawasaki-shi, Kanagawa, 2118588 (JP); UEDA, Akinobu, kahara-ku, Kawasaki-shi, Kanagawa, 2118588 (JP)
(74) Representative: Stebbing, Timothy Charles
(86) International application number: PCT/JP2006/302358
(87) International publication number: WO 2006/092945

(57) **Abstract**

In the information providing apparatus viewable by a multiplicity of unspecified persons, the present invention provides an information providing apparatus and an information providing system that can provide the information desired by the user (a plenty of the user at the particular place) from the display information displayed on the information providing apparatus without losing the contents on display.

The invention includes a displaying unit (11), a display processing unit (16) that causes the displaying unit (11) to display the information, a user information reading unit (13) that reads the user information from a user information storage medium held by the user of the information providing apparatus (10A), and, an accompanying information generating unit (15) that executes a predetermined process based on the user information read by the user information reading unit (13) and generating the accompanying information related to the user, wherein the display processing unit (16) causes the displaying unit (11) to display an image including the accompanying information and the general information superposed one on the other.

## Description

### TECHNICAL FIELD

The present invention relates to an information providing apparatus and an information providing system for displaying traffic information such as railway information and flight information, commodity advertisements, news releases, display information such as notice and the like at places including stations, airports, department stores, hospitals, schools and corporations where a multiplicity of unspecified persons gather.

### BACKGROUND ART

The conventional large-screen display apparatus installed at a place where a multiplicity of unspecified persons gather is mainly configured of a LED (Light-Emitting Diode). Recently, however, display apparatuses having a large screen that can be reduced in thickness such as a plasma display, a liquid crystal display, SED (Surface-conduction Electron-emitter Display) and a rear projection system with an improved expression performance capable of displaying clear images of photos or the like and dynamic images have come to be used. In this connection, an information display system has been proposed that displays pieces of guide information configured to include at least one of still and dynamic images on a large-screen display board of plasma display or the like (see Patent Document 1, for example). In such an information display system, information on departures and arrivals of airplanes and other information including an airport map and boarding gates are displayed on a large-sized plasma display installed at the lobby of an airport or the like so that a multiplicity of persons can view them at a time.

A display apparatus that display information like the aforementioned one, that displays the contents requested by viewers of the display screen, has also been proposed. This display apparatus includes an input unit such as buttons or a touch panel to be operated by the viewers to display information on desired commodities, for example, from a menu screen (se Patent Document 2, for example).

Patent Document 1: Japanese Patent Application Laid-Open No. 10-187107
Patent Document 2: Japanese Patent Application Laid-Open No. 2000-137868

### DISCLOSURE OF INVENTION

### PROBLEM TO BE SOLVED BY THE INVENTION

The aforementioned display apparatus of a large screen described in Patent Document 1 is used at various places and may be installed at places such as food malls of railway stations and department stores where many shops are located to display a list of the shops including restaurants. In such a case, the display screen for displaying the shop list is a still notice board whereby the real-time information on the shops such as the availability of unoccupied seats and the menu recommended for the day cannot be known. Therefore, each prospective customer checking the board, determines and actually moves to a desired shop, with the result that he/she often finds that the particular shop is closed or fully occupied and is required to move again to the notice board.

On the other hand, a CD (compact disk) store may be equipped with a facility to listen to a music before buying a CD. Such a facility, so configured that a person can listen to the music in the desired one of CDs from a plurality of screens, can be used by only one person at a time, and once it is occupied by someone, the other persons are deprived of the chance of listening in trial. In other words, the chance of listening to the music before buying the CD thereof is extremely low and therefore the effect of advertisement is low.

Further, a display apparatus is available which, having a large screen divided into a multiplicity of screens displaying many video channels as a multi-screen, is installed in a waiting room or the like. Such a multi-screen display apparatus normally has only one audio output which is tuned to one of the channels arbitrarily selected from the multi-screen or turned off. Therefore, the viewers in the waiting room, have no choice but to view a dynamic image while hearing the audio output corresponding to an unknown video channel or without any audio output. Even when each screen has an audio output, the simultaneous production of audio outputs from a number of screens would result in a mixture of voices failing to correspond to the respective screens and difficult to hear for the viewers.

The large-screen display apparatus installed in an airport or a railway station or the like has many items of display including the arrivals and departures of airplanes or trains and the boarding terminals or platforms. However, in a large airport or station having many flights or train services with many terminals or platforms, the flight or platform desired by a given prospective customer is difficult to find.

The time of arrivals and departures of airplanes or trains are displayed on a large-screen display apparatus in an airport or a station or the like, and a person desiring to use a particular flight or train service is required to memorize the particular flight or train service, as the case may be, and move to the ticket office at another place to follow the procedure to purchase the ticket. In such a case, searching for the flight or the train service memorized by the users from the display apparatus is required also in the ticket office, and therefore, the ticket purchase is a troublesome procedure.

In the display apparatus described in Patent Document 2, a menu screen is normally displayed on the display apparatus, and the user selects the desired item from the menu screen by operating an input unit such as buttons or a touch panel or inputting the private information of the user, thereby displaying the information conforming with the desire of the user. In such a case, the user is required to follow a plurality of steps with the input unit before displaying the intended information.

The present invention has been achieved in view of the problems described above, and an object thereof is to provide an information providing apparatus installed at a place viewable by a multiplicity of unspecified persons and an information providing system including the information providing apparatus, wherein the information desired by the user can be displayed from the display information displayed on the information providing apparatus without losing the contents on display.

Another object of this invention is to provide an information providing apparatus installed at a place viewable by a multiplicity of unspecified persons, wherein the information desired by the user can be displayed easily with a fewer number of operations than in the prior art.

Still another object of this invention is to provide an information providing apparatus and an information providing system installed at a place where a multiplicity of persons gather to display a list of information that can be reserved, wherein a reservation can be made using the information list displayed on the information providing apparatus.

A further object of this invention is to provide an information providing system installed at a place viewable by a multiplicity of unspecified persons, wherein the user can listen to the audio data corresponding to each of a plurality of displayed images without any interruption from the audio data corresponding to other images.

A still further object of this invention is to provide an information providing system installed at a place viewable by a multiplicity of unspecified persons, wherein the display information with the contents thereof changing with time can be put at a service of the user.

### MEANS FOR SOLVING PROBLEM

To solve the above problems and to achieve the above objects, an information providing apparatus according to one aspect of the invention, that displays the general information aimed at the unspecified persons, includes a displaying unit, a display processing unit that causes the displaying unit to display the information, a user information reading unit that reads the user information from a user information storage medium held by the user of the information providing apparatus, and, an accompanying information generating unit that executes a predetermined process based on the user information read by the user information reading unit and generating the accompanying information related to the user, wherein the display processing unit causes the displaying unit to display an image including the accompanying information and the general information superposed one on the other.

Also, to solve the above problems and to achieve the above objects, the information providing apparatus according to another aspect of the invention, further includes a user detecting unit that detects the user existing in a predetermined range from the displaying unit, wherein the display processing unit, upon detection of the user by the user detecting unit, causes the displaying unit to display an image including the detailed information of the general information on display and the general information in superposed relation with each other.

Further, to solve the above problems and to achieve the above objects, an information providing apparatus according to still another aspect of the invention, includes a displaying unit, a display processing unit that causes the displaying unit to display the reservation situation information on services and goods, a user interface unit constituting an interface with the user reserving the services or services, a select information determination processing unit that specifies the select information selected by the user interface unit from the reservation situation information displayed on the displaying unit, and, a reservation processing unit that processes the reservation of the select information specified by the select information determination processing unit.

Also, to solve the above problems and to achieve the above objects, an information providing system according to still another aspect of the invention, includes interconnected according to a predetermined communication scheme, an information providing apparatus that displays an image or a video and distributing the audio data corresponding to the image or the video and a user communication terminal held by the user for distributing the audio data to the user terminal, wherein the information providing apparatus includes a displaying unit, a display processing unit that causes the displaying unit to display the information, an audio data storage unit that stores the audio data corresponding to the information displayed on the displaying unit and the distribution information for establishing the correspondence between the information displayed on the displaying unit and the source of the audio data corresponding to the displayed information, and a data communication processing unit that transmits the distribution information to the user communication terminal of the user existing in the neighborhood of the place of installation of the displaying unit and distributing the audio data based on the instruction from the user, and, the user communication terminal includes a displaying unit that displays the distribution information received from the information providing apparatus, and an audio data playing unit that receives the audio data selected by the user from the distribution information apparatus and playing the selected audio data.

Further, to solve the above problems and to achieve the above objects, an information providing system according to still another aspect of the invention, includes interconnected through a network, an information providing apparatus installed at a predetermined place for displaying the information related to the place and an information management server for managing the information displayed on the information providing apparatus, wherein the information management server includes a display information storage unit that stores the display information containing the general information having the contents related to the place of installation of the information management server and not changing with time and the real-time information having the contents changing with time, and, the information providing apparatus includes a displaying unit, a user interface unit that allows the user to access the information displayed on the displaying unit, an additional information acquisition unit that acquires the additional information corresponding to the general information selected by the user interface unit, from the display information storage unit of the information management server, and a display processing unit that causes the displaying unit to display the general information when the user makes no access from the user interface unit and to display the additional information corresponding to the access when the user makes access from the user interface unit.

### EFFECT OF THE INVENTION

In the information providing apparatus and the information providing system according to the invention, an image of the information having the contents desired by each user can be displayed in superposed relation with the information displayed to a multiplicity of unspecified persons without losing the contents of the latter information. Also, the user is not required to take the trouble of inputting his/her user information by way of an input unit such as the keyboard to acquire the desired information, but only cause a user information reading unit included in the information providing apparatus to read the user information contained in a user information storage medium such as a passenger ticket, a boarding ticket and the point card of a shop used at the place where the information providing apparatus is installed. Also, the information providing apparatus can supply finely detailed information corresponding to the user information.

Also, in the information providing apparatus according to this invention, upon detection of the advance of the user into a predetermined range from the information providing apparatus, a menu can be displayed automatically on a displaying unit thereof and the desired information can be displayed on the displaying unit simply by causing the user information reading unit corresponding to the desired menu item of the menu to read the user information storage medium of the user. In other words, the only operation of the user required to acquire the desired information is to cause the user information storage medium to be read by the user information reading unit, and the steps of the job required on the part of the user to display the information can be reduced to the required minimum. Another advantage is that in the case where the user information storage medium is a no-contact ID card or the like capable of transmitting and receiving the user information by radio communication, even the user with his/her hands occupied can acquire the desired information.

Further, in the information providing apparatus and the information providing system according to this invention, a reservation can be made using a list of reservable information displayed on a displaying unit. Advantageously, therefore, the conventionally required reservation steps of memorizing the desired information from a list on display and making the reservation for the memorized information at another place are eliminated, and the user can execute the reservation process smoothly.

Also, in the information providing apparatus and the information providing system according to this invention, with audio data added to each of a plurality of images or video displayed on a displaying unit, the user can advantageously listen only to the audio data corresponding to the desired image or video in the displaying unit, and therefore, a plurality of users can listen to the audio data individually.

Further, in the information providing apparatus and the information providing system according to this invention, the information providing apparatus installed at a place where shops are gathered is configured of a shop guide, and whenever the user requests the detailed information on a desired one of the shops from the shop guide, the information on the availability of unoccupied seats and the menu item recommended for the day in the particular shop which change with time are displayed. Therefore, the user can decide whether the particular shop should be selected based on the detailed information on the particular shop before moving to the shop.

### BRIEF DESCRIPTION OF THE DRAWINGS

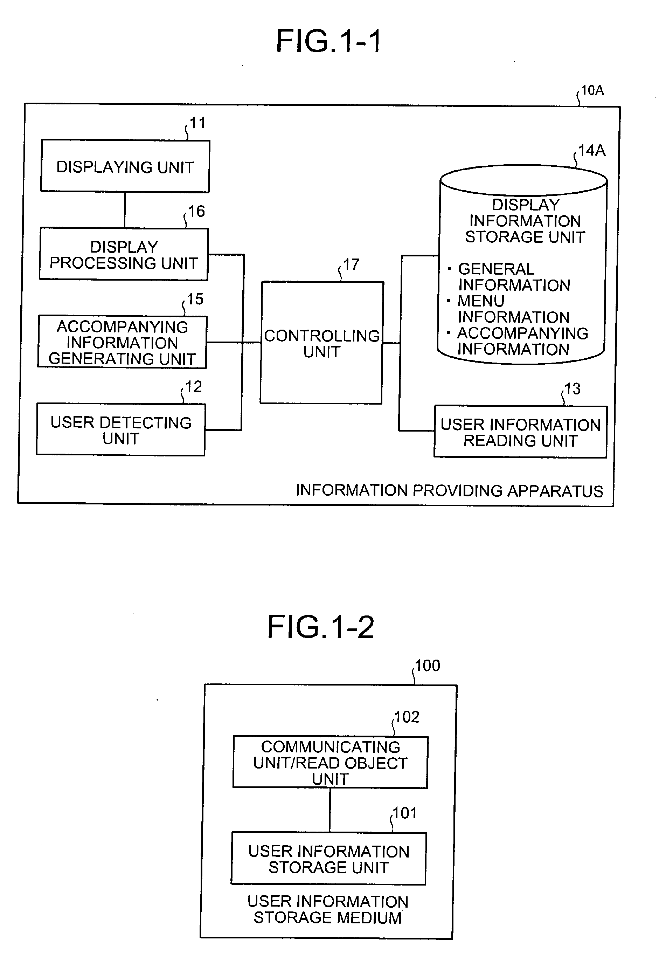

FIG. 1-1 is a block diagram showing the function configuration of the information providing apparatus according to the first embodiment;
FIG. 1-2 is a block diagram showing the configuration of a user information storage medium;
FIG. 2 is a flowchart showing the steps of the process for displaying an accompanying information display screen;
FIG. 3-1 is a diagram showing a front view of the information providing apparatus and an example of the contents of display thereof;
FIG. 3-2 is a diagram showing a front view of the information providing apparatus and an example of the contents of display thereof;
FIG. 3-3 is a diagram showing a front view of the information providing apparatus and an example of the contents of display thereof;
FIG. 4 is a block diagram showing the function configuration of the information providing apparatus according to the second embodiment;
FIG. 5 is a diagram showing an example of the menu item correspondence information;
FIG. 6-1 is a diagram showing a front view of the information providing apparatus and an example of the contents of display thereof;
FIG. 6-2 is a diagram showing a front view of the information providing apparatus and an example of the contents of display thereof;
FIG. 6-3 is a diagram showing a front view of the information providing apparatus and an example of the contents of display thereof;
FIG. 7 is a diagram showing an example of the contents of the menu item correspondence information;
FIG. 8 is a block diagram showing the function configuration of the information providing apparatus according to the third embodiment;
FIG. 9-1 is a diagram showing an example of attribute-wise menu items;
FIG. 9-2 is a diagram showing an example of attribute-wise menu items;
FIG. 10-1 is a diagram showing an example of the menu item correspondence information;
FIG. 10-2 is a diagram showing an example of the menu item correspondence information;
FIG. 11 is a diagram showing an example of the front view of the information providing apparatus capable of generating the accompanying information of the users and an example of the contents thereof displayed on the displaying unit;
FIG. 12 is a flowchart showing an example of the processing steps of discriminating the generation of the accompanying information by color;
FIG. 13-1 is a diagram showing an example of the case in which accompanying information of different colors are displayed;
FIG. 13-2 is a diagram showing an example of the case in which accompanying information of different colors are displayed;
FIG. 14 is a flowchart showing an example of the information display process for displaying pieces of accompanying information in the information providing apparatus;
FIG. 15-1 is a flowchart showing an example of the information display process in the information providing apparatus for the case in which a user identification mark is stored in the user information storage medium;
FIG. 15-2 is a flowchart showing an example of the information display process in the information providing apparatus for the case in which the user identification mark is issued by the information providing apparatus;
FIG. 16 is a diagram showing an example of displaying the general information in superposed relation with the accompanying information carrying the user identification mark;
FIG. 17 is a diagram showing an example of the front view of the information providing apparatus capable of generating the accompanying information of the users and an example of the contents displayed on the displaying unit thereof;
FIG. 18 is a flowchart showing the processing steps of displaying the accompanying information in the neighborhood of the position at which the user information reading unit is installed in the displaying unit;
FIG. 19-1 is a diagram showing an example of display screen for displaying the accompanying information;
FIG. 19-2 is a diagram showing an example of display screen for displaying the accompanying information;
FIG. 19-3 is a diagram showing an example of display screen for displaying the accompanying information;
FIG. 20-1 is a diagram showing an example of the state in which the general information are displayed;
FIG. 20-2 is a diagram showing an example of the case in which the business information (advertisement information) is displayed based on the attribute;
FIG. 20-3 is a diagram showing an example of the business information (advertisement information) shown in FIG. 20-2;
FIG. 21 is a flowchart showing an example of the processing steps of displaying an advertised shop (contents) corresponding to the attribute;
FIG. 22 is a block diagram showing the function configuration of the information providing apparatus according to the fourth embodiment;
FIG. 23 is a flowchart showing the display processing steps of the detailed information;
FIG. 24-1 is a diagram showing an example of the display screen;
FIG. 24-2 is a diagram showing an example of the display screen;
FIG. 25-1 is a diagram showing another example of the display method;
FIG. 25-2 is a diagram showing another example of the display method;
FIG. 25-3 is a diagram showing another example of the display method;
FIG. 26 is a block diagram showing the function configuration of the information providing apparatus according to a fifth embodiment;
FIG. 27 is a flowchart showing the steps of the reservation process;
FIG. 28 is a diagram showing an example of the configuration of a train reservation system;
FIG. 29 is a block diagram showing the function configuration of a reservation information management apparatus;
FIG. 30 is a diagram showing an example of the reservation information;
FIG. 31 is a block diagram showing the function configuration of a user reservation terminal;
FIG. 32 is a block diagram showing the function configuration of the information providing apparatus;
FIG. 33 is a block diagram showing the function configuration of a ticket gate apparatus;
FIG. 34 is a diagram showing an example of the information providing apparatus;
FIG. 35 is a flowchart showing the steps of the reservation process;
FIG. 36 is a block diagram showing the function configuration of the information providing apparatus according to a sixth embodiment;
FIG. 37 is a diagram for explaining an example of the process of moving the display information;
FIG. 38 is a block diagram showing the function configuration of the information providing apparatus according to the seventh embodiment;
FIG. 39 is a block diagram showing the function configuration of a portable information communication terminal;
FIG. 40 is a flowchart showing the steps of listening to the music information displayed on the information providing apparatus with the portable information communication terminal;
FIG. 41 is a block diagram showing the function configuration of the information providing apparatus according to the eighth embodiment;
FIG. 42 is a flowchart showing the steps of the information display process;
FIG. 43 is a block diagram showing the function configuration of the information providing apparatus according to the ninth embodiment;
FIG. 44 is a flowchart showing the steps of determining the video data displayed on the information providing apparatus by the vote of the users;
FIG. 45 is a diagram showing an example of the video data display method;
FIG. 46 is a block diagram schematically showing the configuration of an information providing system;
FIG. 47 is a flowchart showing the steps of the process for displaying the commodity position in the information providing system;
FIG. 48 is a block diagram showing the function configuration of the information providing apparatus according to the eleventh embodiment;
FIG. 49 is a diagram showing an example of the configuration of the displaying unit of the information providing apparatus;
FIG. 50 is a flowchart showing the steps of the voting process;
FIG. 51 depicts an example of the front view of the information providing apparatus according to a twelfth embodiment;
FIG. 52-1 is a diagram showing an example of the rule for enlarged display upon selection of the enlarge button in FIG. 51;
FIG. 52-2 is a diagram showing an example of the rule for enlarged display upon selection of the enlarge button in FIG. 51;
FIG. 52-3 is a diagram showing an example of the rule for enlarged display upon selection of the enlarge button in FIG. 51;
FIG. 52-4 is a diagram showing an example of the rule for enlarged display upon selection of the enlarge button in FIG. 51;
FIG. 53 is a diagram showing an example of replacing the display information in FIG. 52-1;
FIG. 54 is a block diagram schematically showing the configuration of the information providing system;
FIG. 55 is a flowchart showing the steps of process for displaying the real-time information in the information providing system;
FIG. 56 is a block diagram schematically showing the configuration of the information providing system;
FIG. 57 is a diagram showing a front view of the information providing apparatus and an example of the contents of display thereof;
FIG. 58 is a diagram showing an example of display of the information providing apparatus capable of discriminating the operation of the user information reading unit and the user interface unit;
FIG. 59-1 is a diagram showing an example of display of menu items prompting the operation of the user information reading unit;
FIG. 59-2 is a diagram showing an example of display of menu items prompting the operation of the user information reading unit;
FIG. 60 is a flowchart showing an example of the processing steps of displaying menu items in the neighborhood of the position at which the user information reading unit is installed;
FIG. 61-1 is a diagram showing an example of display of a plurality of contents at predetermined time intervals;
FIG. 61-2 is a diagram showing an example of display of the contents at predetermined time intervals;
FIG. 62 is a flowchart showing an example of the method of displaying the general information having a multiplicity of contents;
FIG. 63-1 is a diagram showing an example of displaying the general information having a multiplicity of contents;
FIG. 63-2 is a diagram showing an example of displaying the general information having a multiplicity of contents;
FIG. 64 is a flowchart showing another example of the processing steps of displaying a multiplicity of contents;
FIG. 65-1 is a diagram showing another example of displaying the general information having a multiplicity of contents;
FIG. 65-2 is a diagram showing another example of displaying the general information having a multiplicity of contents;
FIG. 66 is a flowchart showing another example of the processing steps of displaying a multiplicity of contents;
FIG. 67-1 depicts another example of displaying the general information having a multiplicity of contents;
FIG. 67-2 depicts another example of displaying the general information having a multiplicity of contents;
FIG. 68-1 is a diagram showing an example of layout of display areas;
FIG. 68-2 is a diagram showing an example of layout of display areas;
FIG. 68-3 is a diagram showing an example of layout of display areas;
FIG. 68-4 is a diagram showing an example of layout of display areas;
FIG. 69-1 is a diagram showing an example of the boundaries of the display areas;
FIG. 69-2 is a diagram showing an example of the boundaries of the display areas;
FIG. 69-3 is a diagram showing an example of the boundaries of the display areas;
FIG. 70-1 is a diagram showing an example of the manner in which the display areas are superposed;
FIG. 70-2 is a diagram showing an example of the manner in which the display areas are superposed;
FIG. 70-3 is a diagram showing an example of the manner in which the display areas are superposed;
FIG. 70-4 is a diagram showing an example of the manner in which the display areas are superposed;
FIG. 71-1 is a diagram showing an example of development of the display areas;
FIG. 71-2 is a diagram showing an example of development of the display areas;
FIG. 71-3 is a diagram showing an example of development of the display areas; and
FIG. 71-4 is a diagram showing an example of development of the display areas.

### EXPLANATION OF LETTERS OF NUMERALS

- 10, 10A to 10M: Information providing apparatus
- 11, 133: Displaying unit
- 12, 12a: User detecting unit
- 13: User information reading unit
- 14, 14A to 14E, 14G, 141, 14J, 14L, 14M: Display information storage unit
- 15: Accompanying information generating unit
- 16, 16F, 16H, 16I, 16L: Display processing unit
- 17, 64, 75, 84, 95, 115, 135: Controlling unit
- 18: User determining unit
- 19: User interface unit
- 20: Select information determination processing unit
- 20A: Ultrasonic wave receiver
- 20B: Select position calculating unit
- 20C: Select processing unit
- 21: Reservation processing unit
- 22: Reservation information storage unit
- 23, 51, 61, 71, 81, 91: Communicating unit
- 24: Music information storage unit
- 25, 114, 131: Radio communicating unit
- 26, 94: Data communication processing unit
- 27: Registered information storage unit
- 28: Registered content-wise user number counting unit
- 29: Request counting unit
- 30: Purchase item list reading unit
- 31: Voter information storage unit
- 32: Biological authenticating unit
- 33: Vote counting unit
- 34: User information writing unit
- 35: Menu item processing unit
- 50: Reservation information management apparatus
- 52: Reservation confirming unit
- 60A: Ticket gate apparatus
- 60B: Ticket examination apparatus
- 62: Reading unit
- 63: Ticket gate processing unit
- 70: Commodity management server
- 72: Commodity information storage unit
- 73: Purchase item list registration processing unit
- 74: Purchase item list storage unit
- 80: Shop server
- 82: Real-time information register
- 83: Display information update processing unit
- 90: Conference information management server
- 92: Conference information storage unit
- 93: Material storage unit
- 100: User information storage medium
- 101: User information storage unit
- 102: Read object unit
- 110: User reservation terminal
- 111: Ultrasonic wave transmitter
- 112: User information storage unit
- 113: Reserving unit
- 120: Terminal
- 130: Portable information communication terminal
- 132: Information read processing unit
- 134: Music reproducing unit
- 150: Network
- 161: Select information movement processing function
- 162: Presentation order changing function
- 163: Layout changing function

### BEST MODES FOR CARRYING OUT THE INVENTION

The information providing apparatus and the information providing system according to embodiments of the invention are explained in detail below with reference to the drawings. This invention is not limited by these embodiments.

### EMBODIMENT 1

FIG. 1-1 is a block diagram showing a function configuration of the information providing apparatus according to the first embodiment of the invention. This information providing apparatus 10A includes a displaying unit 11 that displays information, a user detecting unit 12 that detects a person (hereinafter referred to as the user) reading the displaying unit 11 in detail, a user information reading unit 13 that reads the user information, a display information storage unit 14A that stores the contents displayed on the displaying unit 11, an accompanying information generating unit 15 that generates the accompanying information based on the user information read by the user information reading unit 13, a display processing unit 16 that executes the process of displaying predetermined information on the displaying unit 11, and a controlling unit 17 that controls each of these processing units.

The displaying unit 11 is configured of a display device whose display area can be enlarged and whose depth can be shortened such as plasma display, liquid crystal display, organic electroluminescence display, SED, rear projection or a combination of a projector and a display panel. The information providing apparatus 10A is installed at a place where a multiplicity of unspecified persons gather and can be read by many persons existing at the particular place. Therefore, the display device used with the displaying unit 11 desirably has a large screen. The large screen is defined as the one in which the contents displayed on the displaying unit 11 can be visually recognized by a plurality of persons at the same time in a display object area in the space including the place where the information providing apparatus 10A is installed and which is harmonized with the environment.

The user detecting unit 12 has the function of detecting the user existing on the display surface side of the displaying unit 11. Specifically, the user detecting unit 12 has the function of detecting a person existing in a predetermined range from the display surface of the displaying unit 11 and considered to use the information providing apparatus 10A as a user. For example, a person remaining for a predetermined at a predetermined distance from the display surface side of the displaying unit 11 can be regarded, with a high probability, as a user reading the information providing apparatus 10A, while a person moving, though existing at a predetermined distance from the display surface side of the displaying unit 11, cannot be regarded as a user reading the information providing apparatus 10A but a simple passerby. A motion sensor can be used as a means that detects a person remaining in a predetermined range from the display surface side of the information providing apparatus 10A.

The user information reading unit 13 has the function of reading the user information held by the user as related to the contents displayed on the information providing apparatus 10A from the user information storage medium held by the user. Now, the user information storage medium is explained. FIG. 1-2 is a block diagram showing an example of the configuration of the user information storage medium held by the user. The user information storage medium 100 is configured to include a user information storage unit 101 that stores the user information constituting the information relating to the user and a communicating unit/read object unit 102 that accesses the contents stored in the user information storage unit 101. In addition to the name and age, sex, nationality and address of the user, for example, the user information are assumed to include various information such as the train number of a train or the flight number of an airplane in service and a patient's electronic chart according to the place of installation and the method of using the information providing apparatus 10A. The RFID (Radio Frequency IDentification), IC (Integrated Circuit) card, magnetic card or the portable telephone having the storage function can be used as the user information storage medium 100. When the user information storage medium 100 is configured of the RFID, the IC card adapted for radio communication or the portable telephone or the like, the communicating unit/read object unit 102 functions as a communicating unit for radio communication according to a predetermined radio communication scheme, while when the user information storage medium 100 is configured of a magnetic card, on the other hand, the communicating unit/read object unit 102 acts as a read object unit that reads the magnetic information.

The display information storage unit 14A has the function of storing the display information to be displayed on the displaying unit 11. The display information stored include the general information such as advertisements and the contents corresponding to the place of installation of the information providing apparatus 10A to be displayed to a multiplicity of unspecified persons existing at the particular place of installation, the menu information for displaying the menu screen to the user, and the accompanying information generated in advance for the user or generated by the accompanying information generating unit 15. The menu items relating to the contents processed by the accompanying information generating unit 15 are displayed as the menu information.

The accompanying information generating unit 15 has the function of generating the accompanying information based on the user information read from the user information storage medium 100 by the user information reading unit 13 and temporarily storing the read information in the display information storage unit 14A. For example, when the general information is the flight guide to airplane departures in an airport and the user information storage medium 100 is a RFID having stored therein the desired flight number, then the departure guide corresponding to the particular flight number is generated and displayed as accompanying information in highlight or in a different color so as to attract the attention of the user.

The display processing unit 16 has the function of displaying on the displaying unit 11 the display information stored in the display information storage unit 14A. More specifically, in the normal situation in which the existence of the user is not detected by the user detecting unit 12, the general information available to be read by a multiplicity of unspecified persons are selected from the display information storage unit 14A and displayed. In the description that follows, the screen displayed in such a situation is referred to as the general information screen. Upon detection of the user by the user detecting unit 12, on the other hand, the menu information is retrieved from the display information storage unit 14A and displayed in superposition on the general information screen as a menu screen on the displaying unit 11. Further, the accompanying information generated by the accompanying information generating unit 15 based on the user information read by the user information reading unit 13 is read from the display information storage unit 14A and displayed on the display screen 210 in superposition on the general information screen as an accompanying information display screen.

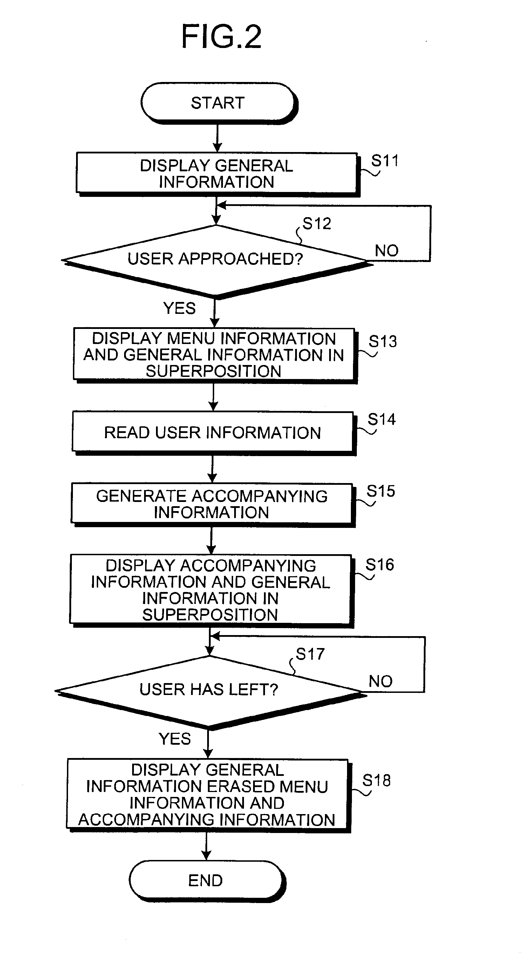

Now, the steps of the process for displaying the accompanying information display screen of the information providing apparatus having the aforementioned configuration are explained with reference to the flowchart of FIG. 2. First, in the normal case where no user exists in the neighborhood of the information providing apparatus 10A, the general information extracted from the display information storage unit 14A by the display processing unit 16 are on display on the displaying unit 11 (step S11). After that, the state is entered in which the user detecting unit 12 detects whether a user has approached a predetermined range from the information providing apparatus 10A (step S12). Specifically, when the approach of a user is not detected by the user detecting unit 12 (NO in step S12), a standby mode prevails and the general information screen continues to be displayed on the displaying unit 11 until the detection of a user. Upon detection of the approach of a user by the user detecting unit 12 (YES in step S12), on the other hand, the display processing unit 16 reads the menu information from the display information storage unit 14A and displays a menu screen with the menu information superposed on the general information on the displaying unit 11 (step S13). The contents displayable by the information providing apparatus 10A are displayed as a menu on the menu screen.

The user, viewing the menu screen, causes the user information reading unit 13 to read the user information storage medium 100 held by himself/herself. When it is possible to read the user information in the user information storage unit 101 without contact, the user information storage medium 100 is simply brought to the proximity of the user information reading unit 13. When the user information storage unit 101 is required to be contacted for reading the user information therein, on the other hand, the user information storage medium 100 is required to be inserted, for example, into the user information reading unit 13. As a result, the user information reading unit 13 reads the user information of the user (step S14) and generates the accompanying information based on the user information (step S15). The accompanying information generated is temporarily stored in the display information storage unit 14A. Then, the display processing unit 16 reads the accompanying information stored in the display information storage unit 14A, and displays it on the displaying unit 11 as an accompanying information display screen added to the general information (step S16). In the process, the display processing unit 16 may display any superposed image of the accompanying information and the general information in any form having the aforementioned feature on the displaying unit 11. For example, an image formed by superposing the accompanying information on the general information, an image formed by superposing the general information on the accompanying information, or a new image formed by superposing the general information and the accompanying information one on the other may be displayed on the displaying unit 11. This is also the case with the description that follows.

After that, the user detecting unit 12 determines whether the user has left the information providing apparatus 10A (step S16). When the user has not left the information providing apparatus 10A (NO in step S16), the current state, i.e. the state in which the accompanying information display screen with the accompanying information added to the general information is displayed on the displaying unit 11 continues to prevail. When the user has left the information providing apparatus 10A (YES in step S16), on the other hand, the display processing unit 16 erases the menu information superposed in step S13 and the accompanying information superposed in step S15 from the displaying unit 11 and displays the general information screen (step S18). At the same time, the accompanying information in the display information storage unit 14A generated in step S15 is deleted. In this way, the display process on the accompanying information display screen is finished.

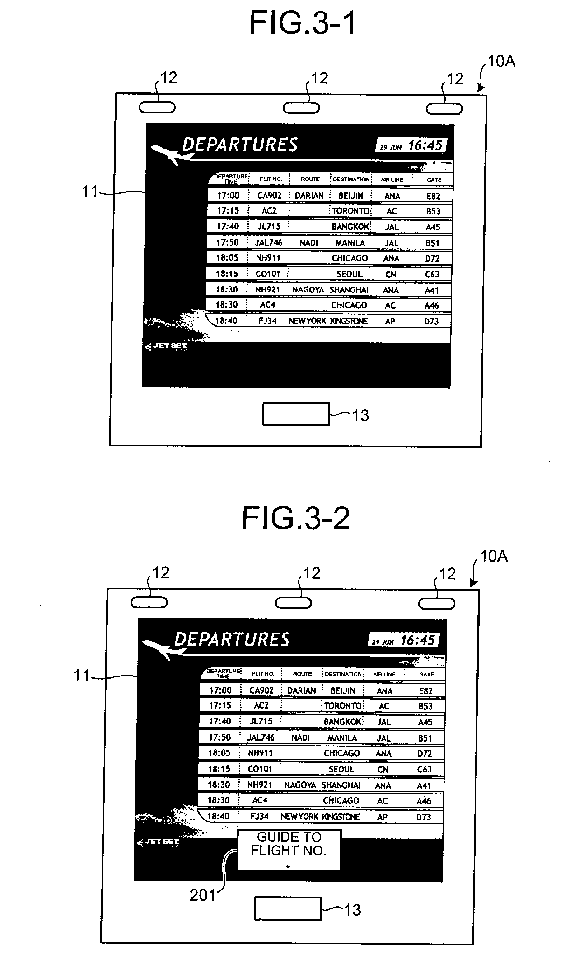

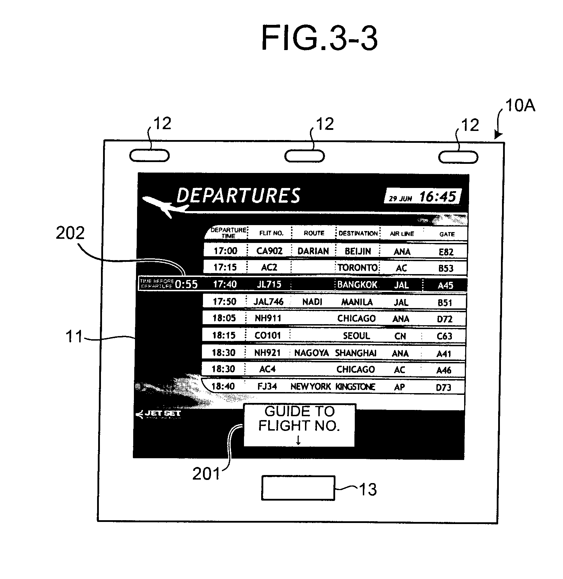

Next, a specific example of application of the first embodiment is explained. FIGS. 3-1 to 3-3 are diagrams showing an example of the front view of the information providing apparatus and an example of the contents displayed on the displaying unit thereof, in which FIG. 3-1 depicts the state in which the general information are displayed, FIG. 3-2 the state in which the menu information is displayed in superposition on FIG. 3-1, and FIG. 3-3 the state in which the accompanying information is further superposed on FIG. 3-2 and displayed. The front part of the information providing apparatus 10A includes a large-sized displaying unit 11 arranged on the main body thereof, user detecting units 12 arranged above the displaying unit 11 and a user information reading unit 13 arranged substantially at the central portion under the displaying unit 11.

In this example, assume that the information providing apparatus 10A is installed in an airport and displays the airplane departure guide (DEPARTURES) as general information and the menu items "GUIDE TO BOARDING FLIGHT NO." used by the user as the menu information. Also, assume that the user information storage medium 100 is an airplane ticket and the flight numbers or the flight number identification information whereby the flight numbers can be uniquely identified as user information are stored in the user information storage unit 101 of the airplane ticket.

As shown in FIG. 3-1, when there is no user around the information providing apparatus 10A, the general information such as the departure time (predetermined time), flight number, route, destination, air line and the gate number of departing airplanes are displayed in ordinary manner on the displaying unit 11. Upon detection of a user in front of the information providing apparatus 10A, as shown in FIG. 3-2, the menu item 201 "GUIDE TO BOARDING FLIGHT NO." is displayed about just above the place of installation of the user information reading unit 13 on the screen of FIG. 3-1. In this case, an arrow indicating the place of installation of the user information reading unit 13 is also displayed in addition to the letters "GUIDE TO BOARDING FLIGHT NO." as the menu item 201. When the user brings the airplane ticket close to the user information reading unit 13, the user information reading unit 13 reads the flight number (or the flight number identification information) from the airplane ticket as user information. The accompanying information generating unit 15 executes the predetermined process of displaying, in highlight or the like, the flight number corresponding to the user information thus read and generates the accompanying information. Then, as shown in FIG. 3-3, the accompanying information 202 with the highlight display of the flight number corresponding to the particular user is displayed on the displaying unit 11. Meanwhile, the time before departure is also generated and displayed as the accompanying information 202 by the accompanying information generating unit 15.

Meanwhile, a plurality of users can use the information providing apparatus 10A substantially at the same time by reading also the user ID for identifying the user in addition to the flight number (or the flight number identification information) as user information and establishing the correspondence of the user ID with the accompanying information generated by the accompanying information generating unit 15 based on the user information that has been read. When a plurality of users use the information providing apparatus 10A, the accompanying information generating unit 15 displays the accompanying information of a different color for each user and thus makes it possible to identify the accompanying information for each user.

Although the case in which the information providing apparatus 10A is installed in an airport is described above, the invention is applicable also to the case where the information providing apparatus 10A is installed in such as a station building, a ferry terminal, a bus terminal, where is a waiting place for other vehicles, or a place where persons are waiting in order.

According to this first embodiment, the contents related to the user are displayed as accompanying information in superposition with the general information on the information providing apparatus 10A installed to display the general information at a place where a multiplicity of unspecified persons exist. Therefore, the advantage is obtained that the information required by individual users can be supplied without losing the contents of the general information aimed at a multiplicity of unspecified persons.

Also, the user can advantageously obtain the desired information without any input process simply by causing the user information reading unit 13 to read the user information storage medium 100. Further, a plurality of users can use the information providing apparatus at the same time by setting the user information in correspondence with the accompanying information generated based on the particular user information.

### EMBODIMENT 2

Although the first embodiment is explained as a case in which only one type of accompanying information is generated by the accompanying information generating unit, the second embodiment is explained below with reference to a case in which a plurality of types of accompanying information are generated by the accompanying information generating unit.

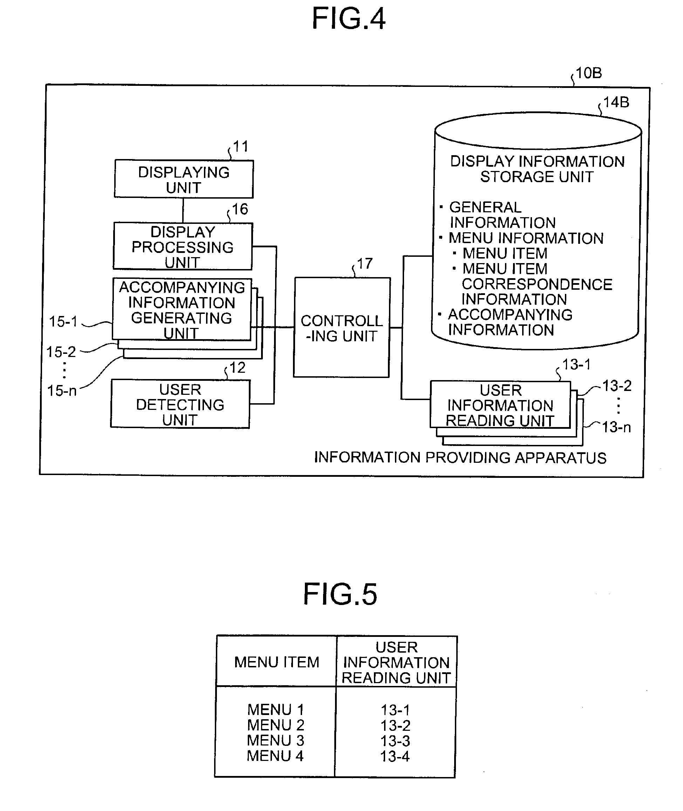

FIG. 4 is a block diagram showing the function configuration of the information providing apparatus according to the second embodiment of the invention. This information providing apparatus 10B has the configuration of the first embodiment shown in FIG. 1-1 additionally including a plurality of user information reading units 13-1 to 13-n (n: arbitrary natural number) and a plurality of accompanying information generating units 15-1 to 15-n. The accompanying information generating units 15-1 to 15-n are provided for the respective types of accompanying information to be generated and set in correspondence with the user information reading units 13-1 to 13-n. Specifically, the user information read by a given one of the user information reading units 13-1 to 13-n is delivered to one of the accompanying information generating units 15-1 to 15-n corresponding to the particular one of the user information reading units 13-1 to 13-n, and a predetermined type of accompanying information is generated by the particular one of the accompanying information generating units 15-1 to 15-n.

The menu information in the display information storage unit 14B is configured to include the menu items corresponding to the types of the accompanying information generating units 15-1 to 15-n and the menu item correspondence information including each particular menu item and the corresponding one of the user information reading units 13-1 to 13-n. FIG. 5 is a diagram showing an example of the menu item correspondence information. This example represents a case in which the four user information reading units 13-1 to 13-4 are arranged in the information providing apparatus 10B. The menu items "menu 1" to "menu 4" for generating the accompanying information are assigned to the user information reading units 13-1 to 13-4, respectively. According to the menu item correspondence information, the process of displaying the menu item on the displaying unit 11 is executed by the display processing unit 16. The other component elements are identical to those of the first embodiment, and therefore, not explained in detail.

Meanwhile, the process of displaying the accompanying information display screen in the information providing apparatus 10B according to the second embodiment is similar to the steps explained in FIG. 2 showing the first embodiment. However, the difference lies in that in step S13 shown in FIG. 2, the menu information having a plurality of menu items and the general information are displayed in superposed relation with each other, and the accompanying information generating units 15-1 to 15-n corresponding to the positions of the user information reading units 13-1 to 13-n of the user information read in step S14 generate the accompanying information based on the particular user information in step S15.

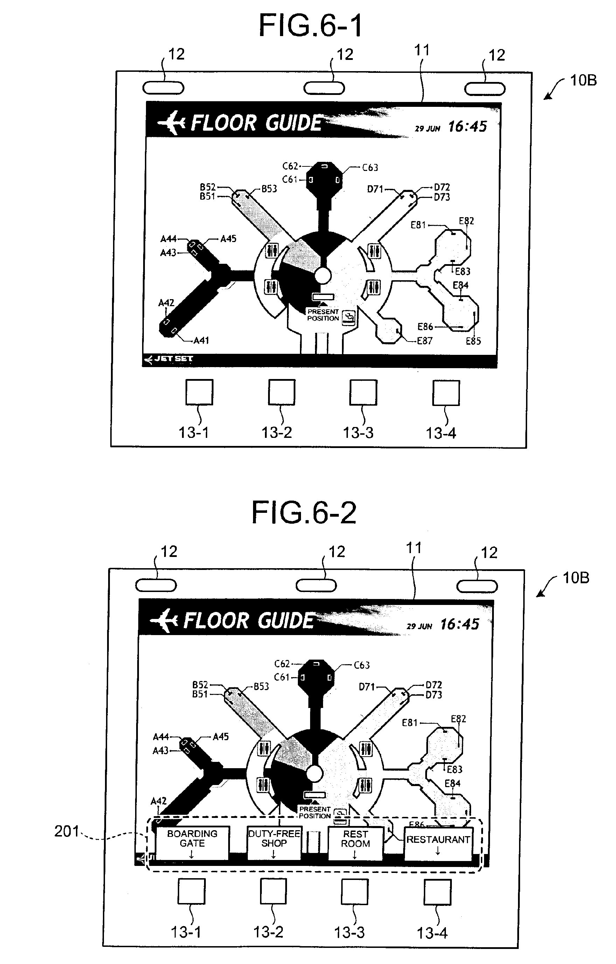

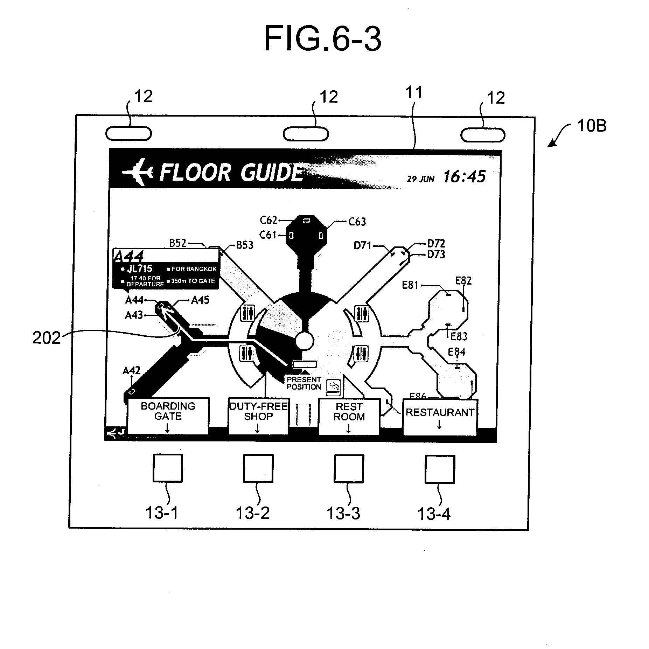

Next, a specific example of application of the second embodiment is explained. FIGS. 6-1 to 6-3 are diagrams showing an example of the front view of the information providing apparatus and an example of the contents displayed on the displaying unit thereof. FIG. 6-1 depicts the state in which the general information is displayed, FIG. 6-2 depicts the state in which the menu information is displayed in superposition on FIG. 6-1, and FIG. 6-3 depicts the state in which the accompanying information is displayed further in superposition on FIG. 6-2. The front part of the information providing apparatus 10B includes a large-sized displaying unit 11 arranged on the main body thereof, user detecting units 12 arranged above the displaying unit 11 and four user information reading units 13-1 to 13-4. The user information reading units 13-1 to 13-4 are arranged along the lower side of the displaying unit 11.

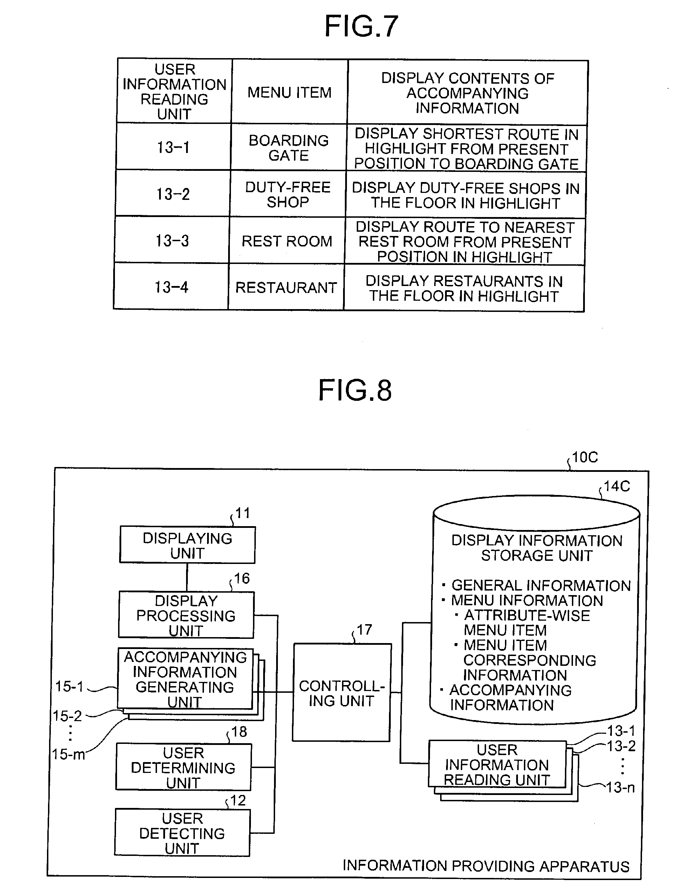

In this example, assume that the information providing apparatus 10B is installed in an airport and displays a floor guide (FLOOR GUIDE) as general information. Also, FIG. 7 is a diagram showing the contents of the menu item correspondence information in this example. As shown in this drawing, the four user information reading units 13-1 to 13-4 correspond to "boarding gate", "duty-free shop", "toilet" and "restaurant", respectively. These menu items correspond to the types of the accompanying information generating units 15-1 to 15-4 generating the accompanying information for "displaying the shortest route from the present position to the boarding gate in highlight", "displaying the duty-free shops in the floor in highlight", "displaying the shortest route from the present position to the nearest toilet in highlight" and "displaying the restaurants in the floor in highlight", respectively, as described in "the display contents of accompanying information" shown in FIG. 7. Meanwhile, assume that the user information storage medium 100 in this example is an airplane ticket and the user information storage unit 101 thereof has stored therein at least the flight number or the flight number identification information capable of uniquely identifying the flight number and the sex of the user as user information.

As shown in FIG. 6-1, when there is no user around the information providing apparatus 10B, the general information showing the floor map of the airport is displayed on the displaying unit 11. Upon detection of the user in front of this information providing apparatus 10B, as shown in FIG. 6-2, the menu information having the four menu items of "boarding gate", "duty-free shop", "toilet" and "restaurant" are displayed just above the place of installation of each user information reading unit on the screen of FIG. 6-1. Also, in addition to the letters, an arrows indicating the places of installation of the user information reading units 13-1 to 13-4, respectively, are also displayed with the menu items 201.

When the user brings the airplane ticket to the proximity of the user information reading unit 13-1 in FIG. 6-2, the user information reading unit 13-1 reads the flight number (or the flight number identification information) as user information from the airplane ticket. The accompanying information generating unit 15-1 corresponding to the user information reading unit 13-1 searches the user information for the boarding gate and generates the accompanying information for displaying the shortest route from the present position to the boarding gate in highlight. As shown in FIG. 6-3, the display processing unit 16 causes the generated accompanying information 202 to be displayed in superposition on the general information. Also when other menu items are selected in FIG. 6-2, a similar process corresponding to the contents thereof is executed. With regard to the menu items "duty-free shop" and "restaurant", however, these shops may be displayed not only in highlight regardless of the user information, but also according to the user attribute, in customized form with the number attached thereto indicating the order of popularity by age and sex. With regard to the menu item "toilet", on the other hand, the sex of the user may be read and the position of the toilet corresponding to the sex may be displayed in highlight or the route thereto may be displayed as user information.

Although the case in which the information providing apparatus 10B is installed in an airport is described above, the invention is applicable also to a waiting place in a railway station building, a ferry terminal or a bus terminal and other places where persons are waiting in order. As another application, when a patient's chart is held as user information in the user information storage medium 100 in a hospital or a pharmaceutical office where patients are waiting in order, the accompanying information such as the knowledge about his/her illness, the method of taking the drug and the recommended foods may be displayed based on the contents of the patient's chart.

Although the example described above represents a case in which the display processing unit 16 is displayed on the displaying unit 11 in such a manner that a multiplicity of unspecified persons can view the general information at any time, the information corresponding to the user who may approach the apparatus may be displayed by erasing the general information. In a sports ground such as a football park, a ballpark or a race track, assuming that the ticket for the particular sports ground constitutes the user information storage medium 100, the accompanying information generating units 15-1 to 15-n may execute the process of displaying the competition data, the feature of the competition associated with the ticket and the result of a lottery using the particular ticket, and based on the result of the process, the display processing unit 16 may be displayed over the entire displaying unit 11.

Further, as in the first embodiment, by reading the user ID as user information, one or different user information reading units 13-1 to 13-n may read pieces of user information substantially at the same time and display the accompanying information based on the user information on the displaying unit 11 in different display methods.

According to the second embodiment, as compared with the first embodiment, various types of accompanying information can be advantageously displayed in superposition on the general information aimed at a multiplicity of unspecified persons in the information providing apparatus 10B. Also, a plurality of users can use it at the same time.

Also, the approach of the user is detected so that a menu that can be processed is displayed on the general information screen. Therefore, the user can advantageously obtain the desired information simply by causing the user information storage medium 100 to be read by the user information reading units 13-1 to 13-n corresponding to the accompanying information generating units 15-1 to 15-n for generating the desire information. For example, conventionally, the labor required for executing the process of displaying a menu screen by the user himself/herself and inputting the information related to him/her to obtain the desired information, can be advantageously eliminated.

### EMBODIMENT 3

According to the third embodiment, the information providing apparatus so configured as to change the menu items according to the attribute of the user in the second embodiment is explained below. The third embodiment represents a case in which the user information storage medium is configured of RFID having such a configuration that the user information reading unit accesses the user information storage unit of a user information storage medium existing in a predetermined range.

FIG. 8 is a block diagram showing the function configuration of the information providing apparatus according to the third embodiment of the invention. The information providing apparatus 10C has the configuration further comprising a user determining unit 18 that determines a predetermined attribute of the user from the user information in FIG. 4 showing the second embodiment. Also, the menu information in the display information storage unit 14C is configured to include the attribute-wise menu items prepared by attribute and the menu item correspondence information indicating the correspondence between the menu item, the user information reading units 13-1 to 13-n and the accompanying information generating units 15-1 to 15-m (m: arbitrary natural number). The other component elements are identical with those of the first and second embodiments, respectively, and not described in detail. Assume that the user information reading units 13-1 to 13-n and the accompanying information generating units 15-1 to 15-m are different in number (n # m, m > n). The case in which n = m corresponds to the second embodiment.

The user determining unit 18 has the function of classifying the user attribute by, upon detection of the user by the user detecting units 12, acquiring the predetermined attribute information from the user information of the user information storage medium 100 read by the user information reading units 13-1 to 13-n. The classification result is output to the display processing unit 16. Also, the user determining unit 18 has the function of updating the menu item correspondence information in the menu information of the display information storage unit 14C based on the classification result.

The menu information in the display information storage unit 14C is configured to include the attribute-wise menu items and the menu item correspondence information as described above. The attribute-wise information utilizes certain information in the user information as the attribute information for user classification and holds the menu items constituting the types of the accompanying information generated for each group classified according to the attribute information. Specifically, the attribute-wise menu information is for classifying the contents of the types of the accompanying information generated for the user classified based on the predetermined attribute information.

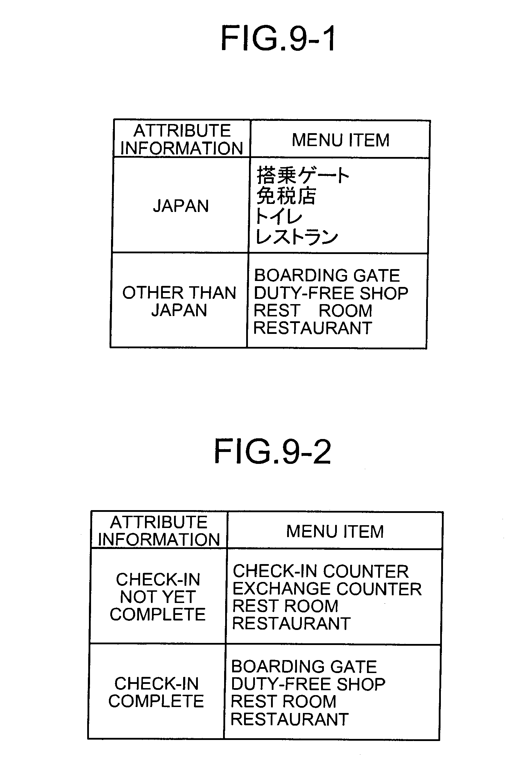

FIGS. 9-1 and 9-2 are diagrams showing an example of the data structure of the attribute-wise menu items. FIG. 9-1 depicts an example of the attribute-wise menu items used in the airport floor guide shown as a specific example in the second embodiment. These attribute-wise menu items are configured to include the "attribute information" providing the standard for classifying the users and the "menu items" displayed to the user associated with the attribute information. In the case of FIG. 9-1, the "attribute information" is the nationality classified into Japan and other nations. Specifically, when the nationality is Japan, the menu items "boarding gate", "duty-free shop", "toilet" and "restaurant" are prepared in Japanese, while when the nationality is not Japan, the English menu items "boarding gate", "duty-free shop", "rest room" and "restaurant" are prepared.

FIG. 9-2 depicts another example of the attribute-wise menu items used as the floor guide in an airport shown as a specific example in the second embodiment. In the case of FIG. 9-2, the "attribute information" is the check-in situation, and classified according to whether the check-in is complete. As menu items corresponding to each attribute information, "check-in counter", "money exchange", "toilet" and "restaurant" are prepared when the check-in is not completed, while the menu items "boarding gate", "duty-free shop", "toilet" and "restaurant" are prepared when the check-in is complete. Although FIGS. 9-1 and 9-2 depict a case in which the user is classified according to one attribute information, pieces of attribute information may be used for user classification.

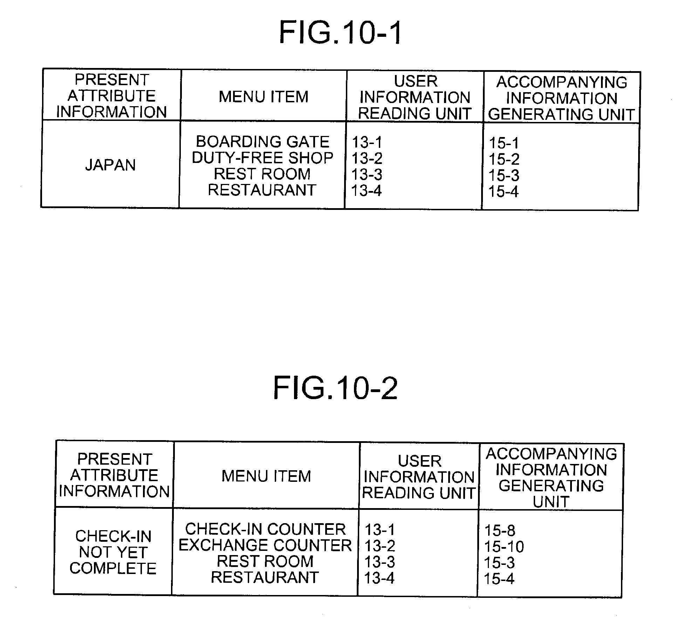

Also, the menu item correspondence information according to the third embodiment is the information including the currently selected attribute information and the information showing the correspondence between the associated menu items, the user information reading units 13-1 to 13-n and the accompanying information generating units 15-1 to 15-m. FIGS. 10-1 and 10-2 are diagrams showing an example of the menu item correspondence information, in which FIG. 10-1 depicts the menu item correspondence information with the attribute information of "Japan" in FIG. 9-1, and FIG. 10-2 the menu item correspondence information with the attribute information of "check-in not complete" in FIG. 9-2. These menu item correspondence information are configured of the "present attribute information" indicating the currently selected attribute information, the "menu items" corresponding to the attribute information, the "user information reading units" constituting an interface with the user for generating the accompanying information of the associated menu items, and the "accompanying information generating units" that generates the accompanying information using the user information from the user information reading units 13-1 to 13-n. Based on this menu item correspondence information, the user information reading units 13-1 to 13-n output the user information that have been read to the corresponding accompanying information generating units 15-1 to 15-m. Meanwhile, the items "user information reading units" and "accompanying information generating units" in FIGS. 10-1 and 10-2 represent a case in which each processing unit is discriminated by the reference numeral used for the explanation.

The display processing unit 16, based on the result of determination of the attribute information of the user by the user determining unit 18, executes the process of extracting the attribute-wise menu item from the menu information of the display information storage unit 14C and displaying it on the displaying unit 11.

Meanwhile, the process of displaying the accompanying information display screen in the information providing apparatus 10C according to the third embodiment is similar to the steps explained in FIG. 2 according to the first embodiment and therefore not explained in detail. The difference lies, however, in that upon detection of the approach of the user in step S13, the user information reading units 13-1 to 13-n access the user information in the user information storage medium 100 for the particular user, and the user determining unit 18 determines the user attribute using the predetermined information therein, so that the menu information corresponding to the particular attribute and the general information are displayed in superposition with each other on the displaying unit 11.

This third embodiment provides the advantage that the contents of the menu can be changed according to the user attribute. As a result, even in the presence of a multiplicity of unspecified persons, the information corresponding to a greater number of users can be provided. Another advantage for the user is that the service menu customized for him/her is provided.

When any one of the information providing apparatuses 10A to 10C according to the first to third embodiments can be used at the same time or substantially at the same time by a plurality of users, a particular user corresponding to the accompanying information displayed on the displaying unit 11 may become unknown. In view of this, the invention is explained with an example of a mechanism whereby each user can identify his/her accompanying information even when a plurality of users use any one of the information providing apparatuses 10A to 10C. Although the information providing apparatus 10B having the configuration explained in the second embodiment is described below as an example, the invention is similarly applicable to any information providing apparatus having the configuration usable by a plurality of users at the same time or substantially at the same time.

### (1) Example in which the accompanying information of each user is discriminated by color

Now, the invention is explained about a method of discriminating the accompanying information of each user by color or pattern when the information providing apparatus 10B having pieces of the accompanying information generating units 15-1 to 15-n that generates the accompanying information customized for each user from the user information that has been read is used by a plurality of users at the same time or substantially at the same time.

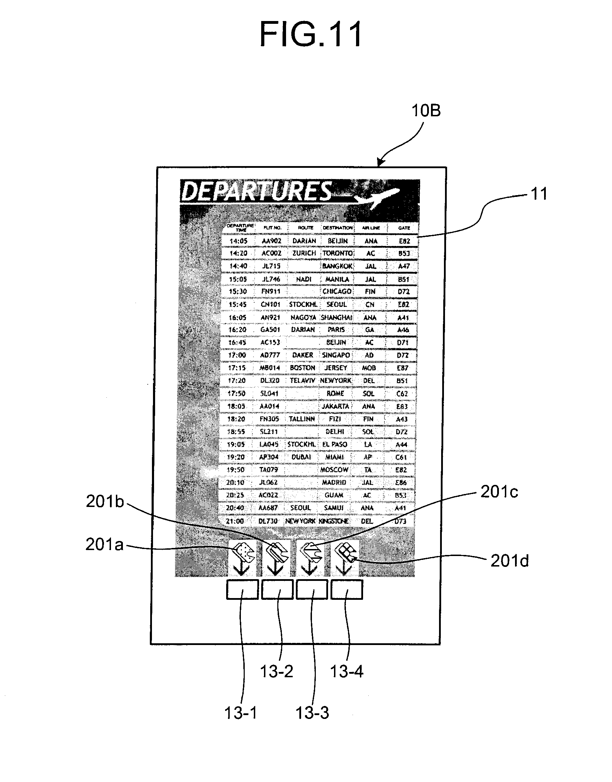

FIG. 11 is a diagram showing an example of the front view of the information providing apparatus capable of generating the accompanying information of a plurality of users and an example of the contents displayed on the displaying unit thereof. The front part of the information providing apparatus 10B includes a large-sized displaying unit 11 arranged on the main body thereof, and four user information reading units 13-1 to 13-4 arranged under the displaying unit 11. In this example, like in the first embodiment shown in FIGS. 3-1 to 3-3, assume that the information providing apparatus 10B is installed in an airport, and an airplane departure guide (DEPARTURES) is displayed as general information, and the menu items for the flight guide used by the user are displayed as menu information. In the example of FIG. 11, the departure guide and the flight guide constituting the menu items 201a to 201d are displayed in superposed relation with each other. Unlike in FIG. 3-2, however, the menu items 201a to 201d for four users are prepared and can be used by a plurality of users at the same time. Each of the menu items 201a to 201d is discriminated by color or pattern. Specifically, the first flight guide menu item 201a is colored red, the second flight guide menu item 201b blue, the third flight guide menu item 201c orange, and the fourth flight guide menu item 201d green. Also, below the flight guide menu items 201a to 201d, the first to fourth user information reading units 13-1 to 13-4 are arranged, respectively. Meanwhile, in FIG. 11, the menu items 201a to 201d are differently hatched to indicate the color difference therebetween.

In this case, the menu information of the display information storage unit 14B in the information providing apparatus 10B has also stored therein the information for displaying the menu items in different colors. Also, the accompanying information generating units 15-1 to 15-4 generate the accompanying information using the user information read by the corresponding user information reading units 13-1 to 13-4, and these accompanying information contain the color information so as to be displayed in colors corresponding to the user information reading units 13-1 to 13-4. When the user information is read by the user information reading unit 13-1, for example, the corresponding accompanying information generating unit 15-1 generates the accompanying information based on the particular user information. At the same time, the accompanying information is generated so as to be displayed in red on the displaying unit 11.

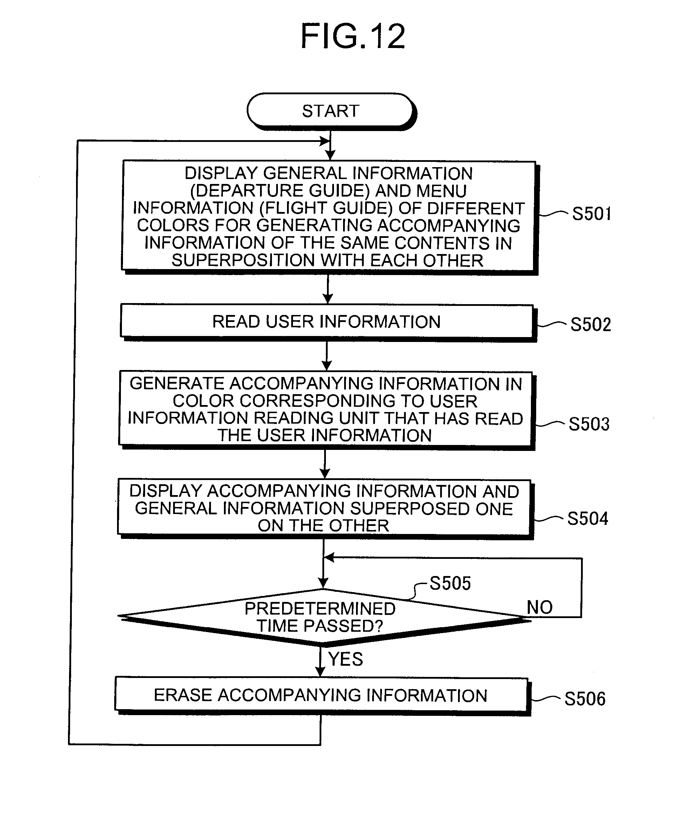

FIG. 12 is a flowchart showing an example of the processing steps of discriminating the generation of the accompanying information by color. First, the display processing unit 16 reads the menu information from the display information storage unit 14B and displays it at a predetermined position on the displaying unit 11 (step S501). Specifically, the menu information (flight guide) of a different color for generating the accompanying information of the same contents and the general information (departure guide) are displayed in superposed relation with each other. In the process, the colors used for the user information reading units 13-1 to 13-4 and the corresponding accompanying information generating units 15-1 to 15-4 are assumed to be stored in the menu information.

Then, the user information reading units 13-1 to 13-4 read the user information from the user information storage medium 100 held by the user (step S502). In the process, the accompanying information generating units 15-1 to 15-4 acquire, from the menu information, the color corresponding to the user information reading units 13-1 to 13-4 that have read the user information and generate the accompanying information of each user by the acquired color, after which an image of the general information and the menu information superposed one on the other is displayed for a predetermined time on the displaying unit (step S503). At the same time, when the user information reading unit 14-1 corresponding to red has read the user information storage medium 100, for example, the accompanying information generating unit 15-1 corresponding to the user information reading unit 14-1 generates the particular accompanying information in red, and the display processing unit 16 executes the process of displaying the particular accompanying information in red on the displaying unit 11. This is also the case with other colors.

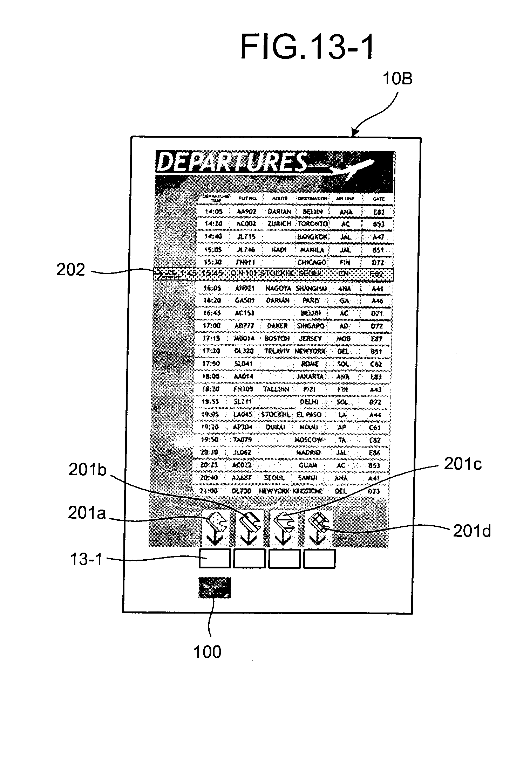

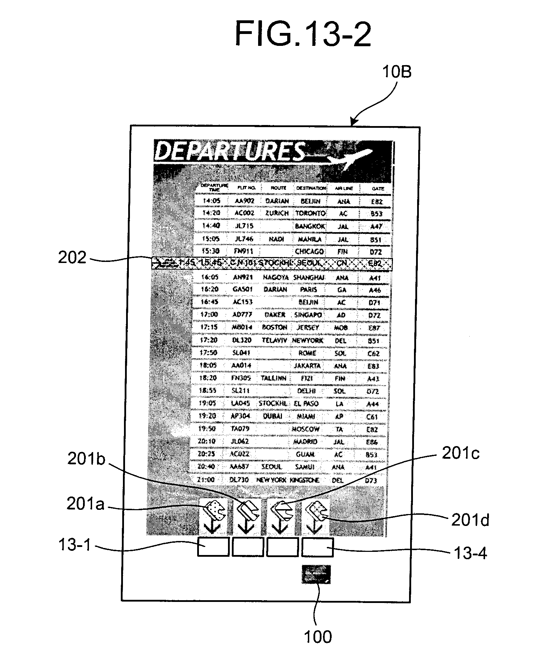

FIGS. 13-1 and 13-2 are diagrams showing an example of a case in which the accompanying information of a different color is displayed. FIG. 13-1 depicts an example of the display screen when the user information is read by the user information reading unit 13-1 for displaying the accompanying information in red, and FIG. 13-2 an example of the display screen when the user information is read by the user information reading unit 13-4 for displaying the accompanying information in green. As indicated by these drawings, the color displayed on the display unit 11 is varied depending on the position at which the user causes the user information storage medium 100 to be read.

After that, the display processing unit 16 determines whether a predetermined time has passed (step S505). When the predetermined time has not passed (NO in step S505), the standby mode is entered. Upon lapse of the predetermined time (YES in step S505), on the other hand, the display processing unit 16 erases the accompanying information (step S506), and the process returns to step S501, where the process described above is executed repeatedly.

Although this example represents a case in which the accompanying information is displayed on the displaying unit 11 for a predetermined time by the color corresponding to the user information reading units 13-1 to 13-4 in step S505, the invention is not limited to this case. Upon detection that the user has moved away from the information providing apparatus 10B, for example, the accompanying information may be erased before the lapse of the predetermined time.

According to this example, the color corresponding to the menu items 201a to 201d is recognized as the accompanying information of the user himself/herself, and therefore, the user can identify his/her accompanying information displayed on the displaying unit 11 from that of the other users.

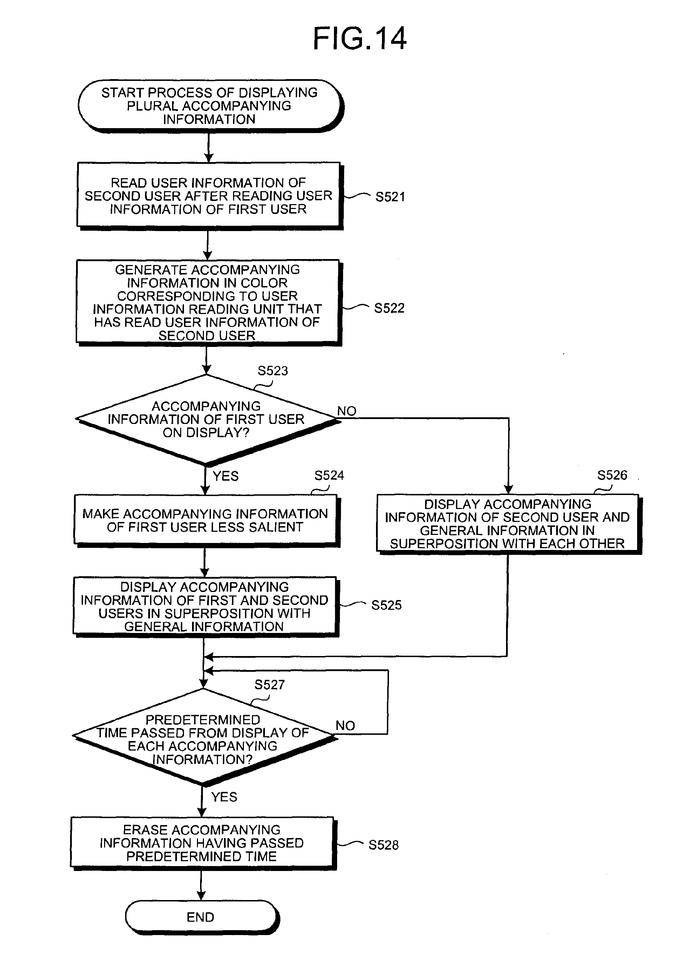

Next, the invention is explained with another example of the method of displaying the accompanying information when the user information of one user is read after the user information of another. FIG. 14 is a flowchart showing an example of the information display process for the information providing apparatus displaying pieces of accompanying information. First, with the user information of the first user read by a user information reading unit 13, the user information of a second user is read by another user information reading unit 13 (step S521). Then, the accompanying information is generated by the accompanying information generating unit 15 in a color corresponding to the user information reading unit 13 that has read the second user information (step S522).

Next, when the accompanying information of the first user is displayed on the displaying unit 11 (YES in step S523), the display processing unit 16 executes the process of (gradually) lightening the display color of the accompanying information of the first user or making it less distinct. Before the lapse of a predetermined time of display, however, the accompanying information of the first user is displayed on the displaying unit 11. Further, the display processing unit 16 displays the accompanying information of the first and second users and the general information on the displaying unit 11 in superposed relation with one another (step S525).

When the user information of the first user is not displayed on the displaying unit 11 (NO in step S523), on the other hand, the accompanying information of the second user and the general information are displayed on the displaying unit 11 in superposed relation with each other (step S526).

After that, the display processing unit 16 determines whether a predetermined time has passed after displaying each accompanying information (step S527), and when the predetermined time has not passed (NO in step S527), the same state is maintained. Upon lapse of the predetermined time for each accompanying information on display, on the other hand, the display processing unit 16 erases the accompanying information of each user (step S528) and executes the process of displaying the general information on the displaying unit 11. In this way, the process of displaying pieces of the accompanying information is finished.

The information providing apparatus 10B may include a user detecting unit 12 for detecting whether a user exists within a predetermined range from the displaying unit 11, and the user detecting unit 12 is caused to detect the presence or absence of a user who has brought the user information storage medium 100 to the vicinity of the user information reading units 13-1 to 13-4, so that upon detection of the absence of the user, the accompanying information corresponding to the particular user may be erased. Also, as explained with reference to the third embodiment, the user information reading units 13-1 to 13-n may read a preset select menu in addition to the user information in step S521, and by displaying the menu dedicated to the particular user, the accompanying information selected from the menu may be generated in step S522.

By executing this display process, even when the operation of a given user is followed by the operation of the next user, the difference in the colors of the users makes it possible to discriminate them and the result of display of the previous user remains for some time on the displaying unit 11. Also, when the operation of a given user is followed by the operation of the next user, the color of the display portion of the first user is lightened and therefore the past and present operations can be discriminated from each other. Further, by displaying the color being lightened gradually, each user can be identified without any sharp change on the screen.

### (2) Example of identifying accompanying information of each user by user identification mark

A method of identifying the accompanying information displayed in the information providing apparatus 10B may consist of attaching a user identification mark to the accompanying information to identify the user. As a user identification mark, the user of the information providing apparatus 10B stores the user identification mark for identifying the user himself/herself in the user information storage medium held by himself/herself and the user causes the user information of himself/herself to be read by the user information reading units 13-1 to 13-n of the information providing apparatus 10B. At the same time, the user information reading unit 13-1 to 13-n read the particular user identification mark and causes the accompanying information generating units 15-1 to 15-n to generate the accompanying information using the particular user identification mark and display it on the displaying unit 11. In another method, the accompanying information generating units 15-1 to 15-n of the information providing apparatus 10B that have read the user information issue the user identification mark to the user and generate the accompanying information using the particular user identification mark, and display it on the displaying unit 11. These two cases are explained sequentially below.

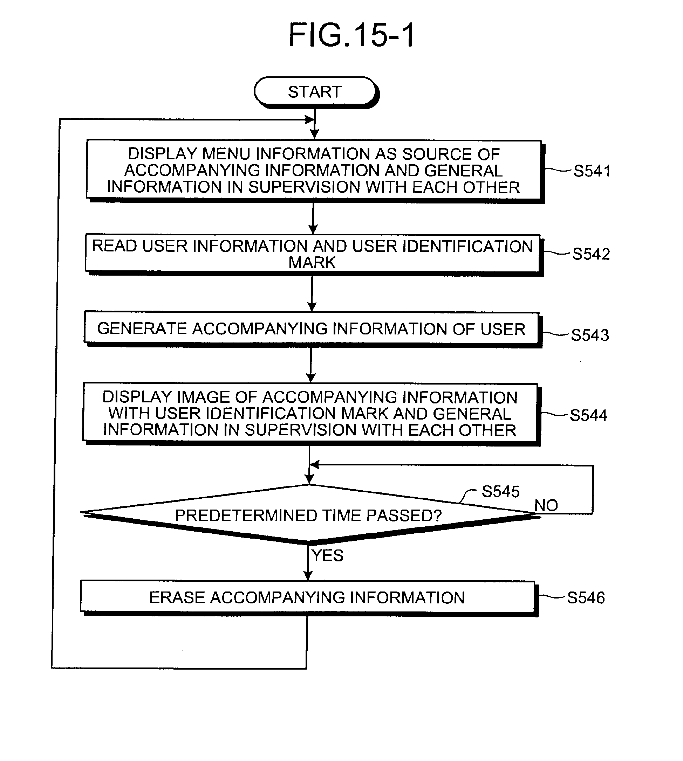

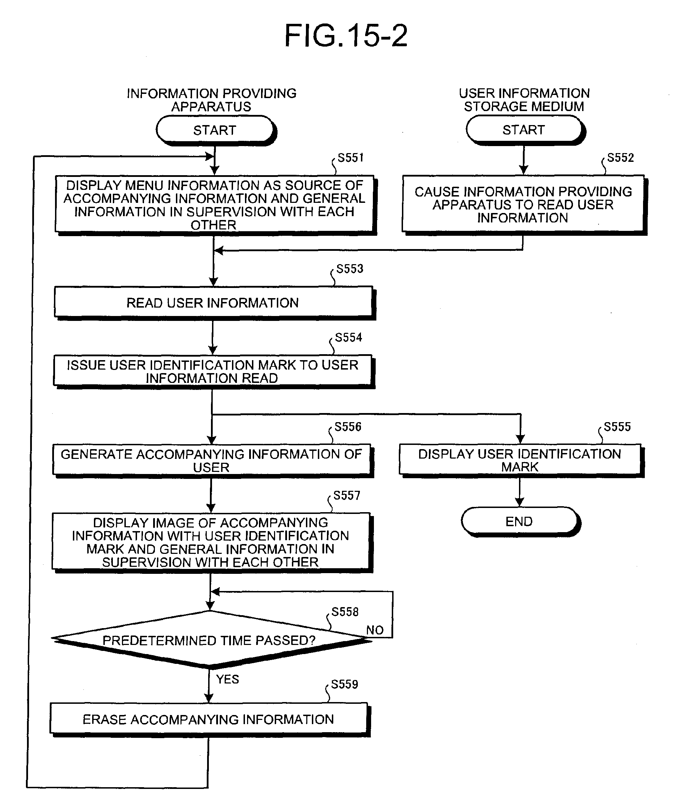

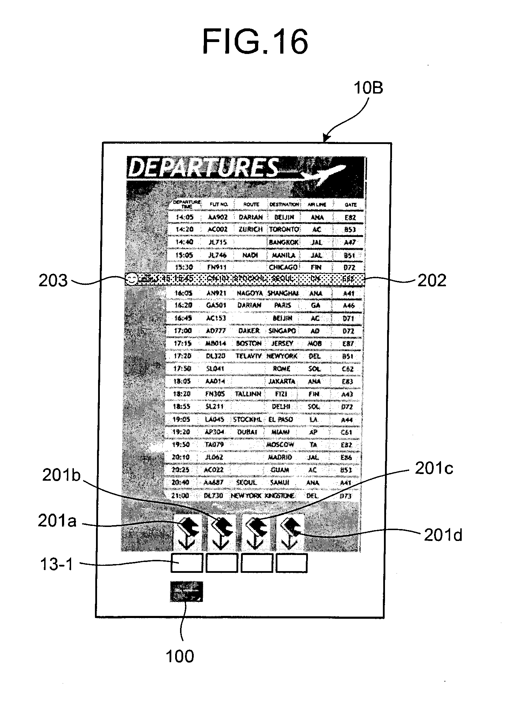

FIG. 15-1 is a flowchart showing an example of the information display process in the information providing apparatus when the user identification mark is stored in the user information storage medium. FIG. 15-2 is a flowchart showing an example of the information display process in the information providing apparatus when the user identification mark is issued by the information providing apparatus. FIG. 16 is a diagram showing an example of displaying the accompanying information carrying the user identification mark and the general information superposed one on the other.

First, with reference to FIG. 15-1, the invention is explained with an example of the information display process in the information providing apparatus when the user identification mark is stored in the user information storage medium. Meanwhile, assume that the user identification mark is preset by the user in the user information storage unit 101 in the user information storage medium 100.

First, the display processing unit 16 displays an image on the displaying unit 11 with the menu items for displaying the accompanying information and the general information superposed one on the other (step S541). After that, the user information storage medium 100 is read by the user information reading units 13-1 to 13-n, and then, the user information reading units 13-1 to 13-n read the user information and the user identification mark from the user information storage medium 100 (step S542).

Then, the accompanying information generating units 15-1 to 15-n generate the accompanying information having the user identification mark based on the user information (step S543), and the display processing unit 16 displays an image on the displaying unit 11 with the generated accompanying information and the general information in superposed relation with each other for a predetermined time (step S544). As shown in FIG. 16, the user identification mark 203 registered by the user is attached on the left side of the accompanying information 202 of the user.

After that, the display processing unit 16 determines whether the predetermined time has passed (step S545). When the predetermined time has not yet passed (NO in step S545), the standby mode is entered. Upon lapse of the predetermined time (YES in step S545), the display processing unit 16 erases the accompanying information 202 containing the user identification mark 203 (step S546), and the process returns to step S541 thereby to repeatedly execute the process.

Meanwhile, a user detecting unit 12 such as a motion sensor may be arranged in the information providing apparatus 10B, so that upon detection of the absence of a person by the user detecting unit 12 there, the accompanying information may be erased before lapse of the predetermined time. Also, as explained in the third embodiment, the user information reading units 13-1 to 13-n may read a preset select menu in addition to the user information and the user identification mark in step S542, and by displaying a menu dedicated to the user, the accompanying information on the menu selected from the particular menu may be generated in step S543.

Next, with reference to FIG. 15-2, the invention is explained with an example of the information display process in the information providing apparatus when the user identification mark is issued by the information providing apparatus. Meanwhile, this example assumes that the user holds a card with a displaying unit or a portable information terminal as the user information storage medium 100.

First, the display processing unit 16 displays an image on the displaying unit 11 with the menu item for displaying the accompanying information and the general information superposed one on the other (step S551). After that, the user of the information providing apparatus 10B causes the user information storage medium 100 to be read by the user information reading units 13-1 to 13-n (step S552). As a result, the user information reading units 13-1 to 13-n of the information providing apparatus 10B read the user information from the user information storage medium 100 (step S553).

Next, the accompanying information generating units 15-1 to 15-n issue the user identification mark to the user information that has been read (step S554). In the process, the accompanying information generating units 15-1 to 15-n transmit the issued user identification mark also to the user information storage medium 100 held by the user. In the user information storage medium 100, the user identification mark received from the information providing apparatus 10B is displayed on a displaying unit not shown (step S555).

In the accompanying information generating units 15-1 to 15-n of the information providing apparatus 10B, on the other hand, the accompanying information is generated based on the user information read in step S553 (step S556). In the process, the accompanying information generating units 15-1 to 15-n generate the accompanying information carrying the user identification mark issued in step S554. After that, the display processing unit 16 displays an image on the displaying unit 11 with the accompanying information carrying the user identification mark and the general information superposed one on the other for a predetermined time (step S557). Also in this case, as shown in FIG. 16, the user identification mark 203 issued to the user is attached on the left side of the accompanying information 202 of the user.

After that, the display processing unit 16 determines whether a predetermined time has passed (step S558). When the predetermined time has not passed (NO in step S558), the standby mode is entered. Upon lapse of the predetermined time (YES in step S558), on the other hand, the display processing unit 16 erases the accompanying information 202 containing the user identification mark 203 (step S559), and the process is returned to step S551 thereby to repeatedly execute the process.

Meanwhile, the user detecting unit 12 such as a motion sensor may be included in the information providing apparatus 10B, so that upon detection of the absence of a person there by the user detecting unit 12, the accompanying information may be erased even before the lapse of the predetermined time. Also, as explained with reference to the third embodiment, the user information reading units 13-1 to 13-n may read a preset select menu in addition to the user information and the user identification mark in step S553, and by displaying the menu dedicated to the user, the accompanying information for the menu selected from the particular menu may be generated in step S543.

As a result, the user of the information providing apparatus 10B can confirm the user identification mark sent from the information providing apparatus 10B to the user information storage medium 100 held by himself/herself and displayed on the displaying unit thereof, and can distinguish his/her accompanying information displayed on the displaying unit 11 of the information providing apparatus 10B.

### (3) Example of displaying accompanying information close to the user

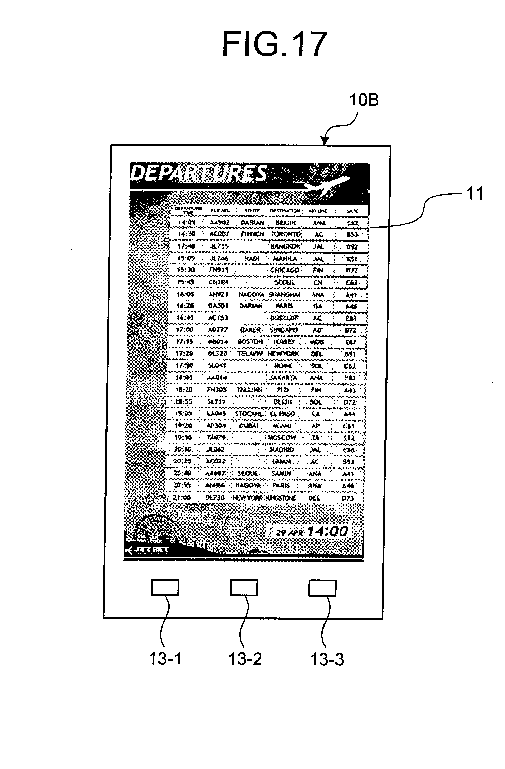

Now, the invention is explained with an example in which once the user causes the user information storage medium 100 to be read by the user information reading units 13-1 to 13-n, the accompanying information and the general information are displayed in superposition with each other in the area of the displaying unit 11 in the vicinity of the place of installation of the user information reading units 13-1 to 13-n. FIG. 17 is a diagram showing an example of the front view of the information providing apparatus capable of generating the accompanying information of a plurality of users and an example of the contents displayed on the displaying unit thereof. The front part of the information providing apparatus 10B includes a large-sized displaying unit 11 arranged on the main body thereof and three user information reading units 13-1 to 13-3 arranged under the displaying unit 11. Also in this example, the invention is explained with the information providing apparatus 10B installed in an airport to display the airplane departure guide (DEPARTURES) as general information and the information on the flight number used by the user as the accompanying information.

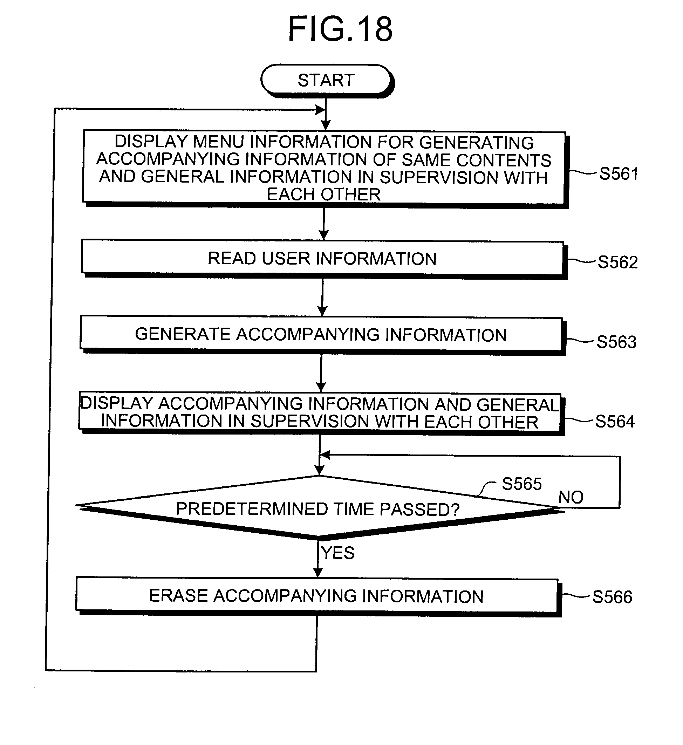

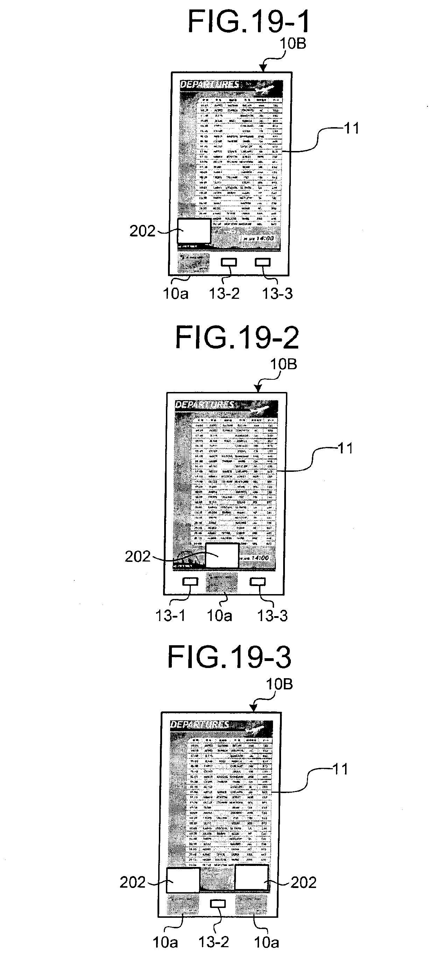

FIG. 18 is a flowchart showing the processing steps of displaying the accompanying information in the neighborhood of the place of installation of the user information reading units in the displaying unit, and FIGS. 19-1 to 19-3 are diagrams showing an example of the display screen for displaying the accompanying information. First, the display processing unit 16 displays pieces of menu information for displaying the accompanying information having the same contents in the area of the displaying unit 11 corresponding to the place of installation of the user information reading units 13-1 to 13-3 (step S561). After that, the user executes the process of causing the user information storage medium 100 to be read by the user information reading units 13-1 to 13-3. Then, the user information reading units 13-1 to 13-3 read the user information from the user information storage medium 100 (step S562).

Next, the accompanying information generating units 15-1 to 15-3 generate the accompanying information based on the user information (step S563), and the display processing unit 16 displays the generated accompanying information in superposition on the general information for a predetermined time according to the place of the menu selected by the user (at a place in the neighborhood of the place of installation of the user information reading units 13-1 to 13-3 that have read the user information) (step S564). When the user information is read by the user information reading unit 13-1 as shown in FIG. 19-1, for example, the accompanying information 202 is displayed about just above the user information reading unit 13-1 in the displaying unit 11. In a similar fashion, in the case of FIG. 19-2, the user information has been read by the user information reading unit 13-2, and therefore, the accompanying information 202 is displayed about just above the user information reading unit 13-2 in the displaying unit 11. Also, in the case of FIG. 19-3, different user information have been read by the user information reading units 13-1, and 13-3, and therefore, the accompanying information 202 of each user are displayed about just above the user information reading units 13-1, and 13-3, respectively, in the displaying unit 11.

After that, the display processing unit 16 determines whether the predetermined time has passed (step S565). When the predetermined time has not yet passed (NO in step S565), the standby mode is entered. Upon lapse of the predetermined time (YES in step S565), on the other hand, the display processing unit 16 erases the accompanying information 202 (step S566), and the process is returned to step S561 where the aforementioned process is repeatedly executed.

Meanwhile, the user detecting unit 12 such as a motion sensor may be included in the information providing apparatus 10B. Then, upon detection of the absence of a person there by the user detecting unit 12, the accompanying information may be erased even before the lapse of the predetermined time instead of step S565. Also, as explained in the third embodiment, the accompanying information generating units 15-1 to 15-3 may cause the menu screen corresponding to the user information that has been read to be displayed in step S562, and cause the user to select the contents to be processed from the menu screen, after which the accompanying information may be generated.

In the information providing apparatuses 10A to 10C for generating and displaying the accompanying information according to the attribute of the user information as in the first to third embodiments, the business information corresponding to the attribute of the user information may be displayed. The floor guide (FLOOR GUIDE) in an airport described in the second embodiment is explained below as an example.

In this case, the menu information of the display information storage unit 14B contains the attribute-wise advertisement content information with the correspondence between the user attribute or the generated accompanying information attribute and the advertised shop (contents), and the display information storage unit 14B has stored therein the advertisement content information with the contents of the advertised shop (contents). Also, the accompanying information generating units 15-1 to 15-n execute the process of extracting, as accompanying information, the business information based on the attribute of the user information read by the user information reading units 13-1 to 13-n or the accompanying information generated based on the user information. The business information based on the attribute of the user information or the accompanying information are extracted, as explained in the third embodiment above, using the attribute-wise advertisement content information with the correspondence established in advance between the attribute and the content to be displayed.

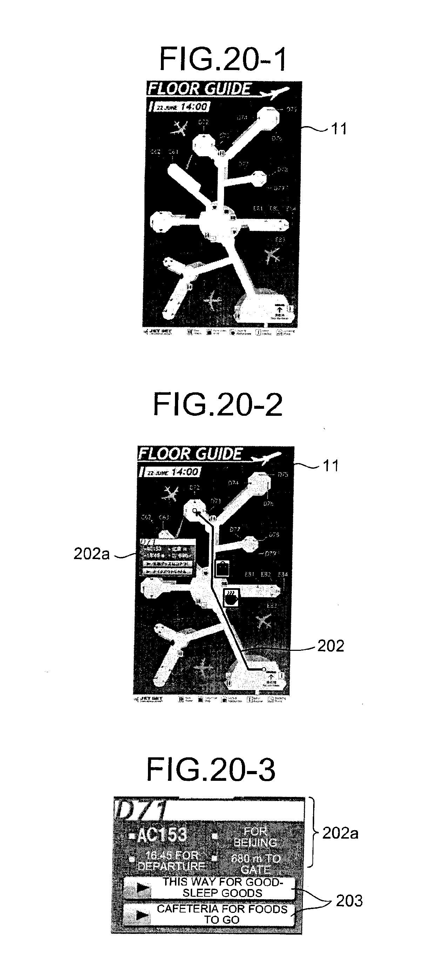

FIG. 20-1 is a diagram showing an example of the state in which the general information is displayed, FIG. 20-2 a diagram showing an example of a case in which the business information is displayed based on the attribute, and FIG. 20-3 a diagram showing an example of the business information shown in FIG. 20-2. In the case of FIG. 6-3 according to the second embodiment, the user information storage medium 100 is read by the user information reading units 13-1 to 13-4, so that the route from the present position to a destination such as the boarding gate for the flight in the user information is displayed using the information on the particular flight. In this embodiment, however, the accompanying information generating units 15-1 to 15-n, as shown in FIG. 20-2, further display the shops along the route using the attribute such as the sex and age of the user information and the attribute of the accompanying information generated based on the user information. As shown in FIG. 20-3, the accompanying information 202 contains the advertised shops (contents) 204 corresponding to the user attribute or the accompanying information attribute in addition to the accompanying information 202a shown in FIG. 6-3 of the second embodiment.

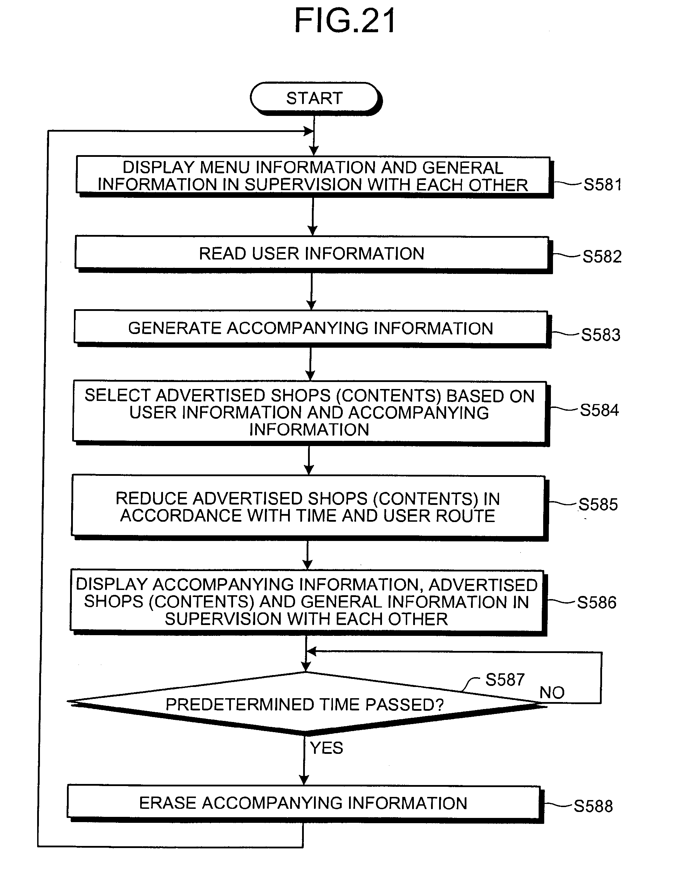

FIG. 21 is a flowchart showing an example of the processing steps of displaying the advertised shops (contents) corresponding to the attribute. First, the display processing unit 16 displays a screen with the general information and the menu information superposed one on the other on the displaying unit 11 (step S581). After that, the user executes the process of causing the user information reading units 13-1 to 13-n to read the user information storage medium 100. Then, the user information reading units 13-1 to 13-n read the user information (step S582). The accompanying information generating units 15-1 to 15-n generate the accompanying information of the user corresponding to the user information reading units 13-1 to 13-n (the menu item selected by the user) (step S583).

Also, the accompanying information generating units 15-1 to 15-n acquire the advertised shops (contents) by accessing the attribute-wise advertisement content information based on the user information and the generated accompanying information (step S584). Further, the accompanying information generating units 15-1 to 15-n determine the acquired advertised shops (contents) according to the time allowed for the user, the service time and the route followed by the user (step S585). In this case, if time allows, a restaurant is recommended or a shop on the guide route is displayed in priority or otherwise the conditions can be set to change the advertised shops (contents) to be finally determined.

Then, the display processing unit 16 displays an image on the displaying unit 11 with the accompanying information generated in steps S583 and S585 and the general information superposed one on the other. This state is shown in FIG. 20-2. In the example shown in FIG. 20-2, the shops existing along the route 202 constituting the accompanying information are extracted and the accompanying information 202a containing the advertised shops (contents) 204 shown in FIG. 20-3 are displayed at a predetermined position on the displaying unit 11 or a mark indicating the position of each shop on the floor guide where the extracted advertised shop (contents) exists is flickered or displayed in highlight. Once the advertised shops (contents) 204 are selected by the user in FIG. 20-3, the display processing unit 16 executes the process of extracting the detailed contents of the particular advertised shops (contents) 204 from the display information storage unit 14 and displaying them on the displaying unit 11.

After that, the display processing unit 16 determines whether the predetermined time has passed (step S587). When the predetermined time has not yet passed (NO in step S587), the standby mode is entered. Upon lapse of the predetermined time (YES in step S587), on the other hand, the display processing unit 16 erases the accompanying information 202 (step S588) and the process is returned to step S581 in which the process is repeatedly executed.

Meanwhile, the user detecting unit 12 such as a motion sensor may be included in the information providing apparatus, so that upon detection of the absence of a person by the user detecting unit 12 instead of step S587, the accompanying information may be erased even before the lapse of the predetermined time. Also, as explained with reference to the third embodiment, the user information reading units 13-1 to 13-n may read the select menu together with the user information in step S582, and the accompanying information generating units 15-1 to 15-3 may display the menu screen corresponding to the read user information in step S583, so that the user may select the contents to be processed from the menu screen before generating the accompanying information.

As described above, by displaying the business information such as advertised shops (contents), the holder of the information providing apparatus 10 can acquire the advertisement fees from the businesses (shops) having the intention to display the information.

Further, like in the first and second embodiments, the user can display the desired information simply by causing the user information reading units 13-1 to 13-n to read the user information storage medium 100 held by him/her without inputting the his/her user information, thereby leading to the advantage that the labor is saved to display information. Furthermore, when the user information stored in the user information storage unit 101 can be read without contact, such as RFID, the information desired by the user can be displayed advantageously even when the hands of the user are occupied.

### EMBODIMENT 4

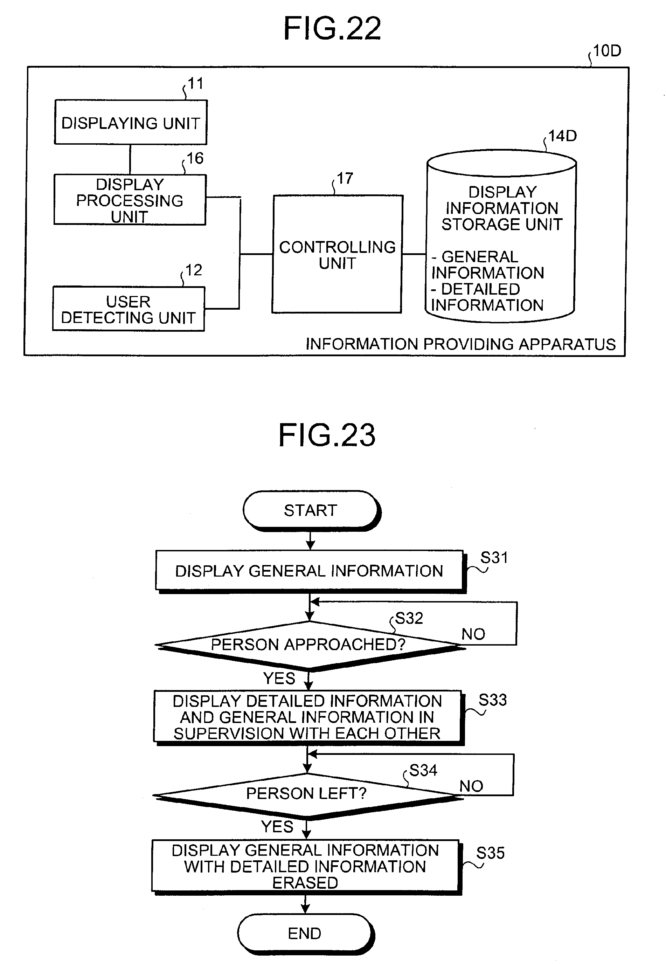

FIG. 22 is a block diagram showing the function configuration of the information providing apparatus according to the fourth embodiment of the invention. This information providing apparatus 10D is configured to include a displaying unit 11, a user detecting unit 12, a display information storage unit 14D, a display processing unit 16 and a controlling unit 17 for controlling each of these processing units. In the description that follows, the same component elements as those in the first to third embodiments are designated by the same reference numerals, respectively and not explained in detail, while only the component elements having different functions from those of the first to third embodiments are explained.

The display information stored in the display information storage unit 14D include the general information having the contents corresponding to the advertisements to be displayed to a multiplicity of unspecified persons existing at a place where the information providing apparatus 10D is installed and the place of installation, and the detailed information of more detailed contents on the general information displayed to the persons approaching the information providing apparatus 10D.

The display processing unit 16 has the function of, upon detection of a person within a predetermined range from the information providing apparatus 10D by the user detecting unit 12, extracting the detailed information from the display information storage unit 14D and displaying them in a font size sufficiently large to be read by the approaching person, while upon detection that the person leaves the information providing apparatus 10D by the user detecting unit 12, on the other hand, erasing the detailed information from the displaying unit 11. Meanwhile, the font size sufficiently large to be read by an approaching person is such that a person having the average acuity of vision can read the information at a predetermined distance from the information providing apparatus 10D and it can be changed according to the place of installation.

Next, the processing steps of displaying the detailed information of the information providing apparatus having this configuration are explained with reference to the flowchart of FIG. 23. First, in the normal case where no person (user) is present in the neighborhood of the information providing apparatus 10D, the general information extracted from the display information storage unit 14D by the display processing unit 16 is displayed on the displaying unit 11 (step S31). After that, the state is entered in which the user detecting unit 12 detects whether a person has approached the information providing apparatus 10D (step S32). Specifically, when no approaching person is detected by the user detecting unit 12 (NO in step S32), the standby mode prevails and the general information continues to be displayed on the displaying unit 11 until an approaching person is detected. Upon detection of an approaching person by the user detecting unit 12 (YES in step S32), on the other hand, the display processing unit 16 reads the detailed information from the display information storage unit 14D, and displays the detailed information on the displaying unit 11 in superposed relation with the general information in a font size sufficiently large to be read by the persons in the vicinity of the information providing apparatus 10D (step S33).

After that, the user detecting unit 12 determines whether the person has left the information providing apparatus 10D (step S34). When the person has not left the information providing apparatus 10D (NO in step S34), the same state, i.e. the state in which the general information and the detailed information are displayed on the screen of the displaying unit 11 in superposed relation with each other is maintained. When the person has left the information providing apparatus 10D (YES in step S34), on the other hand, the display processing unit 16 erases the detailed information displayed in step S33 from the displaying unit 11 and displays the general information (step S35) thereby to end the display of the detailed information.

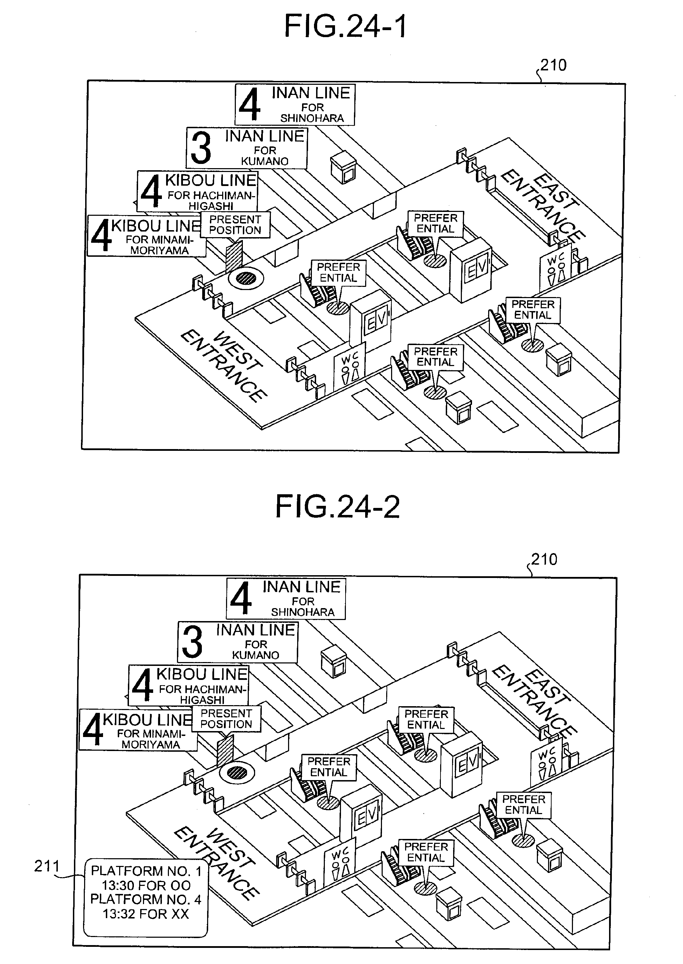

FIGS. 24-1 and 24-2 are diagrams showing an example of the display screen of the information providing apparatus according to the fourth embodiment, in which FIG. 24-1 depicts the state in which the general information is on display, and FIG. 24-2 the state in which the general information of FIG. 24-1 and the detailed information are displayed in superposition with each other. This example represents a case in which the information providing apparatus 10D for displaying a structural guide of a station building is installed in the station building. FIG. 24-1 depicts a display screen 210 showing the structure of the station building as general information. With the approach of a person to the information providing apparatus 10D in this state, the detailed information 211 and the general information in superposed relation with each other are displayed on the display screen 210 as shown in FIG. 24-2. In this case, a time table guide, for example, is displayed as the detailed information 211 in the lower left part of the display screen 210. As other detailed information 211, the train service situation, an operating instruction of the wheel chair lift and an exit guide may be displayed. The information providing apparatus 10D may be installed not only in the station building bus also at other places where a multiplicity of unspecified persons are present, and the information corresponding to each of such places may be displayed.

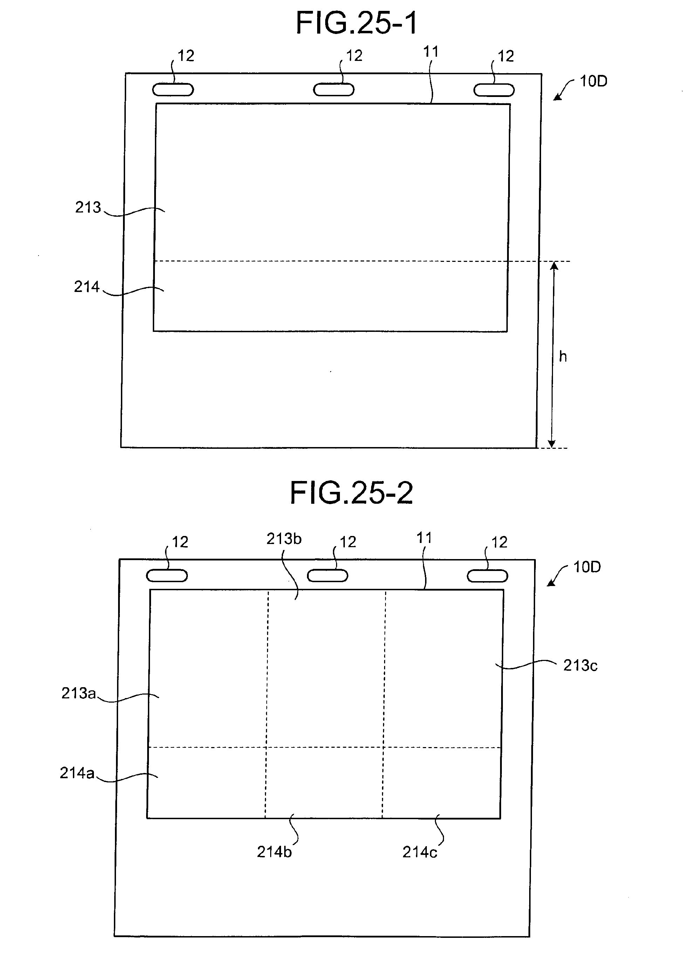

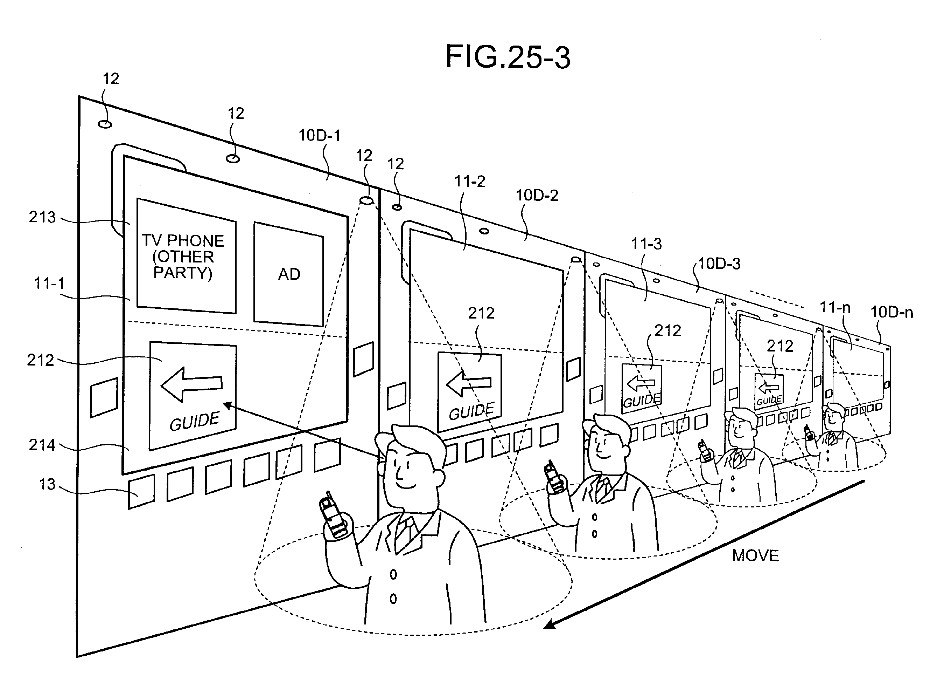

The aforementioned description describes a case in which with the approach of a person in a predetermined range from the information providing apparatus 10D, the detailed information and the general information are displayed on the displaying unit 11 in superposed relation with each other. The invention, however, is not limited to such a case. FIG. 25-1 is a diagram showing another example of the method of displaying the display information of the information providing apparatus according to the fourth embodiment. This information providing apparatus 10D has a configuration lacking the user information reading units 13 in the configuration shown in FIGS. 3-1 to 3-3 according to the first embodiment.

The display processing unit 16 of this information providing apparatus 10D displays the general information over the whole display area of the displaying unit 11 in the absence of a person within a predetermined range from the information providing apparatus 10D. In the presence of a person within the predetermined range from the information providing apparatus 10D, on the other hand, the displaying unit 11 is divided into upper and lower display areas 213, and 214 to display the information of different contents. When a person exists within a predetermined range from the information providing apparatus 10D, for example, the displaying unit 11 is divided into two display areas 213, and 214 at the position of height h substantially equal to the average height of persons from the installation surface of the information providing apparatus 10D, and the general information of such a size that a multiplicity of unspecified persons can view the display contents is displayed in the upper display area 213, while the general information easily visible to the nearby persons or more detailed information on the general information is displayed in the lower display area 214.

FIG. 25-1 is a diagram showing another example of the method of displaying the display information of the information providing apparatus according to the fourth embodiment. As shown in FIG. 25-2, the displaying unit 11 in the state of FIG. 25-1 may be further divided into six display areas 213a to 213c, and 214a to 214c with boundaries of detection ranges of three user detecting units 12a to 12c in the upper part of the information providing apparatus 10D, so that the detailed information may be displayed in the display area 214 in the lower part of the detection range of the user detecting unit 12 that has detected the user.

FIG. 25-3 is a diagram showing another example of the method of displaying the display information of the information providing apparatus according to the fourth embodiment. FIG. 25-3 depicts the case in which a plurality of information providing apparatuses 10D-1 to 10D-n (n: arbitrary natural number) are arranged in one line. The information providing apparatuses 10D-1 to 10D-n have the configuration shown in FIGS. 6-1 to 6-3 of the second embodiment in which the desired menu can be selected with the approach of the user. Assuming that the user has selected a menu item for the route guide to a certain place, a guide 212 is displayed on the displaying unit 11 of the information providing apparatus 10D associated with the user, and with the movement of the user, the display processing unit 16 moves the particular guide 212. In this case, the next user detecting unit 12 existing in the direction in which the user proceeds detects the user, and the guide 212 is displayed in the lower display area 214 corresponding to the detection range of the particular user detecting unit 12. Also in this case, the general information such as an advertisement aimed at a multiplicity of unspecified persons may be displayed in the upper display area 213, or may be displayed while being moved with the movement of the user.

According to the fourth embodiment, with the approach to a predetermined range from the information providing apparatus 10D installed to display the general information at a place where a multiplicity of unspecified persons exist, more detailed contents of the general information are displayed as detailed information in superposed relation with the general information. Therefore, more detailed information can be advantageously supplied to the persons in the neighborhood of the information providing apparatus 10D without losing the contents of the general information aimed at a multiplicity of unspecified persons.

Also, when the displaying unit 11 of the information providing apparatus 10D is divided into two parts including the upper display area 213 and the lower display area 214 and the user is located in front of the information providing apparatus 10D, persons away from the information providing apparatus 10D cannot view the area within the displaying unit 11 where the user is located. By displaying the general information and the detailed information dedicated to the user in the vicinity of the lower display area 214, therefore, the display information can be provided in a way easier to see than the case in which the general information and the detailed information are displayed in superposed relation with each other.

### EMBODIMENT 5

According to the fifth embodiment, an information providing apparatus is explained that displays the information on reservable services for train and bus tickets, airplane boarding tickets, tickets for movie theaters and concert halls and commodities available for purchase, and the particular services and goods can be purchased using the display information.

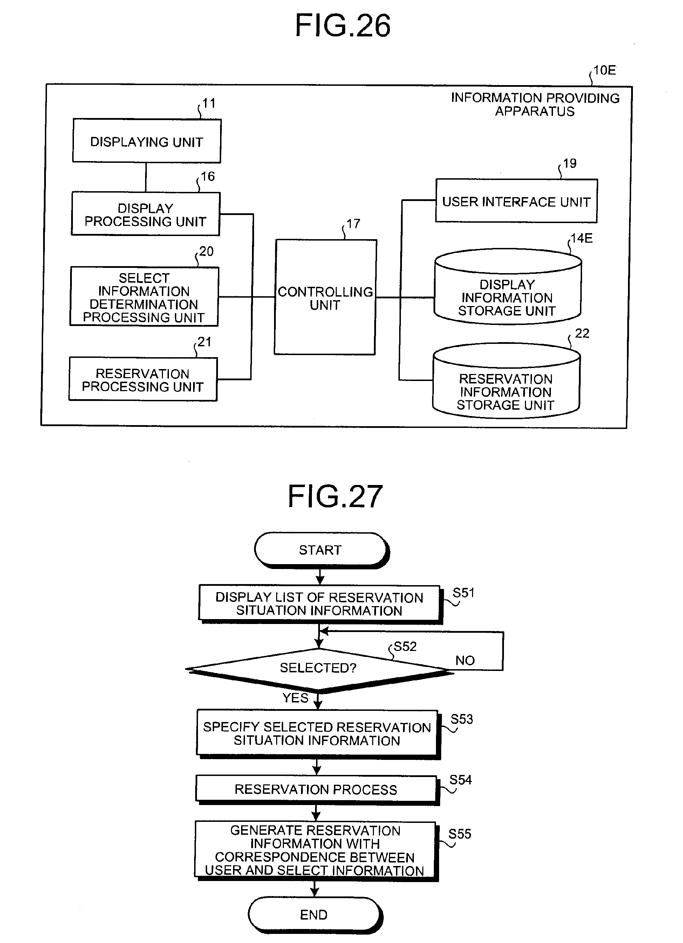

FIG. 26 is a block diagram showing the function configuration of the information providing apparatus according to the fifth embodiment of the invention. This information providing apparatus 10E is configured to include a displaying unit 11, a display information storage unit 14E, a display processing unit 16, a user interface unit 19, a select information determination processing unit 20, a reservation processing unit 21, a reservation information storage unit 22 and a controlling unit 17. In the description that follows, the same component elements as those of the information providing apparatuses 10A to 10D according to the first to fourth embodiments are designated by the same reference numerals, respectively, and not described in detail.

The display information storage unit 14E has the function of storing the display information displayed on the displaying unit 11. In this fifth embodiment, the display information stored include the information on the goods and services that can be reserved or purchased (hereinafter referred to as the reservation situation information). Examples of the reservation situation information on reservable services include such items as the name, destination, time and the availability of seats of a train, while examples of the reservation situation information of the commodities that can be purchased include such items as the name, price and quantity of a commodity placed on the market.

The user interface unit 19 constitutes an interface between the information providing apparatus 10E and the user and selects the goods or services which the user wishes to reserve or purchase from the reservation situation information displayed on the displaying unit 11. Examples of the user interface unit 19 include the touch panel, remote controller, portable telephone such as Bluetooth (registered trade mark) having a short-distance communication function, infrared light-ultrasonic indicator and the keyboard.

The select information determination processing unit 20 has the function of determining the contents (hereinafter referred to as the select information) of the reservation situation information on the displaying unit 11 selected by the user through the user interface unit 19 and determining the process that has been executed on the select information. For example, assume that the contents of the reservation situation information displayed at a position selected by the user through the touch panel or the like are specified from the contents of the display information (reservation situation information) on display, and a predetermined select process is executed to reserve the purchase of the contents. Then, the fact that the purchase of the select information has been reserved is output to the reservation processing unit 21.

With regard to the select information for which the purchase reservation has been received from the select information determination processing unit 20, the reservation processing unit 21 has the function of determining whether the purchase is possible based on the reservation situation information in the display information storage unit 14E and, if the purchase is possible, generating and storing the reservation information indicating the correspondence between the select information and the user in the reservation information storage unit 22. Also, the reservation processing unit 21 may have the function of generating the reservation completion information for notifying the completion of the reservation and displaying the reservation completion information on the displaying unit 11 through the display processing unit 16.

The reservation information storage unit 22 has the function of storing the reservation information indicating the correspondence between the goods or services reserved by the reservation processing unit 21 and the user. For example, the correspondence between the user ID capable of identifying the user uniquely and the services or goods (select information) reserved by the user is stored.

The steps of the reservation process executed by the information providing apparatus having the configuration are explained with reference to the flowchart of FIG. 27. In the initial state, the reservation situation information extracted by the display processing unit 16 from the display information storage unit 14E are displayed in a list on the displaying unit 11 (step S51). After that, the select information determination processing unit 20 determines whether the process of selecting the reservation situation information has been executed through the user interface unit 19 (step S52). Specifically, the standby mode prevails until a person (hereinafter referred to as the user) wishes to make a purchase reservation by reading the information providing apparatus 10E selects any one of the reservation situation information displayed in a list through the user interface unit 19 (NO in step S52). Once the reservation situation information is selected by the user (YES in step S52), the select information determination processing unit 20 specifies the contents of the selected reservation situation information, i.e. the select information (step S53), and the reservation processing unit 21 executes the process of reserving the select information (step S54). The reservation processing unit 21 then generates the reservation information indicating the correspondence between the select information and the user who has reserved the select information (step S55), and by storing it in the reservation information storage unit 22, finishes the reservation process in the information providing apparatus 10E.

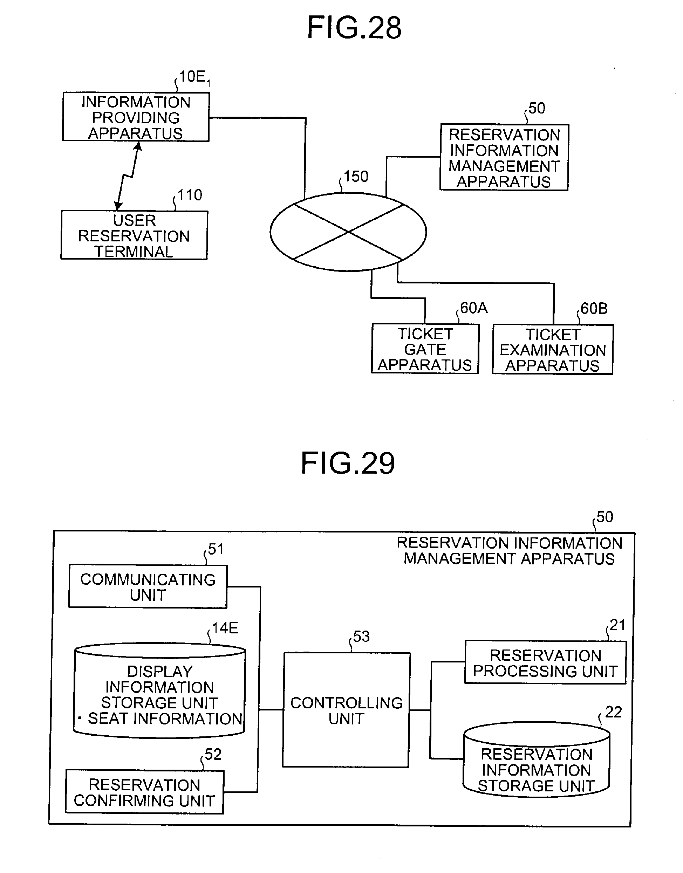

Next, a specific example of the application of the fifth embodiment to the train reservation is explained. FIG. 28 is a diagram schematically showing an example of the configuration of a train reservation system using the information providing apparatus according to the fifth embodiment. In this train reservation system, a reservation information management apparatus 50 for managing the seat information as to whether unoccupied train seats are available and the reservation, an information providing apparatus 10E₁ for displaying the seat information and a ticket gate apparatus 60A and a ticket examination apparatus 60B for checking and examining the ticket, respectively, of the user based on the reservation are interconnected through a network 150. Also, a user reservation terminal 110 whereby the user makes a reservation through the information providing apparatus 10E₁ is provided separately.

FIG. 29 is a block diagram schematically showing the function configuration of the reservation information management apparatus. This reservation information management apparatus 50 is configured to include a communicating unit 51 that conducts communication with the other devices connected to the network 150, a display information storage unit 14E that stores the seat information indicating the train reservation situation, a reservation processing unit 21 that executes the reservation process for the select information from the information providing apparatus 10E₁, a reservation information storage unit 22 that stores the reservation information generated by the reservation processing unit 21 and a reservation confirming unit 52 that confirm the reservation of the user upon receipt of a request from the ticket gate apparatus 60A or the ticket examination apparatus 60B. The same component elements as those of the information providing apparatus 10E shown in FIG. 26 are designated by the same reference numerals, respectively, and not explained any more.

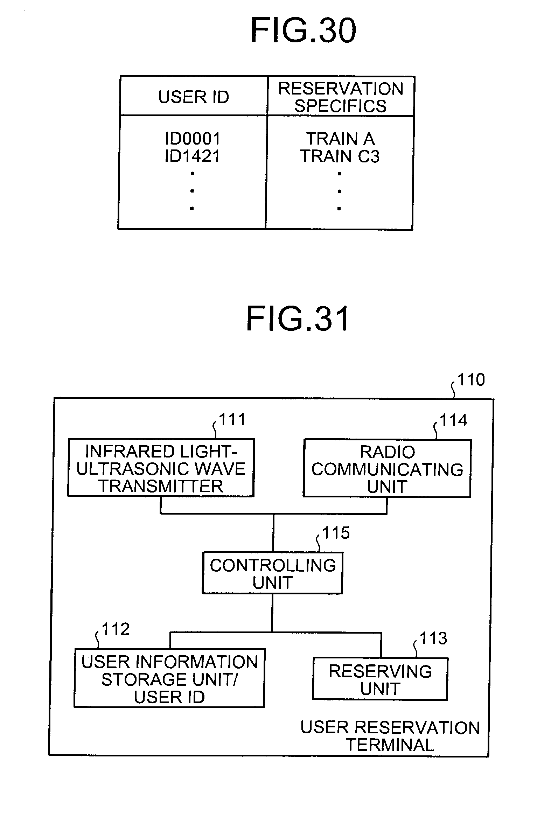

FIG. 30 is a diagram showing an example of the reservation information stored in the reservation information storage unit. This reservation information is such that the user ID for identifying the user uniquely and the reservation contents constituting the information on the train reserved by the user (usually, the contents described on the ticket issued) are related to each other.

FIG. 31 is a block diagram schematically showing the function configuration of the user reservation terminal. In this case, the user reservation terminal 110 is configured of an infrared light-ultrasonic wave indicator. In this infrared light-ultrasonic wave indicator, generally known as a sonic pointer, the transmitting units of infrared light and ultrasonic wave are arranged at the ends of a rod-like body to transmit the infrared light and the ultrasonic wave toward an arbitrary point of the display device at the same time. This user reservation terminal 110 is configured to include an infrared light-ultrasonic wave transmitter 111 for transmitting the infrared light and the ultrasonic wave, a user information storage unit 112 that stores the user ID to identify the user uniquely, a reserving unit 113 that executes the process of determining the reservation of the selected seat information on the displaying unit 11, a radio communicating unit 114 that transmits the user ID by a predetermined radio communication scheme at the time of executing the reservation determination process and a controlling unit 115 that controls each of these processing units.

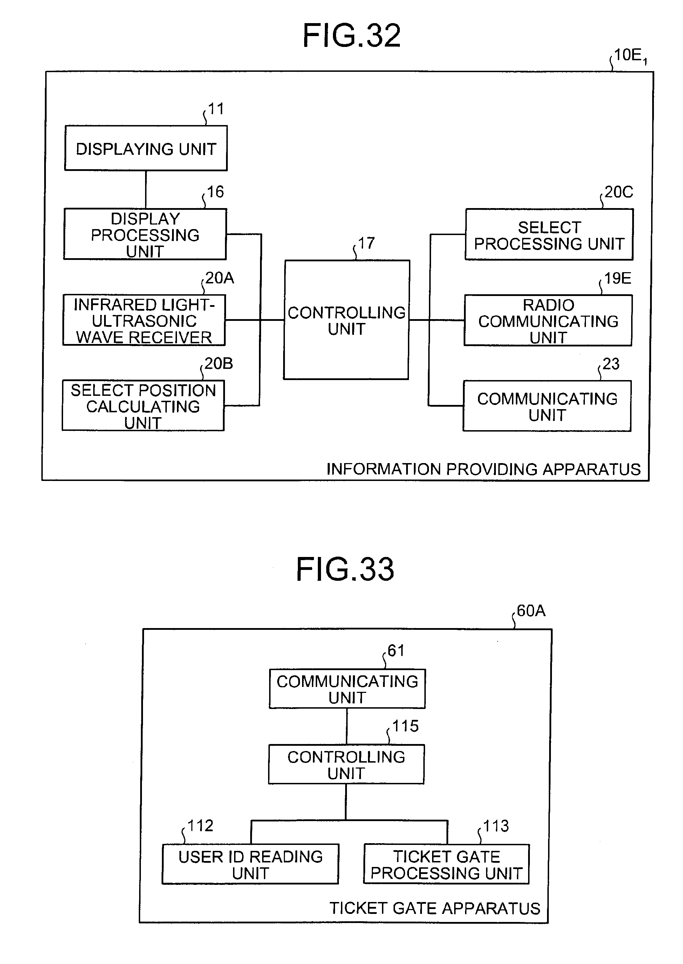

FIG. 32 is a block diagram schematically showing the function configuration of the information providing apparatus. This information providing apparatus 10E₁ is configured to include a communicating unit 23 that conducts communication with the other devices through the network 150, a displaying unit 11 that displays the seat information, a display processing unit 16 that displays on the displaying unit 11 the seat information sent from the reservation information management apparatus 50 through the communicating unit 23, an infrared light-ultrasonic wave receiver 20A for receiving the infrared light and the ultrasonic wave from the user reservation terminal 110, a select position calculating unit 20B that calculates the position on the displaying unit 11 selected by the user reservation terminal 110, a select processing unit 20C for specifying the select information of the user with the correspondence between the position determined by the select position calculating unit 20B and the contents displayed on the displaying unit 11, a radio communicating unit 19E that conducts radio communication according to a predetermined radio communication scheme and a controlling unit 17 that controls each of these processing units. In the description that follows, the same component elements as those of the information providing apparatus 10E of FIG. 26 are designated by the same reference numerals, respectively, and not described in detail.

A plurality of the infrared light-ultrasonic wave receivers 20A arranged around the display screen side of the displaying unit 11 receive the infrared light and the ultrasonic wave emitted from the user reservation terminal 110 and output a signal indicating the receipt to the select position calculating unit 20B.

The select position calculating unit 20B has the function of measuring the distance between the user reservation terminal 110 and the displaying unit 11 from the difference of time of arrival of the infrared light and the ultrasonic wave at the infrared light-ultrasonic wave receivers 20A, and also calculating the position (coordinate) on the displaying unit 11 pointed by the user reservation terminal 110 based on the measurement result of the plurality of the infrared light-ultrasonic wave receivers 20A and the positions of installation thereof on the information providing apparatus 10E₁.

The select processing unit 20C has the function of specifying the seat information displayed at the position on the displaying unit 11 pointed by the user reservation terminal 110 as calculated by the select position calculating unit 20B, and when the reservation is made for the particular seat information, transmitting the desired seat information, together with the user ID of the user, to the reservation information management apparatus 50 through the communicating unit 23. Meanwhile, the reservation of the seat information by the user is such that the user ID is sent at the same time that the seat information is selected, and therefore, the desire for reservation is determined at the time of detection of the user ID through the radio communicating unit 19E.

The radio communicating unit 19E has the function of conducting radio communication with the user reservation terminal 110 by a predetermined radio communication scheme. For example, the radio communicating unit 19E receives the user ID transmitted at the time when the user reservation terminal 110 selects and reserves the seat information.

FIG. 33 is a block diagram schematically showing the function configuration of the ticket gate apparatus. The ticket gate apparatus 60A, installed to check the entry to and exit from the platform of a station, is configured to include a communicating unit 61 that conducts communication with the other devices connected to the network 150, a user ID reading unit 62 that reads the user ID transmitted from the user reservation terminal 110, a ticket gate processing unit 63 that executes the process of checking the ticket of the user read by the user ID reading unit 62, and a controlling unit 64 that controls each of these processing units.

The user ID reading unit 62 has the function of reading the user ID transmitted from the radio communicating unit 114 of the user reservation terminal 110 when the user passes through the ticket gate.

The ticket gate processing unit 63 executes the process of inquiring the reservation information management apparatus 50 as to whether the user having the user ID read by the user ID reading unit 62 can pass the ticket gate, and based on the result thereof, executes the process of determining whether the user can be allowed in the station platform. Specifically, when the user ID read by the user ID reading unit 62 exists in the reservation information of the reservation information management apparatus 50, the user can pass the ticket gate, and vice versa.

Meanwhile, though not shown, the ticket examination of the user in the train can be also carried out by inquiring the reservation information management apparatus 50 through the network 150 similarly to the ticket gate apparatus 60A.

The operation of this train reservation system is explained. First, the user selects and reserves the desired train displayed on the information providing apparatus 10E₁ from the user reservation terminal 110. At the time of this reservation, the user ID is transmitted to the information providing apparatus 10E₁ from the user reservation terminal 110. In the information providing apparatus 10E₁, the train corresponding to the position pointed by the user reservation terminal 110 is specified, and the name of the particular train and the user ID are transmitted to the reservation information management apparatus 50. The reservation information management apparatus 50, after determining whether the reservation is possible and determining that the reservation is possible, generates the reservation information containing the particular train name and the user ID and stores it in the reservation information storage unit 22. When the reservation is impossible, on the other hand, the information providing apparatus 10E₁ is caused to display the fact to the user.

The user who has finished the reservation transmits the user ID toward the ticket gate apparatus 60A from the user reservation terminal 110 when passing through the ticket gate of the station. The ticket gate apparatus 60A reads the particular user ID and inquires the reservation information management apparatus 50 as to whether the user can pass the ticket gate. When the user ID received from the ticket gate apparatus 60A exists in the reservation information storage unit 22, the reservation information management apparatus 50 gives a response that the user can pass the ticket gate, while when the user ID is not existent in the reservation information storage unit 22, the response that the user cannot pass the ticket gate is given. The ticket gate apparatus 60A determines whether the user can pass the ticket gate according to the response from the reservation information management apparatus 50.

Also, the user, after taking the train, transmits the user ID from the user reservation terminal 110 toward the ticket examination apparatus 60B held by an in-train crew such as a conductor. The ticket examination apparatus 60B reads the particular user ID and inquires the reservation information management apparatus 50 as to whether the particular user is identical with a user who has made the reservation. When the user ID received from the ticket examination apparatus 60B exists in the reservation information storage unit 22, the reservation information management apparatus 50 gives a response that the user is identical with the user who has made the reservation, while when the user ID is not existent in the reservation information storage unit 22, a response is given that the user is not identical with the one who has made the reservation. The ticket examination apparatus 60B, according to the response from the reservation information management apparatus 50, notifies the result to the in-train crew, who executes the process for the user according to the particular result.

In the example of the train reservation system using the information providing apparatus 10E₁, a case is explained in which one of the trains displayed in a list is selected by the user through the user reservation terminal 110 including the infrared light-ultrasonic wave indicator. Actually, however, a case may occur in which more detailed conditions are desired for train reservation. In view of this, another example of the configuration of the information providing apparatus 10E₁ of the train reservation system described above is explained below. Meanwhile, the function configuration of the information providing apparatus 10E₂ is assumed to be identical with that of FIG. 26 or 32.

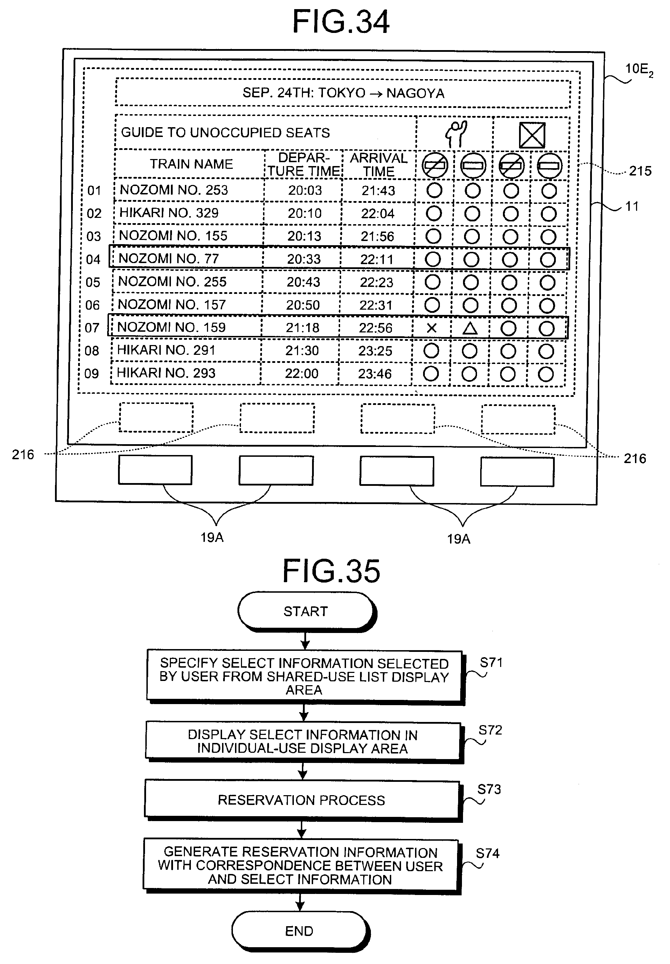

FIG. 34 is a diagram showing another example of the configuration of the displaying unit and the user interface unit of the information providing apparatus of the train reservation system. This information providing apparatus 10E₂ has a configuration in which the displaying unit 11 and the operating panels 19A are arranged on the front of the main body thereof. This displaying unit 11 is configured of a shared-use list display area 215 sufficiently large to be viewable by a multiplicity of unspecified persons and small individual-use display areas 216 for individual persons to make reservation by operating the operating panels 19A. A plurality of the individual-use display areas 216 may be provided.

The operating panels 19A constitute a user interface unit 19 corresponding to the individual-use display areas 216, and execute the process of receiving the input from the user for the contents displayed in the individual-use display areas 216. In this example, the user interface unit 19 performs no operation for the shared-use list display area 215 of the displaying unit 11 but the operation for the individual-use display areas 216. The operating panels 19A are configured of direction keys and numerical keys.

The display information storage unit 14E has more detailed contents than the example of FIGS. 28 to 33 described above on the train seat information. The seat information, for example, is configured to include the train name, the unoccupied seat information for each seat type in each train service section and the train identification information for identifying the train name.

The display processing unit 16 has the function of displaying the display information extracted from the display information storage unit 14E to both of the shared-use list display area 215 and the individual-use display areas 216 in the displaying unit 11. More specifically, in the absence of the user, the seat information of the same contents are displayed in the shared-use list display area 215 and the individual-use display areas 216. When the user uses an individual-use display area 216, on the other hand, the detailed information of the seat information selected by the user is specified by the select information determination processing unit 20 and displayed in the individual-use display area 216.

The steps of the reservation process with this information providing apparatus 10E₂ are explained with reference to the flowchart of FIG. 35. First, the user who has memorized the desired train from the seat information displayed in the shared-use list display area 215 of the displaying unit 11 selects the particular train through an operating panel 19A. In this select operation, the numeral uniquely determined for each train as the train identification information is input from the operating panel 19A. In the select information determination processing unit 20, the select information selected by the user is specified from the numeral indicating the train identification information thus input (steep S71). After that, the display processing unit 16 extracts the detailed information on the select information from the display information storage unit 14E and executes the process of displaying it in the individual-use display area 216 corresponding to the operating panel 19A through which the numeral has been input (step S72). In the process, the marking such as a circle or sign indicating the selection in the shared-use list display area 215 is erased as soon as it is displayed in the individual-use display area 216.

After that, assume that the user decides the reservation by reading the detailed train information displayed in the individual-use display area 216. Then, the process of reserving the particular train is executed in the reservation processing unit 21 (step S73). The select information determination processing unit 20, with the input operation of the user ID, determines that the user has decided to make the reservation and starts executing the reservation process. Then, the reservation processing unit 21 generates the reservation information as the correspondence between the user and the particular select information (step S74), and finishes the reservation process by storing the reservation information in the reservation information storage unit 22. Meanwhile, the success or failure of the reservation process may be displayed in the individual-use display area 216.

In this case, the reservation information in the form of the correspondence between the user ID and the train identification information is managed on the part of the reservation information management apparatus 50, so that no information on the train reservation process is delivered to the user. Instead, the information on the train reserved may be stored in the user information storage unit 101 of the user information storage medium 100, or as in the prior art, the ticket may be issued. Also, the biological authentication may be used for the input of the user ID in step S74. Further, the charge settlement process for the train reservation system is assumed to be executed by the conventional system such as the prepaid system or the credit system.

Although the example of FIG. 34 represents a case in which the user interface unit 19 is the operating panel 19A including direction keys and numeral keys, the individual-use display areas may be each configured of a touch panel in place of the operating panel 19A.

Further, the portable information communication terminal such as the portable telephone, PDA (Personal Digital Assistants) or the notebook-sized personal computer can be connected to the network 150 shown in FIG. 28, so that the screen of each individual-use display area 216 of the information providing apparatus 10E₁ may be displayed on each portable information communication terminal, from which the detailed train reservation may be made.

Also, when a plurality of users executes the process in the information providing apparatus 10E₁ at the same time, a pointer indicating the present select position may be prepared for each user. In this case, as shown in FIGS. 11 to 21, a different color, shape or size of the pointer can be used for a different user. Further, the pointers for a plurality of users may be processed collectively. When a multiplicity of colleagues make the reservation for the same train, for example, the collective selection process can be executed by operating the pointers for the plurality of the persons to reserve the particular train. Also, the information selected by each user can be identified by changing the color or the pattern indicating the selection from one user to another.

The example represents a case in which the information providing apparatus 10E is used for the train reservation system. This invention, however, is not limited to this case but applicable also to the system for reserving the services and goods such as a music concert as well as other vehicles such as airplanes and ships.

According to this fifth embodiment, services and goods can be reserved by selecting the information desired by the user from the reservation situation information displayed in a list on the information providing apparatus 10E. As compared with the conventional method of reserving services and goods in which the desired service or goods is memorized from the reservation situation information displayed in a list and the information on the service or goods memorized is required to be input at a separate ticket office, the burden on the user is advantageously reduced. Also, in the system in which a large screen is divided by user, the problem is posed that the division of a large screen among a multiplicity of users inconveniently reduces the service area per user. Such a problem is not posed by the fifth embodiment.

### EMBODIMENT 6

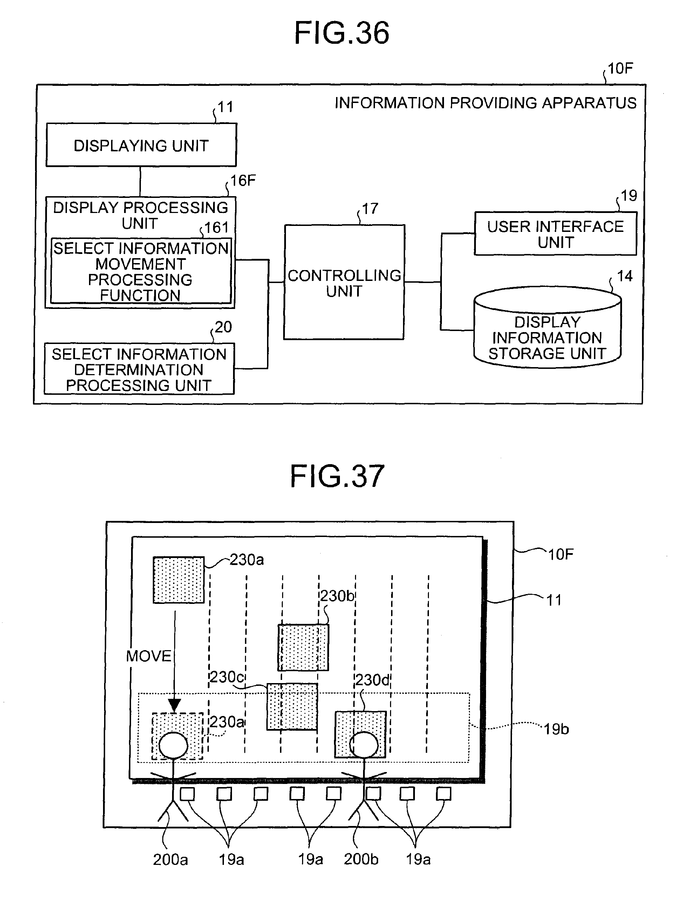

With reference to the sixth embodiment, the invention is explained with the information providing apparatus in which not only the display information are displayed on the displaying unit but also the display information selected by the user is moved to a predetermined position. FIG. 36 is a block diagram schematically showing the function configuration of the information providing apparatus according to the sixth embodiment of the invention. This information providing apparatus 10F is configured to include a displaying unit 11, a display information storage unit 14, a display processing unit 16F, a user interface unit 19, a select information determination processing unit 20 and a controlling unit 17. In the description that follows, the same component elements as those in the information providing apparatuses 10A to 10E according to the first to fifth embodiments are designated by the same reference numerals, respectively, and not described in detail again.

The display processing unit 16F has the function of not only causing the display information stored in the display information storage unit 14 to be displayed on the displaying unit 11 but also the select information movement processing function 161 for displaying by moving the display information selected by the select information determination processing unit 20 to a predetermined position.

The process of moving the display information in the information providing apparatus according to the sixth embodiment is explained below. FIG. 37 is a diagram for explaining an example of the process of moving the display information displayed on the displaying unit of the information providing apparatus. This information providing apparatus 10F has a main body on which the displaying unit 11 and the operating panels 19a are arranged. Also, a touch panel 19b that can be touched by users 200a, and 200b having the average height is arranged in the lower area of the displaying unit 11. Also, pieces of display information 230a to 230d are assumed to be displayed on the displaying unit 11.

Now, assume that according to an instruction from the user 200a, the display information 230a displayed in the upper part of the displaying unit 11 is selected through the operating panel 19a, the touch panel 19b or the user interface unit 19 such as a remote controller or an infrared light-ultrasonic pointer not shown and moved to a position just before the eyes of the user. The select information determination processing unit 20 specifies the display information 230a on the displaying unit 11 selected through the user interface unit 19, and the select information movement processing function 161 of the display processing unit 16F moves the particular specified information 230a to and displays it at the position pointed by the user 200a in the displaying unit 11. In the process, another display information, if any, on which the selected display information 230a thus moved is superposed is relocated to another position. Then, the user 200a can read the display information 230a before his/her own eyes. Also, the display information 230a can be edited on the operating panel 19a or the touch panel 19b.

Although a case of using the touch panel 19b is explained above as an example, any part capable of recognizing the position pointed by the user can be used, including a unit such as MIMIO (trade name) for acquiring the position touched by the user on the displaying unit 11 using the radio wave or a unit such as JESTERTEC (trade name) whereby the user can recognize the position by pointing his/her hand.

This sixth embodiment provides the advantage that the display information 230 located at so high a position on the displaying unit 11 that the user cannot easily read it can be moved to a position where the display information 230 can be easily read by the user. Also, the fact that the display information 230 can be moved makes it possible to display the display information 230 even at the height of the displaying unit 11 where the user cannot easily view, thereby leading to the advantage that the whole screen can be effectively used.

### EMBODIMENT 7

In this seventh embodiment, the invention is explained with the information providing apparatus wherein the audio data, if contained in the display information displayed on the displaying unit, can be actually listened to by the user while viewing the display information. The description that follows deals with an example of an information providing system in which a music product is introduced in the information providing apparatus installed in a shop and the music data on the music product can be listened to by a portable information communication terminal held by the user.

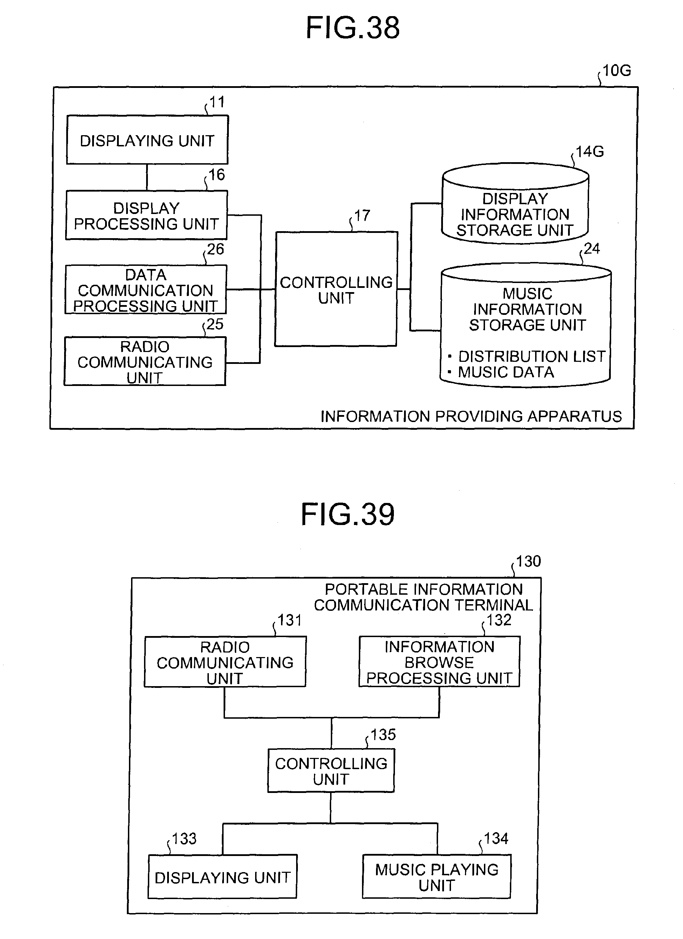

FIG. 38 is a block diagram schematically showing the function configuration of the information providing apparatus according to the seventh embodiment of the invention. This information providing apparatus 10G is configured to include a displaying unit 11, a display information storage unit 14G, a display processing unit 16, a music information storage unit 24, a radio communicating unit 25, a data communication processing unit 26 and a controlling unit 17. In the description that follows, the same component elements as those in the first to sixth embodiments described above are designated by the same reference numerals, respectively, and not described, while only different component parts are explained.

The display information storage unit 14G has stored therein the display information on the music product introduced by the displaying unit 11. The display information include, for example, the image related to the music product introduced and the information such as the title, the name of the artist, the price and the name of the music.

The music information storage unit 24 is configured to include the music data that can be listened to in the music product stored in the display information storage unit 14G, and a distribution list indicating a list of music products displayed on the displaying unit 11. This distribution list is configured in such a manner that the music data identification information for identifying the music data such as the title of the music data are linked with URL (Uniform Resource Locator) indicating the position where they are stored.

The radio communicating unit 25 has the function of conducting radio communication, by a predetermined radio communication scheme, with portable information communication terminals held by unspecified persons passing the neighborhood of the place of installation of the information providing apparatus 10G. In this example, the radio communicating unit 25 plays the role of a radio base station for the wireless LAN (Local Area Network).

The data communication processing unit 26 has the function of executing the process of communication conducted with the user through the radio communicating unit 25. Specifically, the music data requested is transmitted to the portable information communication terminal held by the user.

FIG. 39 is a block diagram schematically showing the function configuration of the portable information communication terminal held by the user. This portable information communication terminal 130 is configured to include a radio communicating unit 131 that conducts radio communication by a predetermined radio communication scheme with the information providing apparatus 10G, an information read processing unit 132 that executes the process of reading the information received from other devices through the radio communicating unit 131, a displaying unit 133 that displays the information processed by the information read processing unit 132, a music playing unit 134 that plays the music data sent through the radio communicating unit 131 and a controlling unit 135 that controls each of these processing units.

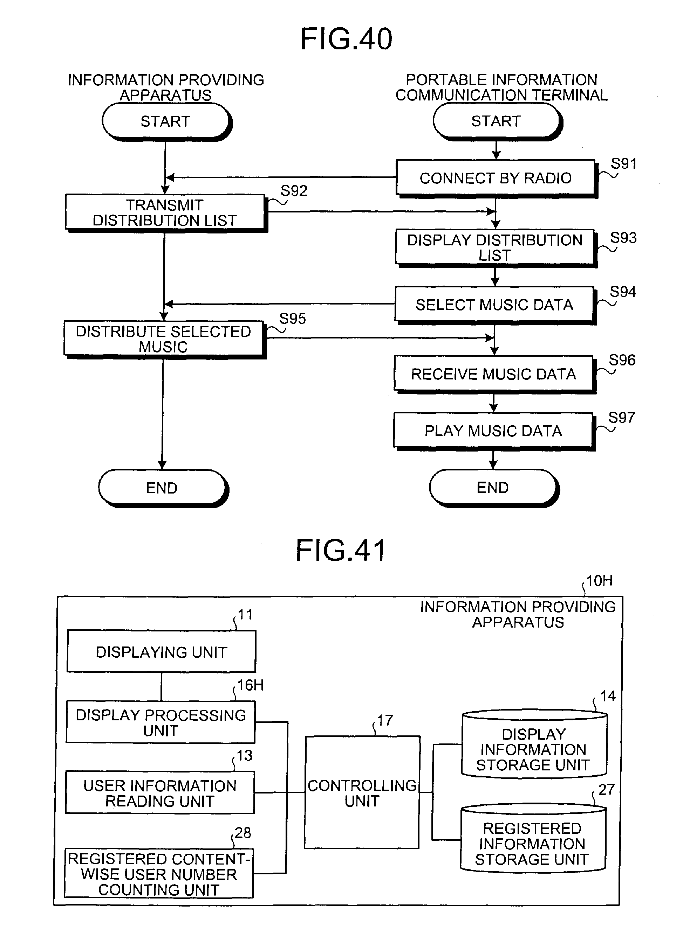

Next, the steps of the process for listening, at the portable information communication terminal, to the music information displayed on the information providing apparatus is explained with reference to the flowchart of FIG. 40. Assume that the display information of a plurality of music products are displayed on the displaying unit 11 of the information providing apparatus 10G. Once the user enters the radio communication area of the radio communicating unit 25 of the information providing apparatus 10G, the radio communicating unit 131 of the portable information communication terminal 130 receives the radio signal from the radio communicating unit 25 of the information providing apparatus 10G and detects that the radio communication with the information providing apparatus 10G is possible. Upon designation of radio connection by the user, the radio communicating unit 131 of the portable information communication terminal 130 is connected by radio with the information providing apparatus 10G (step S91). The data communication processing unit 26 of the information providing apparatus 10G connected by radio with the portable information communication terminal 130 transmits the distribution list stored in the music information storage unit 24 to the portable information communication terminal through the radio communicating unit 25 (step S92).

The information read processing unit 132 of the portable information communication terminal 130 displays the received distribution list on the displaying unit 133 (step S93). Upon selection of a music data by the user according to his/her liking from the distribution list (step S94), the information read processing unit 132 accesses the URL corresponding to the particular music data. Then, the data communication processing unit 26 of the information providing apparatus 10G extracts the selected music data from the music information storage unit 24, and distributes the extracted music data to the portable information communication terminal 130 (step S95). This distribution of the music data can be effected by downloading the music data to the portable information communication terminal 130, or by distributing the music data always in played state to the portable information communication terminal 130 in the form of streaming. In the portable information communication terminal 130, upon receipt of the music data (step S96), the received music data is played by the music playing unit 134 (step S97). In this way, the process of distributing the music data to the user of the information providing apparatus 10G is finished.

The explanation made above represents a case in which the music data stored at a predetermined position is accessed and provided to the user in the form of downloading or streaming. As in the wireless receiver, however, a plurality of music data described in the distribution list may be distributed on a plurality of different frequencies. In such a case, the distribution list of the music information storage unit 24 of the information providing apparatus 10G has stored therein the music data and the corresponding frequencies carrying the music data, so that the information providing apparatus 10G is further configured of a music transmitter for transmitting the music data on different frequencies. Also, the portable information communication terminal 130 further includes a frequency switching part for extracting the music data carried on the frequencies and is so configured that the music data extracted by the frequency switching part is played by the music playing unit.

Although the foregoing description represents a case in which the music data is distributed, the invention is not limited to such a case, and the seventh embodiment is applicable to any case in which the audio data can be distributed. When the displaying unit 11 of the information providing apparatus 10G are segmented into a plurality of display areas and different broadcast programs are displayed in the respective display areas or when different broadcast programs are displayed in a plurality of displaying units 11, then the audio data of each broadcast program can be transmitted to the portable information communication terminal of the user by the method described above.

This seventh embodiment provides the advantage that even when the information providing apparatus 10G has only one audio output, the audio data is not output using the particular audio output but by accessing the place where the audio data is stored in the portable information communication terminal 130 held by the user. Therefore, the persons can simultaneously listen to the audio data corresponding to the display information displayed on the displaying unit 11. Another advantage is that the user can listen to only the audio data desired by him/her, and the audio data is not superposed on the audio data of the display information displayed in other display areas. Also, a larger screen than the displaying unit 133 of the portable information communication terminal 130 can be used for viewing, while only the audio data can be listened to at hand.

### EMBODIMENT 8

In this eighth embodiment, the invention is explained with an information providing apparatus installed at a place where a multiplicity of persons gathers, wherein the information of the contents common to a multiplicity of persons is displayed preferentially. The example described below represents an application of the information providing apparatus to a notice board in the college campus, to which the invention is not limited. Also, in such a case, the user is assumed to hold a user information storage medium including RFID for storing the user ID to identify the user.

FIG. 41 is a block diagram schematically showing the function configuration of the information providing apparatus according to the eighth embodiment of the invention. This information providing apparatus 10H is configured to include a displaying unit 11, a user information reading unit 13, a display information storage unit 14, a display processing unit 16H, a registered information storage unit 27, a registered content-wise user number counting unit 28 and a controlling unit 17. In the description that follows, the same component elements as those in the first to seventh embodiments are designated by the same reference numerals, respectively, and not described in detail but only different component parts are described.

The display information storage unit 14 has stored therein the display information displayed on the information providing apparatus 10H. This example represents a case involving a notice board in a college campus, and therefore, examples of the display information may include lecture cancellation, test information, report information, part timer recruitment ad and club information.

The user information reading unit 13 has the function of reading the user ID from the user information storage medium held by the user existing in a predetermined range from the information providing apparatus 10H. In this example, therefore, the user storage medium held by the user is assumed to be configured of RFID or the like in which the user information reading unit 13 can read the user information even at a position spatially distant from the user information reading unit 13.

The registered information storage unit 27 has stored therein the registered information of the user of the information providing apparatus 10H. Assume, for example, that the user holds the user information storage medium 100 as shown in FIG. 1-2, and the user ID for identifying the user uniquely is stored in the user information storage unit 101 of the user information storage medium 100. The contents of registration such as the lecture received, the club associated and the part-time job applications related to each other for the user ID constitute the registered information.

The registered content-wise user number counting unit 28 has the function of counting the number of registered persons for each registered content using the registered information on all the users existing in a predetermined range from the information providing apparatus 10H. The registered content-wise user number counting unit 28 counts the number of the users by registered content using the registered information of the users extracted by use of the user ID read by the user information reading unit 13.

The display processing unit 16H has the function of displaying the display information on the displaying unit 11. When the user is existent within a predetermined range from the information providing apparatus 10H, the registered information are laid out in the descending order of the number of users for each registered content as counted by the registered content-wise user number counting unit 28 and displayed on the displaying unit 11. For example, only a predetermined number of the registered information are displayed on the displaying unit 11 in the descending order of the number of users, or the registered information is displayed on the displaying unit 11 by changing the area or size for display on the displaying unit 11 according to the number of users associated with the registered information.

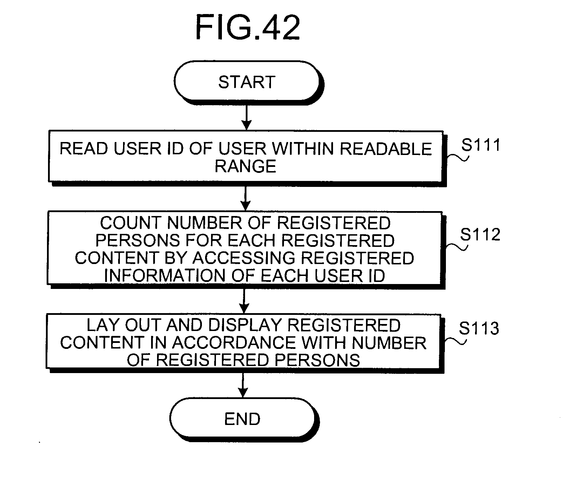

Next, the steps of the information display process in the information providing apparatus is explained with reference to the flowchart of FIG. 42. Meanwhile, the registered information are assumed to be stored by the user in the registered information storage unit 27 in advance. Also, in the absence of the user within a predetermined range from the information providing apparatus 10H, the display processing unit 16H is assumed to display on the displaying unit 11 a predetermined number of information containing the latest information in the display information storage unit 14. First, the user information reading unit 13 reads the user ID from the user information storage medium of RFID of the user existing in a range readable by radio (step S111). Then, the registered content-wise user number counting unit 28 accesses the registered information associated with each user ID in the registered information storage unit 27, and counts the number of registered users for each registered content (step S112). After that, the display processing unit 16H lays out the registered contents according to the number of registered users counted by the registered content-wise user number counting unit 28 and displays it on the displaying unit 11 (step S113). In this way, the display process corresponding to the contents common to the users is finished.

Meanwhile, when the information providing apparatus 10H is installed in an enclosed space such as a room, the user information reading unit 13 may be arranged at the entrance of the enclosed space so that the user ID of the user entering and leaving the room is read to recognize who is existent in the enclosed space.

This eighth embodiment provides the advantage that the information highly related to the user reading the information providing apparatus 10H is preferentially displayed on the displaying unit 11. Also, since the contents of the liking common to the users at the place are displayed, the probability of the display information being read by the users can be heightened.

### EMBODIMENT 9

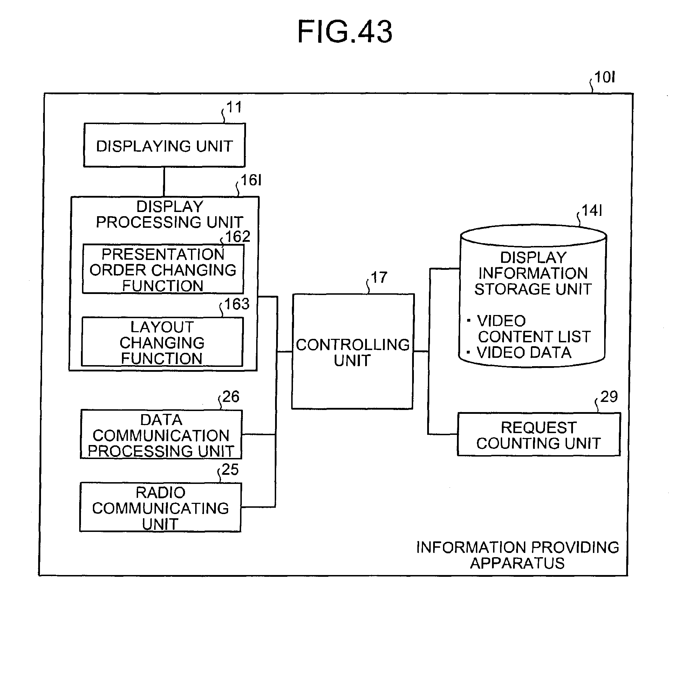

In this ninth embodiment, the invention is explained with the information providing apparatus that determines the displayed contents by the votes (presence or absence of a request) of the users existing around the information providing apparatus. FIG. 43 is a block diagram schematically showing the function configuration of the information providing apparatus according to the ninth embodiment of the invention. This information providing apparatus 10I includes a displaying unit 11, a display information storage unit 14I, a display processing unit 16I, a radio communicating unit 25, a data communication processing unit 26, a request counting unit 29 and a controlling unit 17. In the description that follows, the same component elements as those in the information providing apparatuses 10A to 10H according to the first to eighth embodiment described above are designated by the same reference numerals, respectively, and not described in detail but only different component parts.

The display information storage unit 14I has stored therein the display information including a plurality of video data (image and video data) to be displayed on the displaying unit 11 and a video content list constituting a list of the video data that can be displayed.

The data communication processing unit 26 has the function of executing the process of communication between the users through the radio communicating unit 25, and in this ninth embodiment, the function of transmitting the video content list to the portable information communication terminal held by the user and executing the process of receiving the requests.

The request counting unit 29 has the function of counting the requests for the video data selected from the video content list received from the portable information communication terminal and outputting the order of requests to the display processing unit 16 as information related to the video data.

The display processing unit 161, in addition to the function of displaying the video data stored in the display information storage unit 14I on the displaying unit 11, further has a presentation order change function 162 for changing the order of display of the video data based on the result of counting in the request counting unit 29 and a layout change function 163 for changing the size of the display area for displaying the video data.

Meanwhile, the portable information communication terminal 130 held by the user, different only in the absence of the music playing unit 134 in FIG. 39 showing the seventh embodiment, has the function configuration identical with that of FIG. 39 in respect of the other points and therefore is not described.

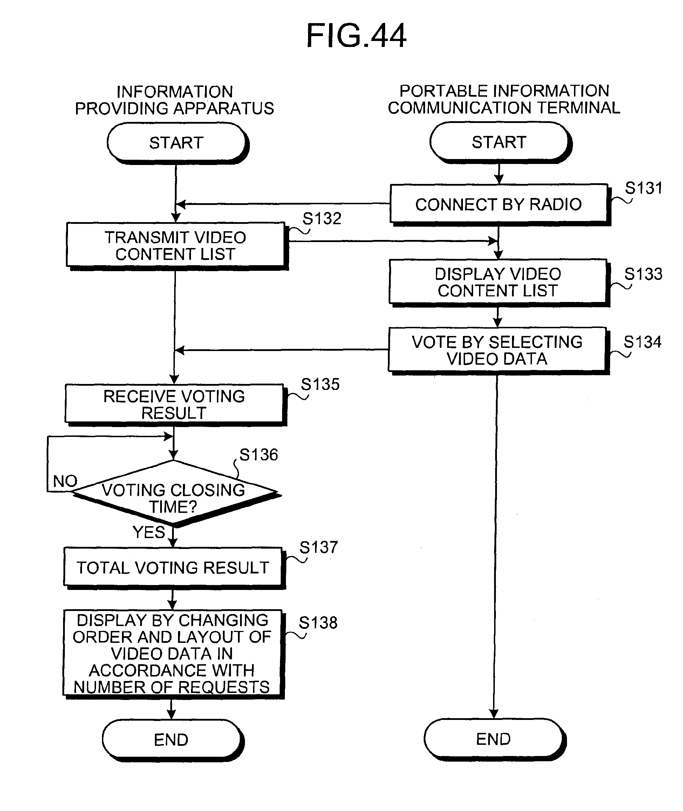

Next, the processing steps of the operation for determining the video data displayed on the information providing apparatus by the votes of the users existing in the neighborhood of the place of installation thereof are explained with reference to the flowchart of FIG. 44. The video data arbitrarily selected by the display processing unit 16I are assumed to be displayed on the information providing apparatus 101. Once the user enters the radio communication area of the information providing apparatus 101, the portable information communication terminal 130 thereof receives a radio signal from the radio communicating unit 25 of the information providing apparatus 101 and, detecting that the radio communication with the information providing apparatus 101 is possible, connects with the information providing apparatus 101 by radio according to the instruction from the user (step S131). The data communication processing unit 26 of the information providing apparatus 101 transmits the video content list stored in the display information storage unit 141 from the radio communicating unit 25 to the portable information communication terminal 130 (step S132).

The information read processing unit 132 of the portable information communication terminal 130 displays the received video content list on the displaying unit 133 (step S133). The users select and cast a vote on the desired video data (step S134). Then, the information read processing unit 132 transmits the selection result to the information providing apparatus 10I, and the selection result is received by the radio communicating unit 25 of the information providing apparatus 10I (step S135). After that, the request counting unit 29 determines whether the vote closing time has come (step S136), and when the vote closing time has not yet come (NO in step S136), continues waiting in a state ready to receive the votes from the portable information communication terminals 130 of other users. After that, when the vote closing time has come (YES in step S136), the request counting unit 29 counts the votes received before the vote closing time (step S137) and outputs the result to the display processing unit 161.

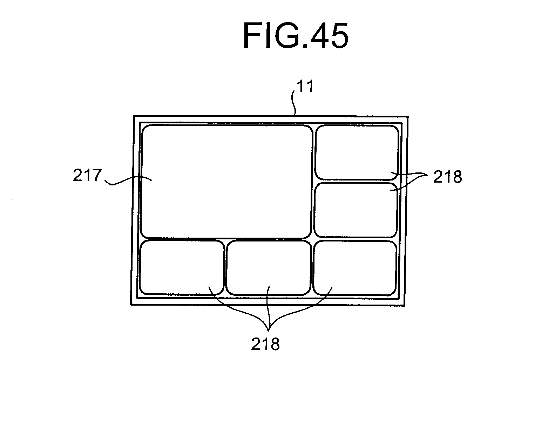

The display processing unit 161 of the information providing apparatus 101 displays the video data based on the number of requests for each video data making up the video content list and a predetermined video data display rule (step S138). When the data is displayed one by one over the whole displaying unit 11, for example, the presentation order change function 162 of the display processing unit 16I displays the video data for a predetermined time in the descending order of the number of requests or shortens the display time according to the number of requests. Also, when the displaying unit 11 is divided into as many display areas as the video data in the video content list to display the video data, the layout change function 163 of the display processing unit 16I changes the size of each display area for displaying the video data according to the number of requests. FIG. 45 is a diagram showing an example of the method of displaying the video data by the layout change function of the display processing unit. As shown in FIG. 45, the layout change function 163 of the display processing unit 161 divides the displaying unit 11 into one large display area 217 and a plurality of small display areas 218, so that the most requested video data can be displayed in the large display area 217 and the remaining video data in the small display areas 218. In this way, the process of determining the video data to be displayed, by the votes of the users is finished. In this case, all the video data requested may be displayed or the video data which have acquired at least a predetermined number of votes above a set threshold value may be displayed. As another alternative, all the video data including the contents not requested may be displayed (only changed in order or layout) or the video data not requested may not be displayed.

Only an example has been described above, and the video content list may be displayed on the displaying unit 11. In such a case, based on the result of counting the requests in the video content list, such items as the order in which the video data are displayed and the time of display of the particular video data may be displayed on the displaying unit 11. Also, even during the time when requests are accepted, the request counting unit 29 may count the requests and causes the displaying unit 11 to display the number of the current request votes. Further, at the end of the video data on display, only the video data that has acquired the greatest number of votes of the requests counted in the meantime may be displayed on the displaying unit 11. Also, a system may be similarly used to display the image contents like a slide shoe.

The ninth embodiment provides the advantage that the request that has acquired the greatest number of votes from the persons present at the place where the information providing apparatus 10I is installed is displayed in priority, and therefore, the contents that can satisfy the greatest majority of the persons present at the particular place can be preferentially displayed. As a result, the contents in which a multiplicity of the persons present at the same place are not interested are prevented from being displayed.

### EMBODIMENT 10

In this tenth embodiment, the invention is explained with an information providing system using an information providing apparatus wherein the user looking for an article in a supermarket, a department store, a book store or a library can be informed of the position of the article which the user intends to purchase or borrow. Although the example explained below represents a case in which the information providing system is used for a supermarket, the embodiment is not limited to the supermarket and applicable to any of departments, ordinary shops, libraries and the like.

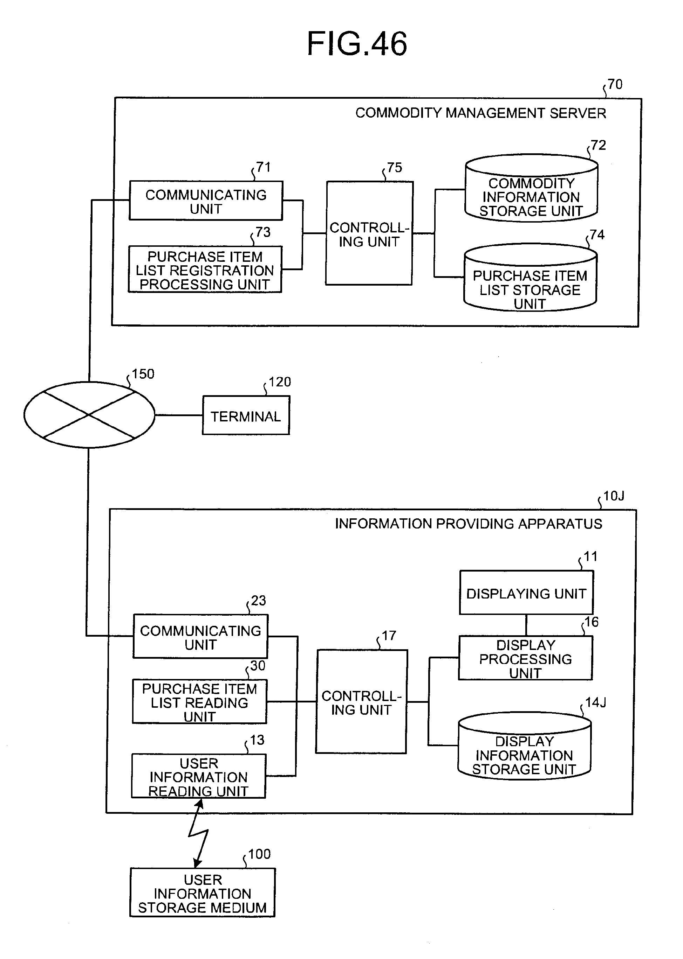

FIG. 46 is a block diagram schematically showing the function configuration of the information providing system according to the invention. This information providing system is configured to include, interconnected by a network 150, a commodity management server 70 for managing the commodities dealt in the shops of a supermarket, an information providing apparatus 10J installed in the shops, and a terminal 120 such as a portable telephone with the function to connect to the personal computer or the internet used by the user. The user going to a shop is assumed to hold a user information storage medium 100 having stored therein the user ID for identifying himself/herself. This user information storage medium 100, identical with the one described in FIG. 1-2 of the first embodiment, has stored therein the user ID in the same form as explained in the first embodiment like the point card, for example, issued by the supermarket.

The commodity management server 70 is configured to include a communicating unit 71 that conducts communication with other devices connected to the network 150, a commodity information storage unit 72 that stores the information on the commodities dealt in by the shop using the information providing system, a purchase item list registration processing unit 73 that registers the commodities desired by the user as a purchase item list, a purchase item list storage unit 74 that stores the purchase item list generated by the purchase item list registration processing unit 73 and a controlling unit 75 for controlling each of these processing units.

The commodity information storage unit 72 has the function of managing the commodity information including the quantity, price, size and the sales floor of each commodity dealt in by the shop. The sales floor information contained in the commodity information is input according to the address information described in the shop floor map described later. When the information providing system is used by a plurality of shops, the commodity information is prepared for each shop.

The purchase item list registration processing unit 73 has the function of executing the process of registering the commodities desired by the user from the user terminal 120 connected to the network 150. For example, the user terminal 120 is caused to extract a given commodity dealt in by the shop from the commodity information in the commodity information storage unit 72 and display it on a Web browser or to register the commodities selected on the Web browser as a purchase item list in the purchase item list storage unit 74.

The purchase item list storage unit 74 has the function of storing the desired commodities selected and registered by the user as a purchase item list with the corresponding user ID of the particular user.

The information providing apparatus 10J is configured to include a displaying unit 11, a user information reading unit 13, a display information storage unit 14J, a display processing unit 16, a communicating unit 23, a purchase item list reading unit 30 and a controlling unit 17. In the description that follows, the same component elements as those of the information providing apparatuses 10A to 10J in the first to ninth embodiments are designated by the same reference numerals, respectively, and not described in detail, but only different component parts are described.

The display information storage unit 14J has stored therein the display information including the floor map of the shop in which the information providing apparatus 10J is installed and the address information for identifying the position on the floor map.

The purchase item list reading unit 30 has the function of acquiring the purchase item list of the user ID read by the user information reading unit 13 from the purchase item list storage unit 74 of the commodity management server 70. The purchase item list thus acquired is delivered to the display processing unit 16.

In the normal state with the user ID not read by the user information reading unit 13, the display processing unit 16 has the function of displaying on the displaying unit 11 the floor map stored in the display information storage unit 14J, and when the user ID is read by the user information reading unit 13, mapping the position of the commodity in the purchase item list acquired by the purchase item list reading unit 30 onto the floor map while marking and displaying the position thereof on the displaying unit 11. Meanwhile, the mapping is carried out by establishing the correspondence between the sales floor of the commodity included in the purchase item list and the address information of the floor map in the display information.

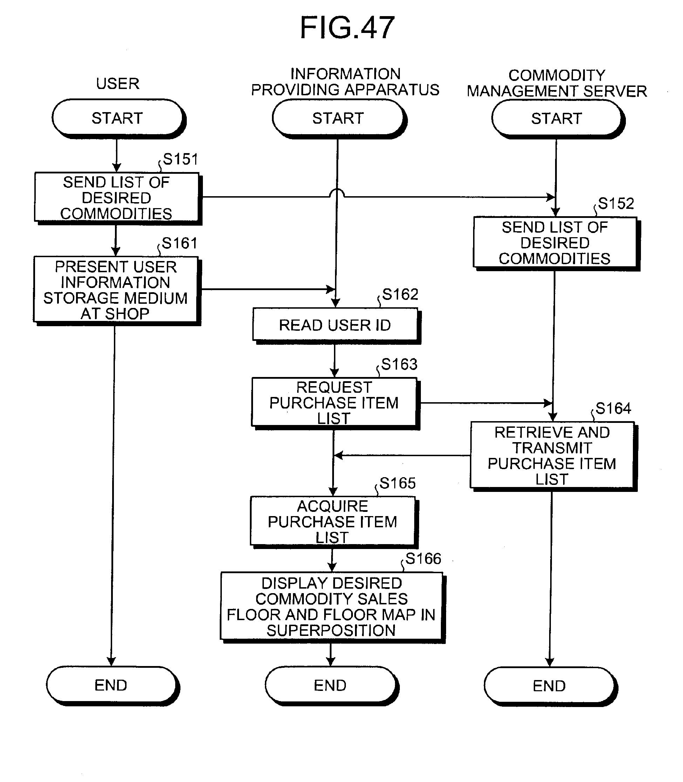

Now, the process of presenting the commodity position in this information providing system is explained with reference to the flowchart of FIG. 47. The user accesses the commodity management server 70 from the terminal 120 and sends a list of the desired commodities before going to the shop (step S151), while the purchase item list registration processing unit 73 of the commodity management server 70 attaches the user ID to the list and registers it in the purchase item list storage unit 74 as a purchase item list (step S152).

After that, the user moves to the shop and brings the user information storage medium 100 to a predetermined position at the place where the information providing apparatus 10J is installed (step S161). Then, the user information reading unit 13 of the information providing apparatus 10J reads the user ID from the user information storage medium 100 (step S162). The purchase item list reading unit 30 requests the commodity management server 70 to send the purchase item list having the user ID that has been read (step S163). The commodity management server 70 retrieves the requested purchase item list having the user ID from the purchase item list storage unit 74, and transmits the result thereof to the information providing apparatus 10J (step J164). The purchase item list reading unit 30 of the information providing apparatus 10J, upon acquisition of the purchase item list (step S165), delivers it to the display processing unit 16, which in turn displays on the displaying unit 11 the floor map of the display information storage unit 14J and the position of the commodity desired by the user in the purchase item list in superposed relation with each other (step S166). In this way, the process of presenting the commodity position in the information providing system is finished.

Although the example depicts a case in which the information providing apparatus 10J has only the function of presenting the commodity position, as explained in the second embodiment, other processes may be executed by providing a plurality of the accompanying information generating units and displaying the menu screen corresponding to a plurality of processes. Also, the commodity position may be superposed on the floor map in such a manner that the information on the particular commodity is additionally displayed as additional information or the additional information is extracted and displayed from the commodity information storage unit 72 of the commodity management server 70 in response to the instruction of the user. Further, in conjunction with the POS (Point-Of-Sale) system, the items that have been purchased may be erased from the list to make sure after shopping that no items are forgot to purchase.

According to the tenth embodiment, at a place such as a shop or a library where a multiplicity of commodities or articles are arranged, the location where the commodity registered by the user in advance as a desired item to purchase or borrow is displayed in superposition on the information providing apparatus 10J displaying the floor guide of the particular location when the user has moved to the particular location, and therefore, the user can be advantageously informed of the position of the desired commodity or article without getting lost. Also, by computerizing the map display of the place such as a shop or a library where a multiplicity of commodities or articles are arranged, the real-time information such as the time sales can be displayed.

### EMBODIMENT 11

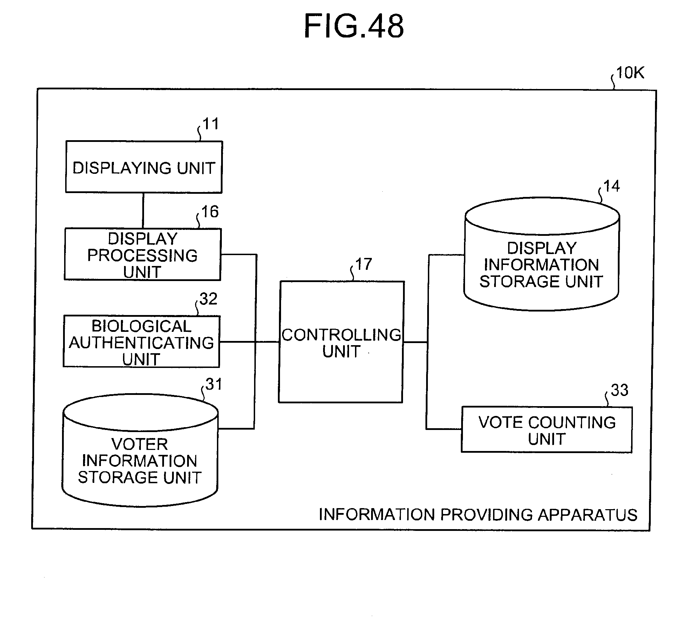

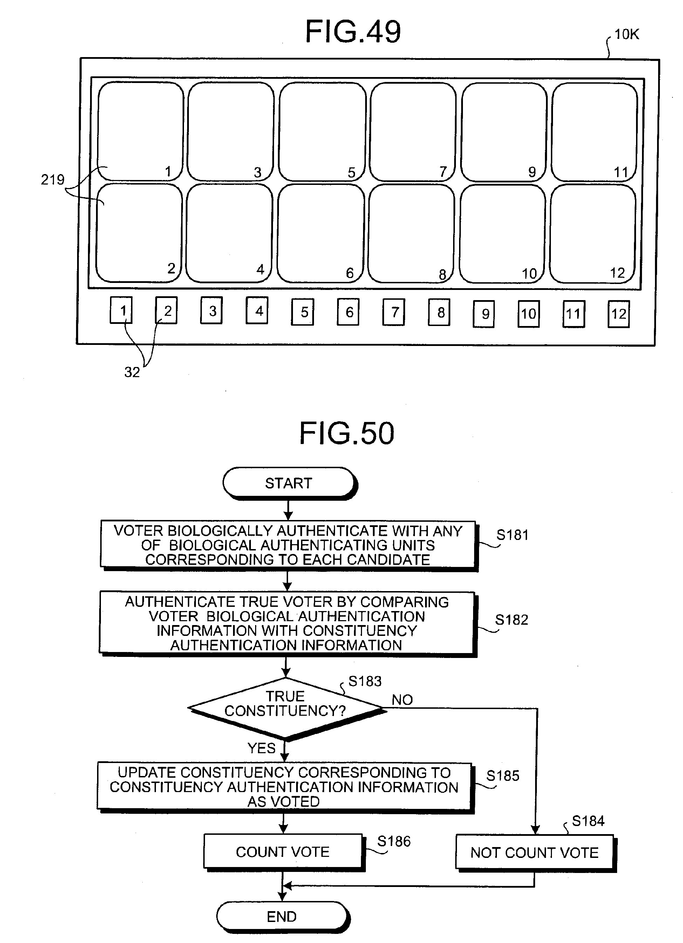

The eleventh embodiment is explained with reference to an information providing apparatus capable of voting. An information providing apparatus used for the election is explained as an example. FIG. 48 is a block diagram schematically showing the function configuration of the information providing apparatus according to the eleventh embodiment of the invention, and FIG. 49 is a diagram showing an example of the configuration of the displaying unit of the information providing apparatus. This information providing apparatus 10K is configured to include a displaying unit 11, a display information storage unit 14, a display processing unit 16, a voter information storage unit 31, a biological authenticating unit 32, a vote counting unit 33 and a controlling unit 17. In the description that follows, the same component elements as those of the information providing apparatuses 10A to 10J according to the first to tenth embodiments described above are designated by the same reference numerals, respectively, and not described in detail, but only different component parts are described.

The display processing unit 16, as shown in FIG. 49, has the function of displaying the display information including photos describing the names of the candidates and the parties stored in the display information storage unit 14 in a plurality of display areas of the same size on a single displaying unit 11. The number and size of the display areas 219 are varied according to the number of candidates in a particular election. In the case under consideration, an example is shown in which the displaying unit 11 is divided into 12 display areas 219.

The voter information storage unit 31 has the function of storing, for example, the constituency authentication information for biologically authenticating the constituencies at the place where the information providing apparatus 10K is installed.

The biological authenticating unit 32 has the function of executing the voting process by the voters as well as the voter authentication, and is configured, for example, of a biological authentication device such as a palm vein authentication device. The example shown in FIG. 49 includes a biological authenticating unit 32 corresponding to each display area 219, and the voter completes the voting by executing the biological authentication process in the biological authenticating unit 32 corresponding to the desired display area 219. The biological authenticating unit 32 compares the biological authentication information obtained from the voter with the biological authentication information stored in the voter information storage unit 31, and determines whether the voter is a true constituency. In the process, the biological authenticating unit 32 can prevent the same person from casting a vote more than once by attaching an authentication mark on the authentication information of the constituency who has already cast a vote.

The vote counting unit 33 has the function of counting the votes cast for each candidate by the voters who have been confirmed to be true constituency by the biological authenticating unit 32. Meanwhile, the votes are not counted for the voters confirmed to be not true constituency by the biological authenticating unit 32.

Next, the processing steps of voting in the information providing apparatus 10K are explained with reference to the flowchart of FIG. 50. First, upon execution of the biological authentication of the voters in the biological authenticating unit 32 corresponding to the display area of the desired candidate (step S181), the biological authenticating unit 32 authenticates as to whether the voter is a true qualified voter using the biological authentication information from the biological authenticating unit 32 and the constituency authentication information of the voter information storage unit 31 (step S182). When the authentication result depicts that the constituency is not truly qualified for voting (NO in step S183), the vote counting unit 33 finishes the voting process without counting the particular vote (step S184). In this case, the fact about the invalid vote may be displayed for the voter on the displaying unit 11 by the display processing unit 16.

When the voter is a true qualified person (YES in step S183), on the other hand, the biological authenticating unit 32 updates the constituency corresponding to the constituency authentication information of the voter information storage unit 31 as already voted (step S185), and the vote counting unit 33 counts the vote by the particular voter as cast to the candidate corresponding to the biological authenticating unit 32 (step S186) thereby finishing the voting process.

This eleventh embodiment provides the advantage that the voter can cast a vote at the place by viewing the display information of each candidate displayed on the displaying unit 11 of the information providing apparatus 10K. Also, the voting by biological authentication provides the advantage of preventing the illegal voting such as a person other than constituency casting a vote or the same person casting a vote more than once.

### EMBODIMENT 12

The twelfth embodiment represents a case in which a plurality of display areas are formed in one displaying unit as in the eleventh embodiment and the contents displayed in one display area are enlarged or compressed, i.e. the display processing unit of the information providing apparatus has the enlarging/compression function. An example is explained with reference to the case where the information providing apparatus is used as a poster for announcing candidates to be voted for the election. Meanwhile, the information providing apparatus according to the twelfth embodiment can be used for the information providing apparatuses 10A to 10K shown in the first to eleventh embodiments.

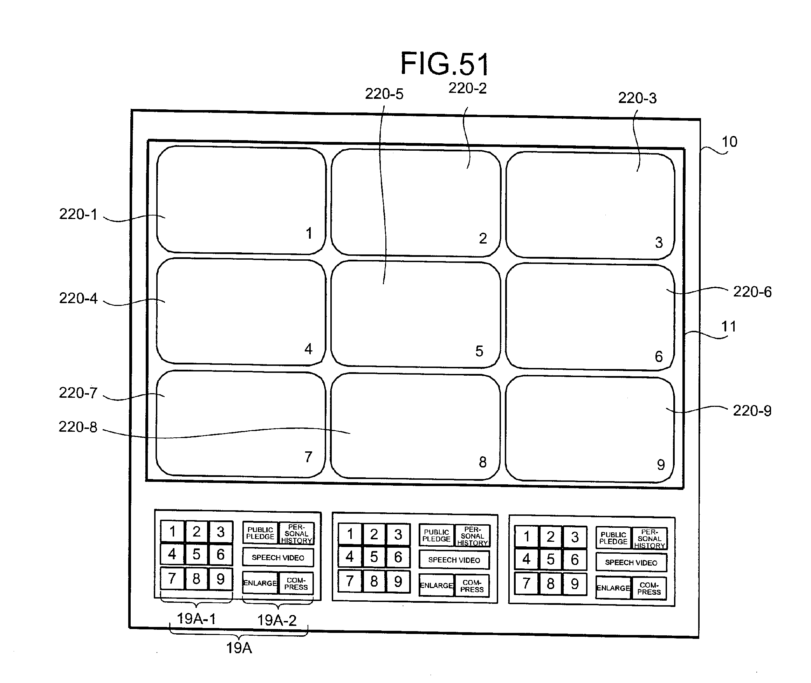

FIG. 51 depicts an example of the front view of the information processing apparatus. This information providing apparatus 10 includes a displaying unit 11 on the front of the main body thereof, and the display area thereof is divided into nine small display areas 220 (220-1 to 220-9) of the same size. Assume that independent information can be displayed by the display processing unit in these small display areas 220. Also assume that these small display areas 220 are provided with numerical characters 1 to 9 from the upper left small display area 220-1 toward the lower right small display area 220-9 as identification information.

Also, operating panels 19A are arranged under the displaying unit 11 as a user interface unit 19 allowing the user to access the information providing apparatus 10. The operating panels 19A each include select buttons 19A-1 for selecting the small display areas 220-1 to 220-9 and function buttons 19A-2 for executing a predetermined process for the selected one of the small display areas 220-1 to 220-9. In the case of this drawing, nine select buttons 19A-1 are arranged in the same order of arrangement as the small display areas 220-1 to 220-9 and carry the same identification information (numerical characters) as those attached to the small display areas 220-1 to 220-9, respectively. Also, the function buttons 19A-2 include a "election pledge" button and a "history" button for displaying the election pledge and the history, respectively, of the candidates displayed in the selected one of the small display areas 220-1 to 220-9, a "public speech" button for displaying a public speech, and an "enlarge" button and a "compress" button for enlarging and compressing the display. Also, three operating panels 19A are prepared in the information providing apparatus 10 that can be used by three users at the same time. Meanwhile, when the display information is displayed with the small display area 220 as the unit, the compression of display any further is impossible. Also, when the enlarge button is selected in one of the plurality of the operating panels 19A, the other operating panels 19A cannot be used.

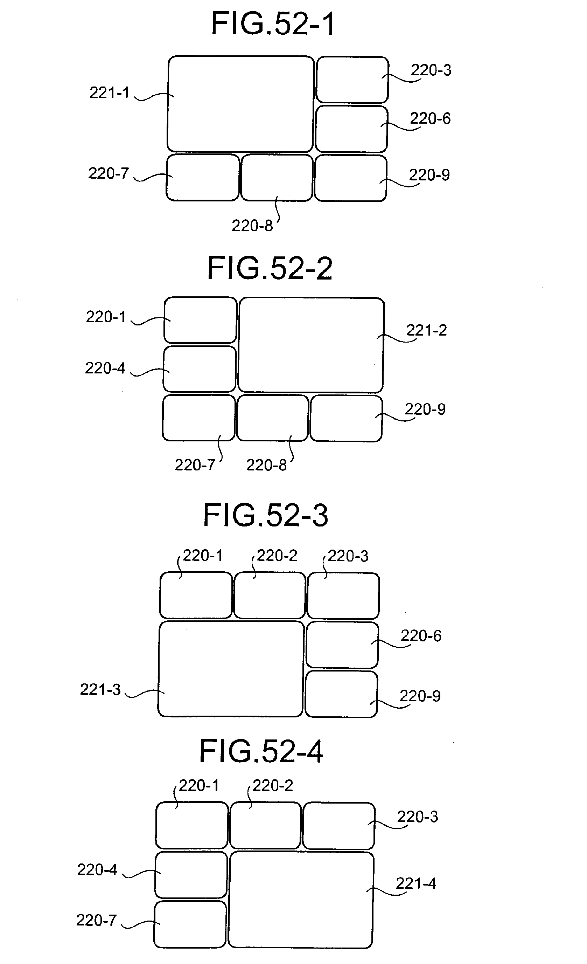

FIGS. 52-1 to 52-4 are diagrams showing an example of the rule of enlarged display upon selection of an enlarge button. Specifically, when an enlarge instruction is issued for any one of the small display areas 220-1, 220-2, 220-4 and 220-5, the enlarge/compress function of the display processing unit 16, as shown in FIG. 52-1, combines the small display areas 220-1, 220-2, 220-4, 220-5 into one medium display area 221-1 and displays by enlarging the contents of selected one of the small display areas 220-1, 220-2, 220-4, 220-5 in the medium display area 221-1. As a result, the display information of any three of the small display areas 220-1, 220-2, 220-4, 220-5 not selected is not displayed during the execution of the enlarge function.

In a similar fashion, the enlarge/compress function of the display processing unit 16, upon selection of the small display areas 220-3, and 220-6, as shown in FIG. 52-2, displays, in enlarged form, the contents of selected one of the small display areas 220-3, and 220-6 in the medium display area 221-2 formed by combining the small display areas 220-2, 220-3, 220-5, 220-6, while when the small display areas 220-7, and 220-8 are selected, as shown in FIG. 52-3, the contents of selected one of the small display areas 220-7, and 220-8 are displayed by being enlarged in the medium display area 221-3 formed by combining the small display areas 220-4, 220-5, 220-7, and 220-8. Further, when the small display area 220-9 is selected, as shown in FIG. 52-4, the contents of the selected small display area 220-9 are displayed by being enlarged in the medium display area 221-4 formed by combining the small display areas 220-5, 220-6, 220-8, 220-9.

Also, as shown in FIGS. 52-1 to 52-4, the depression of the compress button in the presence of the medium display area 221 erases the medium display area 221 from the displaying unit 11, and as shown in FIG. 51, restores the state in which only the small display areas 220 are on display.

Now, assume that a given small display area 220 is displayed in enlarged form as shown in FIGS. 52-1 to 52-4 by a given user operating a given operating panel 19A. The display process is explained for the case in which another user desires to read the contents displayed in the information providing apparatus 10 using another operating panel 19A. Assume, for example, that a given user reads the information with the medium display area 221-1 formed as shown in FIG 52A by displaying the small display area 220-1 in enlarged form. At the same time, assume that another user depresses the function button 19A-2 other than the enlarge button for any of the small display areas 220-3, 220-6, 220-7, 220-8, 220-9 not erased by forming the medium display area 221-1. Then, the display processing unit 16 displays the contents corresponding to the function button 19A-2 in the corresponding display area 220 in the state shown in FIG. 52-1.

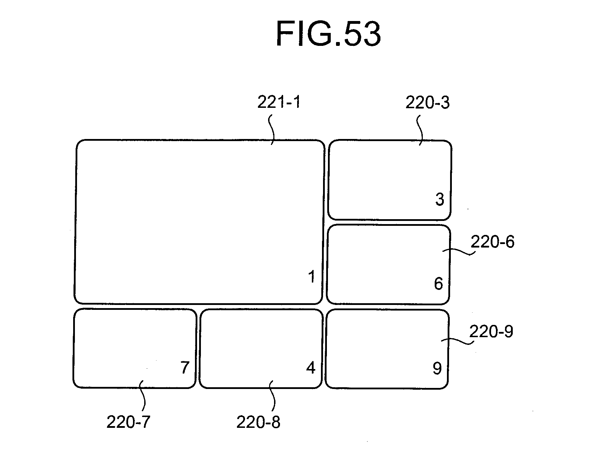

When another user depresses the function button 19A-2 other than the enlarge button of any one of the small display areas 220-1, 220-2, 220-4, 220-5 erased by forming the medium display area 221-1, the display processing unit 16 displays the display information selected but not on display, on one of the small display areas 220-3, 220-6, 220-7, 220-8, 220-9 not selected by other users. FIG. 53 is a diagram showing an example of replacing the display information. FIG. 53 depicts an example of the display state in which another user has selected the small display area 220-4 in the state of FIG. 52-1. In this case, the contents of the small display area 220-4 are displayed in the small display area 220-8 not used by any user. In FIG. 53, the numeral at the lower right corner in each display area indicates the contents of the display information displayed in the particular display area.

Meanwhile, the aforementioned method of enlarging the small display areas 220 into a medium display area 221 is only an example, and the invention is not limited to such a method. Also, the aforementioned example represents a case in which the information providing apparatus 10 is used as a poster of the candidates for the election. Nevertheless, the invention is not limited to this example, and is applicable also when a plurality of commodities are displayed at the same time or the video of a plurality of channels are displayed in TV or the like.

According to the twelfth embodiment, the information providing apparatus 10 is so configured that the displaying unit 11 is divided into a plurality of display areas with different display information displayed therein, wherein a given display area can be displayed in enlarged form. When it is desired to view the contents of the detailed information containing a great amount of small information, the detailed information can be advantageously displayed and viewed in enlarged form. Also, the enlarged display erases not all the small display areas 220 but leaves several small display areas 220 intact, and therefore, a plurality of users can advantageously view different display information without erasing the information of the other display areas viewed by other users.

### EMBODIMENT 13

In the thirteenth embodiment, the invention is explained with an information providing system for displaying, in real time, the display information changing with time. The description that follows represents an example of the information providing system using the information providing apparatus installed in a food mall for displaying a guide to each restaurant, to which the invention is not limited, and this information providing system can be used also as an exit guide of a station and a traffic congestion notice of toll roads at a service area with equal effect.

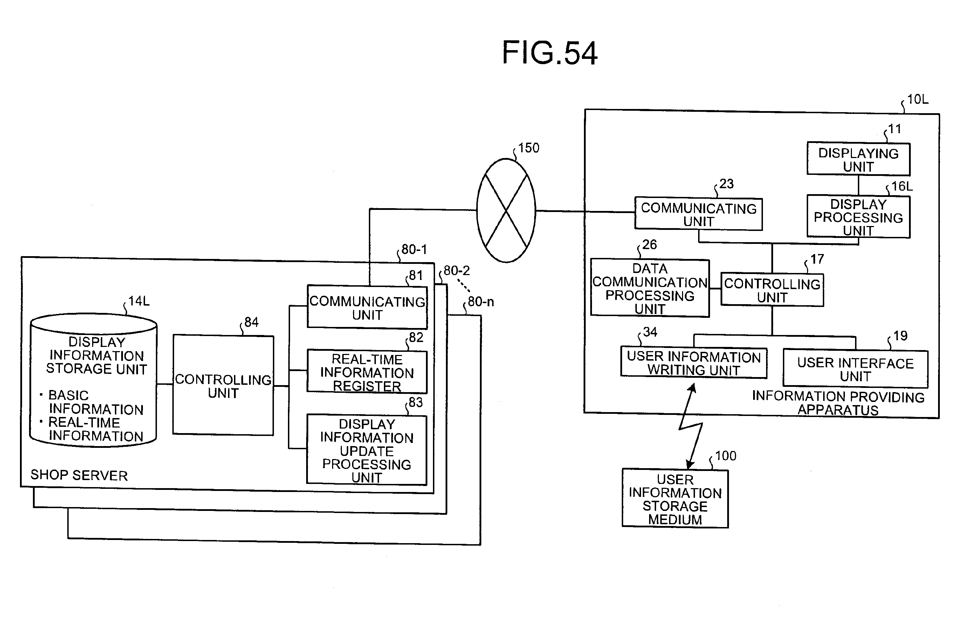

FIG. 54 is a block diagram schematically showing the function configuration of the information providing system according to the thirteenth embodiment of the invention. In this information providing system, shop servers 80-1 to 80-n of restaurants and the information providing apparatus 10L for displaying the information from the shop servers 80-1 to 80-n are interconnected by a network 150. Also, the user is assumed to hold the same user information storage medium 100 as explained in the first embodiment shown in FIG. 1-2.

The information providing apparatus 10L is configured to include a displaying unit 11, a display processing unit 16L, a user interface unit 19, a communicating unit 23, a data communication processing unit 26, a user information writing unit 34 and a controlling unit 17. In the description that follows, the same component elements as those of the information providing apparatuses 10A to 10K of the first to eleventh embodiments are designated by the same reference numerals, respectively, and not described in detail, but only different component parts are described.

The display processing unit 16L has the function of displaying the display information received from a plurality of the shop servers 80-1 to 80-n connected through the network 150 in the display areas on one displaying unit 11.

The user information writing unit 34 has the function of writing the information on the discount coupon issued by the shops or the like into the user information storage unit 101 of the user information storage medium 100 held by the user.

The shop servers 80-1 to 80-n are each configured to include a communicating unit 81 that conducts communication with the information providing apparatus 10L, a display information storage unit 14L that stores the display information on the shop, a real-time information register 82 for inputting the real-time display information to the display information storage unit 14L, a display information update processing unit 83 that changes the contents displayed by the information providing apparatus 10L and a controlling unit 84 that controls each of these processing units.

The communicating unit 81 has the function of transmitting and receiving the data to and from the information providing apparatus 10L connected through the network 150.

The display information storage unit 14L stores the display information to be displayed on the information providing apparatus 10L. The display information is configured of the basic information including the names, main menus, business hours and holidays of the shops representing the contents displayed while the information providing apparatus 10L is not used by the user, and the real-time information having the contents displayed to the user desiring the detailed information including the unoccupied seat information, the recommended menus for the day, time-limited services, quantity-limited menus, the discount coupon information and the like. Generally, the basic information remain unchanged for a long time while the real-time information changes with time.

The real-time information register 82 has the function of registering the real-time information changing with time in the display information storage unit 14L. As described above, for example, the current availability of the unoccupied seats and the quantity-limited menus are registered. These real-time information may be input manually by an input unit such as a keyboard, or if obtainable automatically by a measuring unit, can be input as the measurement result.

The display information update processing unit 83 has the function of transmitting the display information stored in the display information storage unit 14L at the request of the information providing apparatus 10L. For example, the display information update processing unit 83 has the function of transmitting the basic information in the absence of the user of the information providing apparatus 10L, and upon receipt of an input from the user of the information providing apparatus 10L through the user interface unit 19, extracting the basic information or the real-time information based on the input information from the display information storage unit 14L and transmitting it to the information providing apparatus 10L through the communicating unit 81.

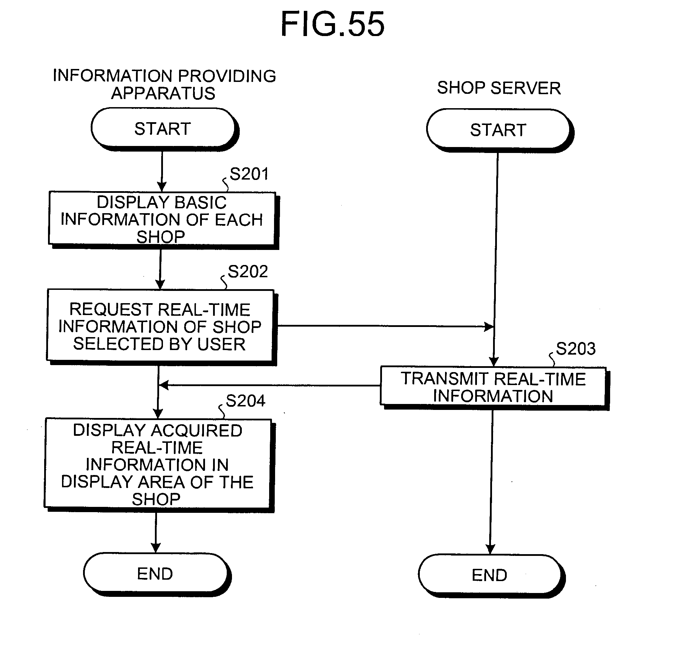

Next, the processing steps of displaying the real-time information in this information providing system is explained with reference to the flowchart of FIG. 55. First, in the initial state where no user of the information providing apparatus 10L exists, the basic information transmitted from the shop servers 80-1 to 80-n are displayed in each predetermined display area of the displaying unit 11 of the information providing apparatus 10L (step S201).

After that, the user reads the information providing apparatus 10L and selects the display area of one shop from the display information of a plurality of shops through the user interface unit 19. Then, the data communication processing unit 26 of the information providing apparatus 10L requests the real-time information from the shop servers 80-1 to 80-n of the shops displayed in the particular display area (step S202). The display information update processing unit 83 of the shop servers 80-1 to 80-n transmits the real-time information in the display information storage unit 14L from the communicating unit 81 to the information providing apparatus 10L (step S203). The display processing unit 16L of the information providing apparatus 10L then executes the process of displaying the real-time information received from the communicating unit 23 in the display area of the particular shop (step S204), thereby finishing the processing steps of displaying the real-time information.

Meanwhile, when the real-time information contains the discount coupon service or the like and the user desires to acquire the discount coupon, the user information storage medium 100 may be brought to the vicinity to or inserted into the user information writing unit 34 of the information providing apparatus 10L thereby to write the discount coupon information in the user information storage unit 101. In such a case, the discount coupon becomes usable by causing the discount coupon information in the user information storage medium 100 to be read into the user information storage medium reading unit, not shown, installed in the particular shop.

According to the thirteenth embodiment, the real-time shop situation such as the unoccupied seat information and the recommended menu of the shops such as restaurants can be displayed, and therefore, the user of the information providing system can advantageously avoid the experience of actually moving to a shop on display and finding that the shop is not open or failing to find seats.

### EMBODIMENT 14

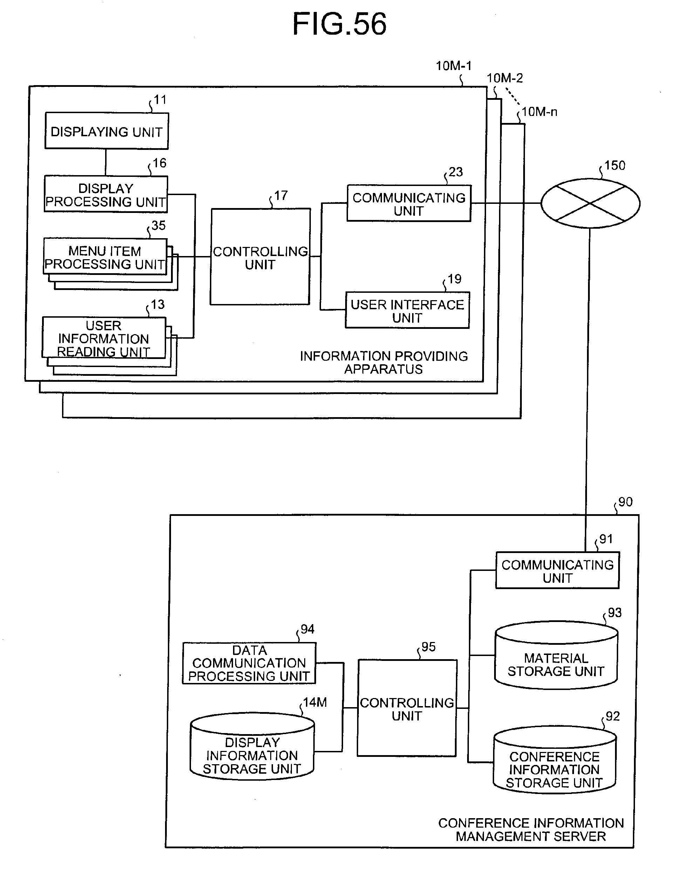

In the fourteenth embodiment, the invention is explained with an example of the information providing system having an information providing apparatus installed in a conference room. FIG. 56 is a block diagram schematically showing the function configuration of the information providing system according to the fourteenth embodiment of the invention. In this information providing system, information providing apparatuses 10M-1 to 10M-n (n: arbitrary natural number) installed in the respective conference rooms and a conference information management server 90 for managing the conference information in the conference rooms are interconnected through a network 150. Meanwhile, the user of the information providing system is assumed to hold the user information storage medium 100 having stored therein the name of the user.

The information providing apparatuses 10M-1 to 10M-n are each configured to include a communicating unit 23, a displaying unit 11, a display processing unit 16, a user information reading unit 13, a user interface unit 19, a menu item processing unit 35 and a controlling unit 17. In the description that follows, the same component elements as those of the information providing apparatuses 10A to 10L of the first to thirteenth embodiments described above are designated by the same reference numerals, respectively, and not described in detail, but only different component parts are described.

The menu item processing unit 35 has the function of executing a predetermined process upon receipt of the user information from the corresponding user information reading unit 13. This menu item processing unit 35 has the function substantially similar to the accompanying information generating unit 15 according to the first to third embodiments. Unlike the accompanying information generating unit 15 according to the first to third embodiments that generates the accompanying information related to the user, the menu item processing unit 35 not only generates the accompanying information but also executes the process related to the user such as the display of the material file held at a predetermined place. When the menu item processing unit 35 executing the conference room entry management process acquires the user information, for example, the date and time of acquisition are stored in the corresponding conference information in the conference information storage unit 92 of the conference information management server 90 while at the same time executing the process of displaying the name of the particular user on the displaying unit 11 as a person who has entered the room. Also, when the menu item processing unit 35 executing the process of displaying the presentation material acquires the user information of the organizer, the materials used by the user and related to the particular conference are extracted from the material storage unit 93 of the conference information management server 90 and displayed on the displaying unit 11. The correspondence established in the menu item processing unit 35 between the user information reading unit 13 and the menu items is similar to that in the accompanying information generating unit 15.

The conference information management server 90 is configured to include a communicating unit 91 that conducts communication with the information providing apparatuses 10M-1 to 10M-n through the network 150, a conference information storage unit 92 that stores the conference information for each conference room, a display information storage unit 14M that stores the display information to be displayed on the information providing apparatuses 10M-1 to 10M-n installed in the respective conference rooms, a material storage unit 93 that stores the materials on the user to be displayed on the information providing apparatuses 10M-1 to 10M-n, a data communication processing unit 94 that controls the data transmitted to and received from the information providing apparatuses 10M-1 to 10M-n and a controlling unit 95 that controls each of these processing units.

The conference information stored in the conference information storage unit 92 is configured to contain such contents as schedules for conferences in each conference room, organizers of each conference, prospective attendants, actual attendants, materials used for conferences and the history of related conferences. The "materials used for conferences" are related to the material files stored in the material storage unit 93.

The display information storage unit 14M has stored therein the display information such as the menu information commonly used for each conference, the conference information stored in the conference information storage unit 92 and the layout information for displaying the materials stored in the material storage unit 93.

The material storage unit 93 has stored therein the presentation material file used for conferences. This material file is prepared in advance by the organizers or attendants of the conferences and stored in the material storage unit 93 through the network 150 or the information storage medium.

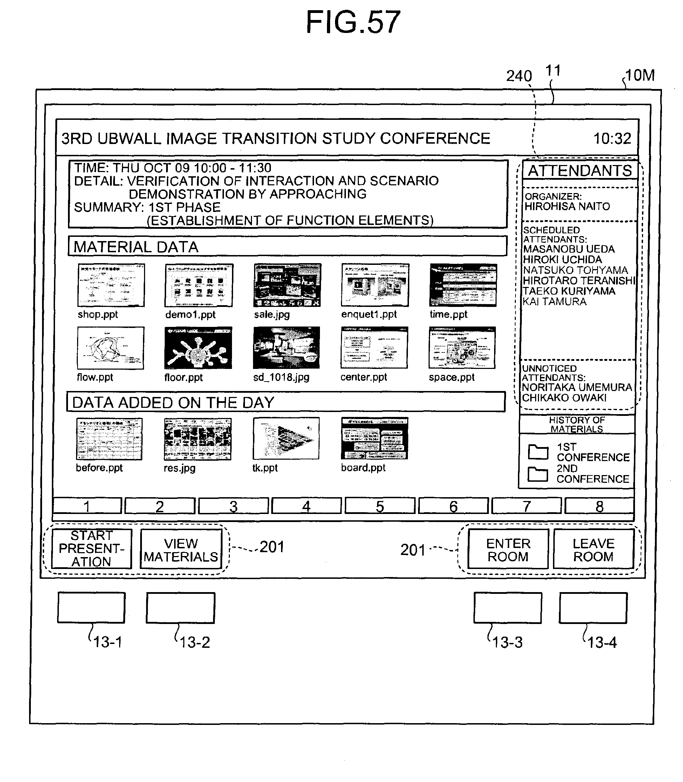

FIG. 57 is a diagram showing a front view of the information providing apparatus and an example of the contents displayed thereon. The information providing apparatuses 10M-1 to 10M-n have a displaying unit 11 on the front of the main body thereof, and a plurality of user information reading units 13 along the lower side of the displaying unit 11. Also, menu items 201 are displayed at a position just above the user information reading units 13 on the display screen of the displaying unit 11. These menu items 201 can be processed in the information providing apparatuses 10M-1 to 10M-n, and by bringing the user information storage medium 100 to the vicinity of the user information reading units 13 at positions corresponding to a menu item 201, the specific process indicated by the particular menu item 201 is executed by the menu item processing unit 35 corresponding to the user information reading unit 13. In this diagram, the items "presentation start" for starting the presentation, "material list" for displaying a list of materials related to a conference, "entry" for checking the entry of the conference attendants into the conference room and "exit" for checking the exit of the conference attendants from the conference room are displayed as the menu items 201.

Also, an attendant display area 240 for displaying the attendants at a conference is arranged on the display screen of the displaying unit 11 shown in FIG. 57 to display the names of the organizer, scheduled attendants and the actual attendants of the conference. The names of the persons who have entered the room can be displayed by the menu item processing unit 35 by bringing the user information storage medium 100 close to the user information reading unit 13 corresponding to the "entry" of the menu item 201. At the same time, the attendants and non-attendants can be discriminated from each other by changing the method of displaying the names of the organizer or the scheduled attendants who have entered and not entered (including the persons who have left the room) the room, or for example, by changing the display method in such a manner that the names of the non-attendants are displayed lighter than those of the attendants. Also, upon checking the entry into the room, the menu item processing unit 35 executes the process of recording the time of entry of a particular attendant in the conference information corresponding to the conference information storage unit 92 of the conference information management server 90. In a similar fashion, by bringing the user information storage medium 100 close to the user information reading unit 13 corresponding to the "exit" of the menu item 201, the menu item processing unit 35 displays the name of the person who has left the room in light characters, while at the same time executing the process of recording the time when the particular attendant has left the room in the conference information corresponding to the conference information storage unit 92 of the conference information management server 90.

Also, upon selection of "material list" of the menu item 201 displayed on the displaying unit 11 shown in FIG. 57, the presentation materials corresponding to the user ID of the user information storage medium 100 or a personal folder having stored therein the presentation materials can be displayed on the displaying unit 11. In this case, the presentation materials or the personal folder holding the presentation materials are accompanied by the corresponding user ID, and therefore, if the same menu is selected by a different person, the presentation materials or the personal folder holding the presentation materials corresponding to each user ID are displayed on the displaying unit 11.

This fourteenth embodiment provides the advantage that the information providing apparatuses 10M-1 to 10M-n can be used as a tool for displaying the materials for the conference in the conference room and also the actual attendants can be confirmed by displaying the names of the attendants at the conference. Also, the materials related to the conference attended by the user can be retrieved from the material storage unit 93 of the conference information management server 90 and displayed by the user, and therefore, the organizer is not required to carry the material file used at the conference.

When the interface of the information providing apparatus 10M with the user is divided into two parts like the user information reading unit 13 and the user interface unit 19 as in this fourteenth embodiment, two operating parts are available including the part operated by the user interface unit 19 and the part operated by the user information storage medium 100 (i.e. the part operated by the user information reading unit 13), and therefore, the situation may occur in which it is difficult to know which one or both of the two parts are to be operated.

In view of this, the menu for operation with the user information storage medium 100 is displayed adjacently to the position of installation of the user information reading unit 13 or displayed in such a manner that the menu comes to appear from the place of installation of the user information reading unit 13. In this way, the user can distinguish the operation at the user interface unit 19 and the operation at the user information storage medium 100.

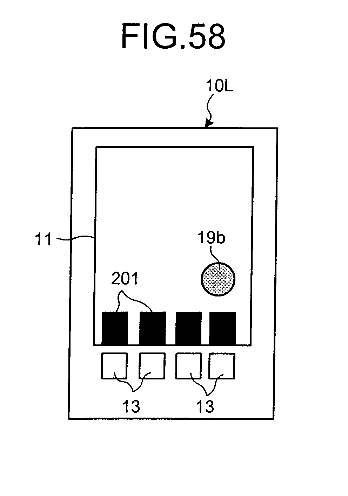

FIG. 58 is a diagram showing an example of display in the information providing apparatus in which the operation at the user information reading unit and the operation at the user interface unit can be distinguished from each other. The front part of the information providing apparatus 10M is equipped with a large-sized displaying unit 11 arranged on the main body thereof, four user information reading units 13 arranged under the displaying unit 11 and a touch panel 19b making up the user interface unit 19 in the displaying unit 11. Adjacently to the place of installation of the user information reading units 13, the menu items 201 to be operated by the user information storage medium 100 are displayed under the displaying unit 11.

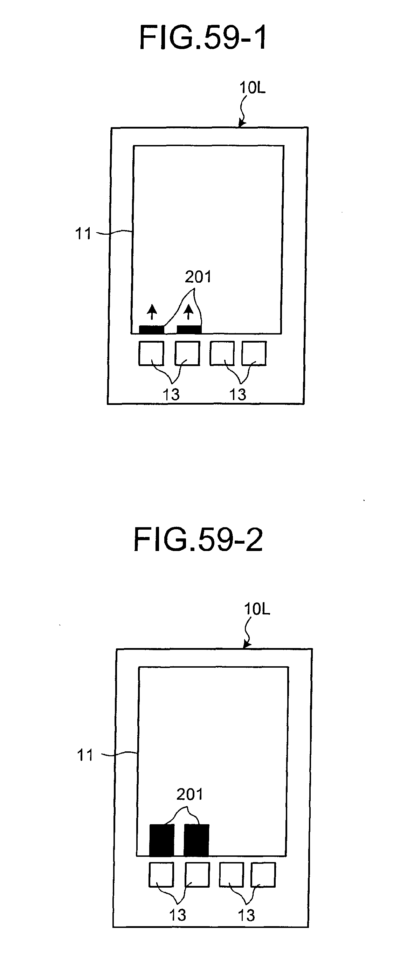

FIGS. 59-1 and 59-2 are diagrams showing an example of display of menu items prompting the operation of the user information reading units. FIG. 59-1 depicts the state in which the menu items 201 are coming into appearance for display from the user information reading units 13, and FIG. 59-2 depicts the state in which all the menu items 201 have fully appeared from the state of FIG. 59-1. As shown in these drawings, the operation of the touch panel 19b shown in FIG. 58 or a user detecting unit such as a motion sensor not shown detects the user located on the displaying unit 11 side of the information providing apparatus 10M, and thus the available menu (limited to the menu usable by the user) is displayed. The example shown in these drawings represents a case in which only the menu items 201 corresponding to the two user information reading units 13 on the left side are displayed. Once the operation in the user information reading units 13 becomes impossible, however, the menu items 201 are erased from the displaying unit 11 in such a manner as if to be retreated into the user information reading units 13 conversely to the state of FIG. 59-1 from the state of FIG. 59-2. This operation of appearance and extinction of the menu items 201 are intended to make the user visually understand the place of installation of the user information reading units 13. The invention, therefore, is not limited to this method, and any display method that can achieve the same purpose is applicable.

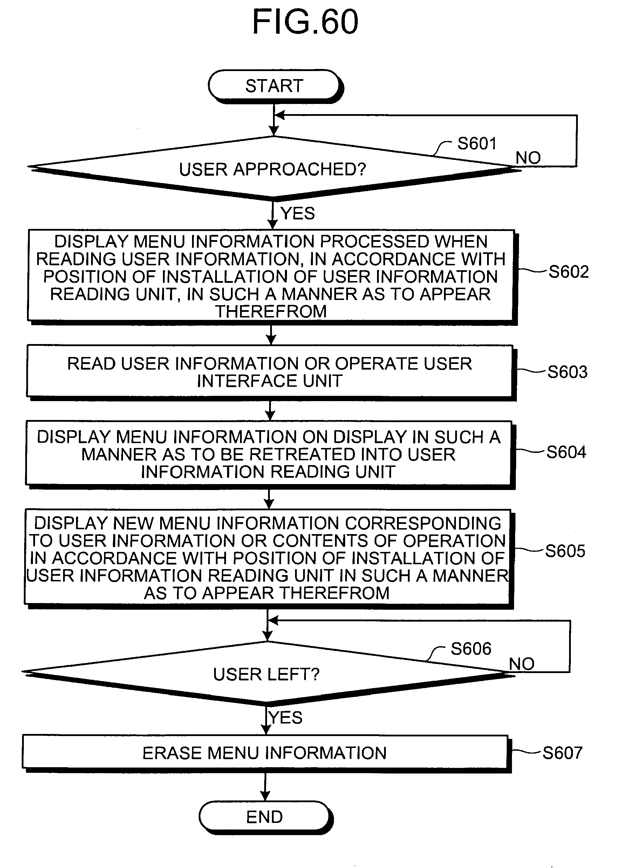

FIG. 60 is a flowchart showing an example of the processing steps of displaying the menu items in the neighborhood of the place at which the user information reading units are installed. First, a motion sensor or the like determines whether the user has approached the information providing apparatus 10M (step S601). When no user approaches (NO in step S601), the standby mode is entered. With the approach of the user (YES in step S601), on the other hand, the display processing unit 16 so operates that the menu items 201 processed at the time of reading the user information storage medium 100 gradually extend out from the set place of installation of the user information reading units 13 (step S602).

After that, assume that the user executes the process of causing the user information reading units 13 to read the user information storage medium 100 or performs the operation of the touch panel 19b on the screen (step S603). The display processing unit 16 executes the process of retracting the menu items 201 on display once (step S604). Then, the display processing unit 16 causes new menu items 201 corresponding to the user operation to be displayed in such a way as to appear from the position of installation of the user information reading units 13 (step S605). In this case, the number of the menu items 201 displayed is not necessarily equal to but may be smaller than the number of the user information reading units 13.

Then, the motion sensor determines whether the user has left the information providing apparatus 10M (step S606). When the user has not left (NO in step S606), the standby mode is entered. When the user has left (YES in step S606), on the other hand, the menu items 201 are erased (step S607) and the process is finished.

As described above, the operation of the user interface unit 19 and the user information reading units 13 can be expressly divided to improve the operability of the user. Meanwhile, also when the information providing apparatus 10 has no user interface unit 19 but the user information reading units 13, the aforementioned method of displaying the menu items 201 of the user information reading units 13 is applicable.

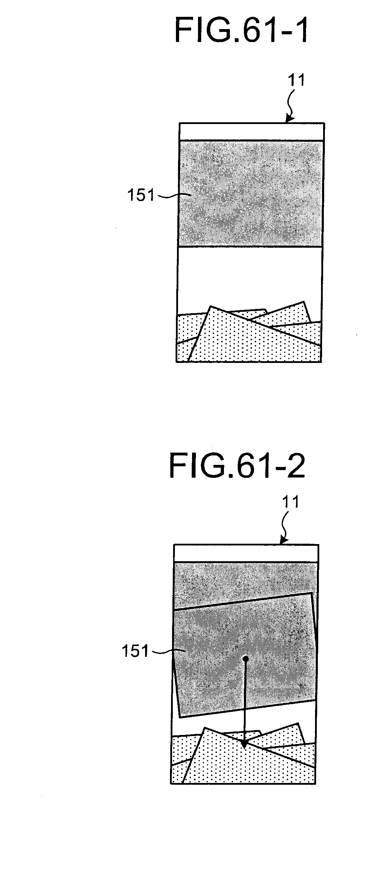

In the embodiments including the sixth, eighth, ninth, tenth and thirteenth embodiments described above, a greatly increased number of contents displayed on the displaying unit 11 may make it possible to display all the contents. Assume, for example, that an attempt is made to display all the general information in the information providing apparatus 10 sequentially on the standby screen in the state where the information providing apparatus 10 is not used by any user. Then, too long a time is required before the information required by the user comes to be displayed. When the contents 151 on display are displayed in such a manner as if to be dumped below the displaying unit 11 at predetermined time intervals as shown in FIGS. 61-1 to 61-2, for example, a considerable time is required before all the contents 151 have been displayed. In view of this, when the contents to be displayed one by one on the standby screen are great in number, only a predetermined number of them are displayed, so that only those contents that the user desire to view can be selected from all the contents by the user operation.

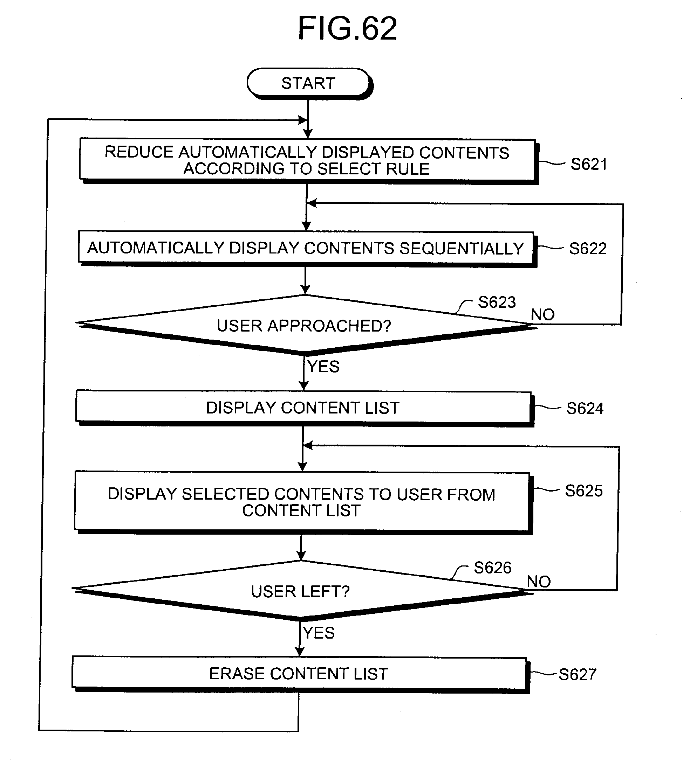

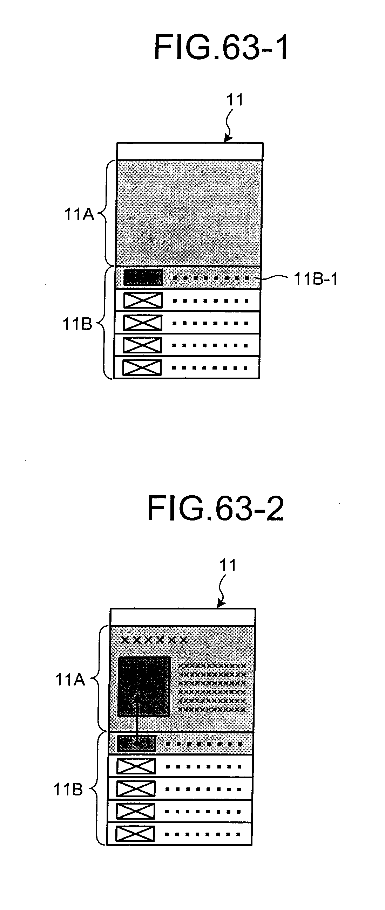

FIG. 62 is a flowchart showing an example of the method of displaying the general information having a multiplicity of contents, and FIGS. 63-1 and 63-2 are diagrams showing an example of displaying the general information having a multiplicity of contents. First, the display processing unit 16, using a collaboration system capable of changing the number of commodities in real time in conjuncture with the POS or the stock management system in commodity display, reduces the number of the contents to be automatically displayed from a multiplicity of contents according to a select rule (step S621). The types of contents to be displayed are reduced, for example, according to whether commodities are fast selling or bargain sale items.

Then, the display processing unit 16 displays the reduced contents sequentially in the same manner as if the page is automatically turned (step S622). After that, the user detecting unit 12 such as a motion sensor or the like determines whether the user has approached the information providing apparatus 10 (step S623). When no user has approached (NO in step S623), the process returns to step S622 and the process of sequentially displaying the contents is repeated. When the user has approached the information providing apparatus (YES in step S623), on the other hand, the display processing unit 16 displays a list of contents (all the contents before reduction) on the displaying unit 11 in step S621 (step S624). As shown in FIG. 63-1, for example, a list of contents are displayed in the lower half part 11B of the displaying unit 11 (or by scrolling the pages when the content list cannot be displayed in full on the screen).

After that, a specified content, if selected by the user, is displayed in a larger font on the displaying unit 11 (step S625). Assuming that the information 11B-1 is selected from the content list of FIG. 63-1, for example, the detailed information of the selected information 11B-1 is displayed in the upper half part 11A of the displaying unit 11 as shown in FIG. 63-2.

After that, the user detecting unit 12 determines whether the user has left the information providing apparatus 10 (step S626). When the user has not left the information providing apparatus 10 (NO in step S626), the process returns to step S625 and the state is maintained. When the user has left the information providing apparatus 625 (YES in step S626), on the other hand, the display processing unit 16 erases the content list from the displaying unit 11 (step S627), and the process returns to step S621 where the aforementioned process is repeatedly executed.

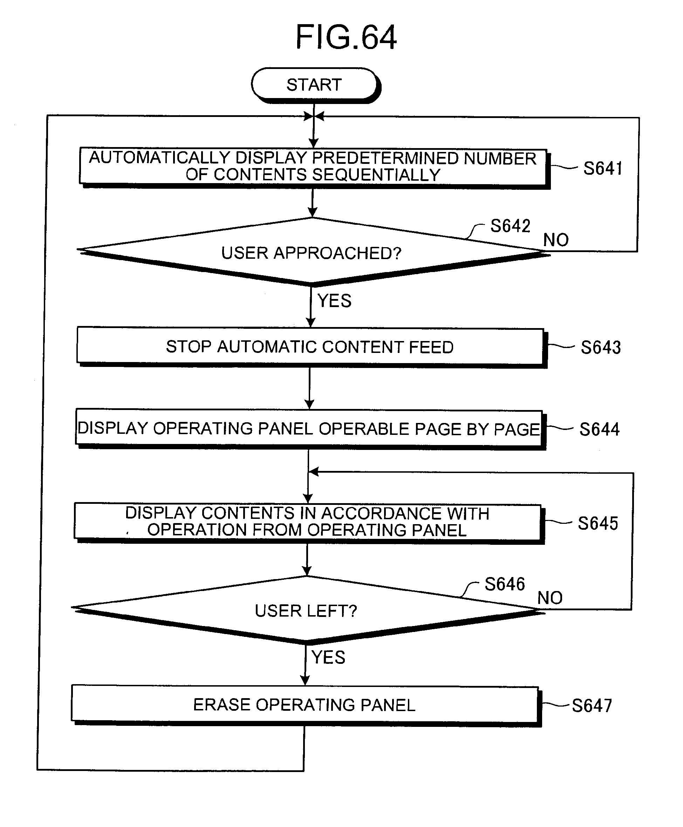

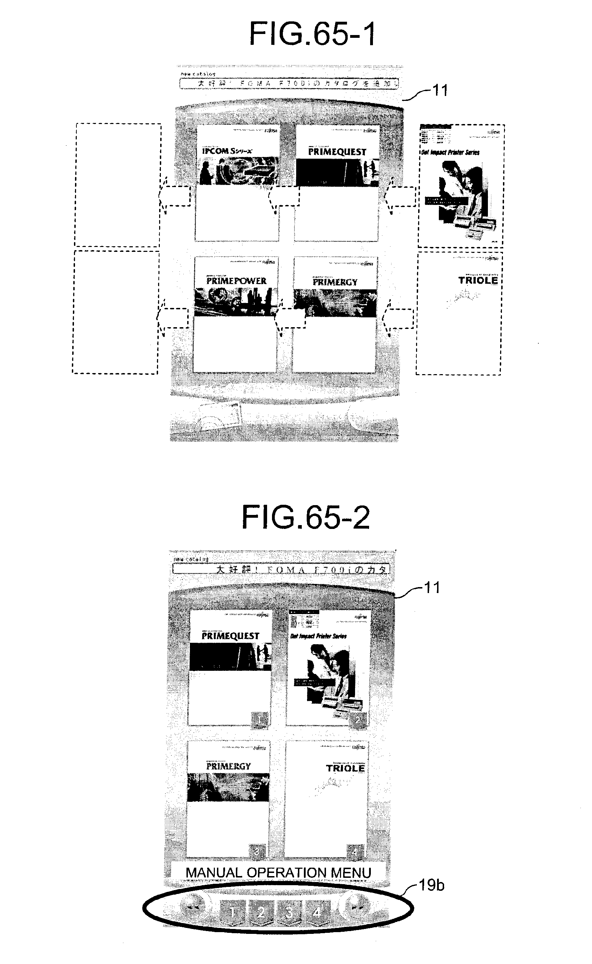

The method of displaying the contents as a list is not limited to the aforementioned one, but other methods of displaying a list are also conceivable. FIG. 64 is a flowchart showing another example of the processing steps of displaying a multiplicity of contents, and FIGS. 65-1 and 65-2 are diagrams showing another example of displaying the general information having a multiplicity of contents. In this example, a method is explained whereby in the absence of the user within a predetermined range from the information providing apparatus 10, a plurality of contents such as catalogs are displayed by being shifted at predetermined time intervals on the displaying unit 11, while in the presence of the user within a predetermined range from the information providing apparatus 10, the contents of display on the displaying unit 11 can be manipulated.

First, the display processing unit 16 displays a predetermined number of pages of contents such as a catalog having a multiplicity of pages on the displaying unit 11, and upon lapse of a predetermined time, displays the contents of the next page. In this way, the contents are sequentially displayed automatically (step S641). In the case of FIG. 65-1, for example, the contents of four pages are displayed at a time, and by moving the contents leftward in the drawing sequentially at predetermined time intervals (2 seconds, for example), the contents yet to appear are displayed. After that, the user detecting unit 12 such as a motion sensor determines whether the user has approached a predetermined range from the information providing apparatus 10 (step S642). When the user has not approached the information providing apparatus 10 (NO in step S642), the process returns to step S641, and the contents continue to be sequentially displayed automatically.

Once the user approaches the information providing apparatus 10 (YES in step S642), on the other hand, the display processing unit 16 stops automatic feed of the contents (step S643), and displays the operating panel capable of turning the contents back and forth at a predetermined position on the displaying unit 11 (step S644). In the case of FIG. 65-2, the operating panel 19b including a touch panel is displayed under the displaying unit 11. This operating panel 19b includes a select button for displaying the specifics of each content displayed on the displaying unit 11 (the mode to display the specifics in the pages of the catalog, the front cover of the catalog being displayed first), and a feed button whereby the contents displayed on the displaying unit 11 can be turned back and forth. The display processing unit 16 executes the process of moving the contents back and forth according to the operation of the operating panel 19b by the user (step S645).

After that, the user detecting unit 12 determines whether the user has left the predetermined range from the information providing apparatus 10 (step S646). When the user has not left the predetermined range from the information providing apparatus 10 (NO in step S646), the process of step S645 is continued. When the user has left the predetermined range from the information providing apparatus 10 (YES in step S646), on the other hand, the display processing unit 16 erases the operating panel 19b from the displaying unit 11 (step S647), and the process returns to step S641 where the process is repeatedly executed.

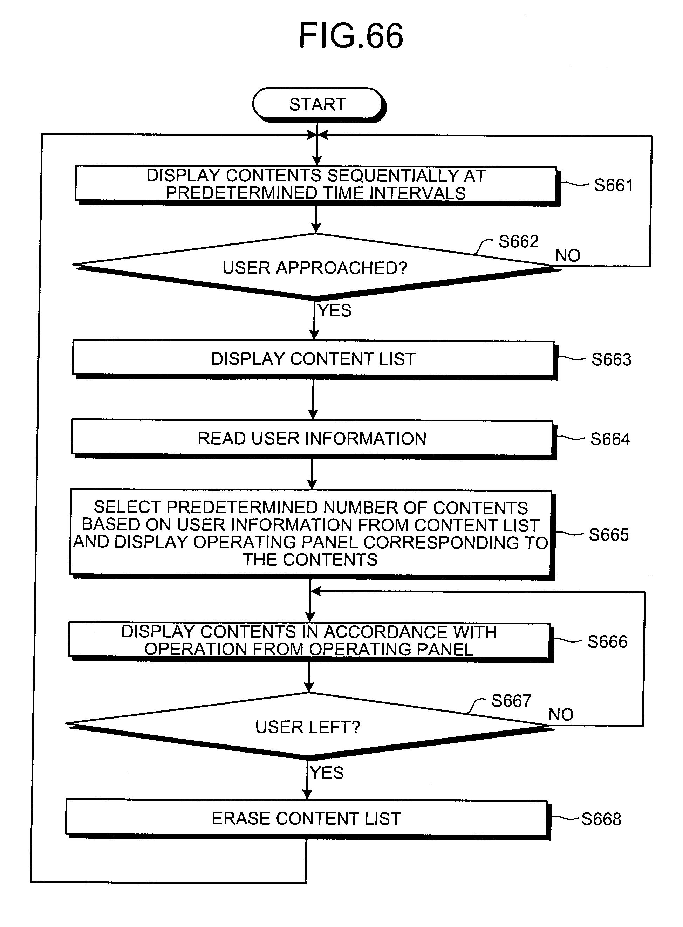

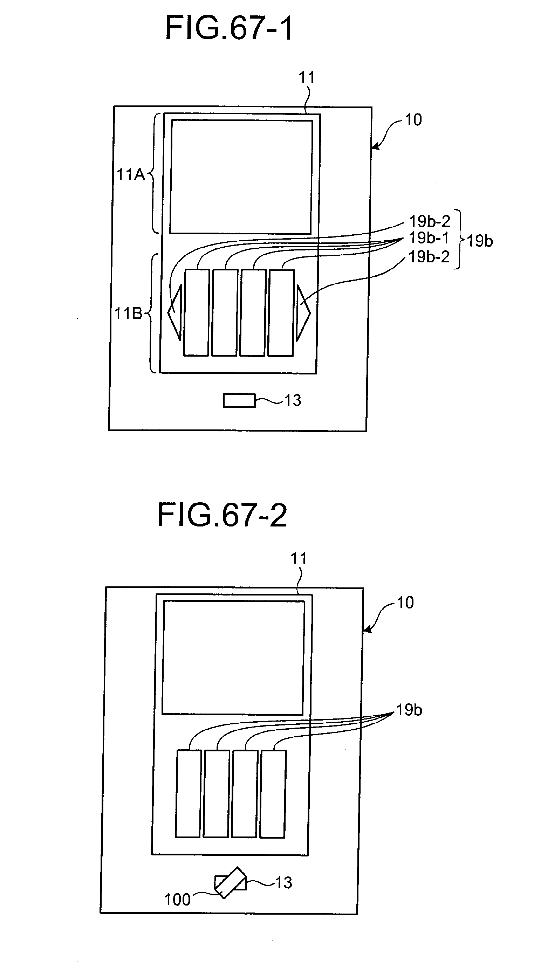

Next, the information providing apparatus 10 is explained as another example of displaying a multiplicity of contents, in which a plurality of contents are displayed sequentially and when the user information reading unit 13 reads the user information, the contents corresponding to the user information are selected and displayed on the displaying unit 11. FIG. 66 is a flowchart showing another example of the processing steps of displaying a multiplicity of contents, and FIGS. 67-1 and 67-2 show another example of displaying the general information having a multiplicity of contents.

First, the display processing unit 16 displays a multiplicity of contents sequentially at predetermined time intervals (step S661). FIG. 67-1 depicts an example of the screen being approached by the user, in which one content is displayed in enlarged form in the upper half part 11A of the displaying unit 11, while the operating panel 19b is displayed in the lower half part 11B. The operating panel 19b includes content display buttons (thumbnail on display doubles as a content list) 19b-1 for displaying the contents and scroll buttons 19b-2 for displaying by scrolling the contents that cannot be contained in the screen.

When no user is present nearby, the contents are displayed one by one sequentially in the upper half part 11A of the displaying unit 11 at predetermined time intervals, and the image for describing the operation is displayed in the lower half part. Under this condition, the user detecting unit 12 such as a motion sensor determines whether the user has approached the predetermined range from the information providing apparatus 10 (step S662). When no user has approached the information providing apparatus 10 (NO in step S662), the process returns to step S661, and the contents continue to be automatically displayed sequentially.

When the user has approached the information providing apparatus 10 (YES in step S662), on the other hand, the display processing unit 16 causes the content list to be displayed in the lower half part 11B of the displaying unit 11 (step S663). Further, as soon as the user executes the process of causing the user information reading unit 13 to read the user information storage medium 100, the user information reading unit 13 reads the user information (step S664), and based on the user information thus read from the content list, a predetermined number of contents adapted for the user are selected and the operating panel (thumbnail list) 19b corresponding to the particular contents is displayed (step S665). The number of contents can be selectively reduced using, for example, the preference of the user, the set conditions and the attribute filtering. The predetermined number is equal to the number of the content display buttons (thumbnails) 19b-1, for example, arranged in the lower half part 11B of the displaying unit 11 for displaying the contents in enlarged form. The maximum number of the thumbnails that can be arranged is determined according to the screen configuration, and by setting the predetermined number within this maximum number, as shown in FIG. 67-2, the requirement to display the scroll buttons is eliminated (the user is not required to scroll).

Under this condition, assuming that the user operates the operating panel 19b, the display processing unit 16 executes the process of displaying the selected contents in the upper half part 11A of the displaying unit 11 (step S666). After that, the user detecting unit 12 determines whether the user has left the predetermined range from the information providing apparatus 10 (step S667). When the user has not left the information providing apparatus 10 (NO in step S667), the process of step S666 is continued. When the user has left the information providing apparatus 10 (YES in step S667), on the other hand, the display processing unit 16 erases the reduced content list from the displaying unit 11 (step S668), and the process returns to step S661 to repeat the aforementioned process.

Apart from the first to fourteenth embodiments described above, the displaying unit 11 of the information providing apparatus 10 may be divided into a plurality of display areas which are assigned to the users so that the information held by the user can be displayed in the respective display areas. Also, the display areas of the user may be secured on the displaying unit 11 of the information providing apparatus 10 and the boundary with other display areas may be used ambiguously.

The embodiment is explained above mainly with reference to a system in which the registered information on the user including his/her name, together with the user ID, is registered in the database managed by the issuing entity, and the user information storage medium 100 indicating the identity of the user is issued to the particular user. In this case, the user information storage medium 100 corresponds to various credit cards, commutation ticket, railway ticket, airplane ticket, ticket for drama or music concert, employee or student ID card, patient ID card for a hospital, bank cash card, shopping point card, ID card such as membership card and the like. The user ID is stored in this ID card, and the registered information corresponding to the user ID are stored in the database managed by the issuing entity. From the user ID of this ID card, the required information registered therein can be retrieved.

The embodiment is applicable also to a system in which no ID card is issued, but the user ID is managed with the information including the name of the subscriber to the public services such as electricity, city gas, water, telephone and broadcasting and the membership services such as the internet connection and registration by internet. In such a case, the user information storage medium 100 like the ID card is not issued, and therefore, the user ID issued by the service entity to the user is input by key from the user interface unit 19, so that the user ID is recognized by biological authentication or the like thereby to use the registered information. As another alternative, the user ID such as the social security number assigned to all the individuals in the US can be used as the information registered with the user ID.

When the RFID is used as the user information storage medium 100, the radio communication scheme used with RFID is not specified. In addition to the radio wave in the band of 13.56 MHz or 2.45 GHz now mainly used, for example, other frequencies can be used. Further, the radio communication by infrared light, light or ultrasonic wave may be used.

Further, the user information storage medium 100 is not necessarily the ID card described above, but may be in such a form that the user ID is incorporated in the hardware of a portable telephone, for example, and may be read by some means. Also, the biological authentication such as fingerprints, vein, voiceprint, iris or face image may be used as the user ID.

Also, the user ID may not be automatically read from the ID card (user information storage medium 100) of the user approaching the user information reading unit 13 of the information providing apparatus 10, but the user ID may be read after the user is requested to present the user ID card expressly by bringing the no-contact ID card having a short distance of the communication range to the vicinity of the place of installation of the RFID reader (user information reading unit 13) or inserting the contact-type ID card into a card slot.

Further, the display having a curved surface may be configured by using the plasma tube array as the displaying unit 11 of the information providing apparatus 10 used in the aforementioned embodiments, in which case the information providing apparatus 10 can be configured as a solid cylindrical post or the like. In such a case, as long as the post is located within an area where a multiplicity of unspecified persons gather, the information providing apparatus 10 can be configured, and therefore, no additional space for installing the information providing apparatus 10 is required. Thus, the space can be effectively utilized.

Also, when the contents displayed on the displaying unit 11 of the information providing apparatus 10 are not frequently changed, the displaying unit 11 may be configured of electronic paper so that the contents displayed can be maintained without power, and the screen may be changed by supplying power only when the display contents change. This electronic paper can hold the static screen, and therefore, the power consumption can be suppressed while out of operation. Also, as soon as a signal is input from the user interface unit 19 or the like, the electronic paper is activated immediately and the desired information can be displayed.

Further, the information providing apparatus 10 may be configured of a single part of the user detecting unit 12 or the user information reading unit 13 arranged on the displaying unit 11 such as plasma display or liquid crystal display, or a plurality of such parts may be juxtaposed in the same direction. As another alternative, the displaying unit 11 may be arranged in the shape of L or a box (square, for example). In another application of the information providing apparatus 10 to a slide, a Japanese paper partitioning part, a slide-type door such as an automatic door, the displaying unit 11 can be configured to appear while the door is being closed.

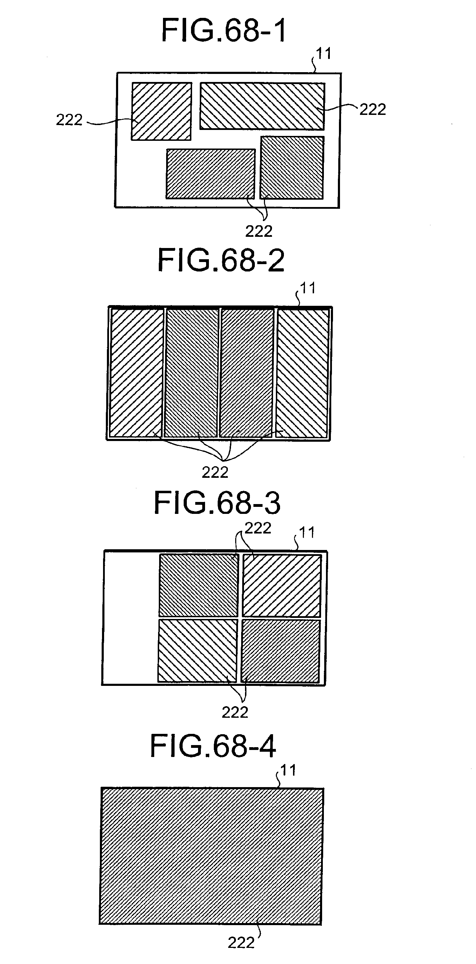

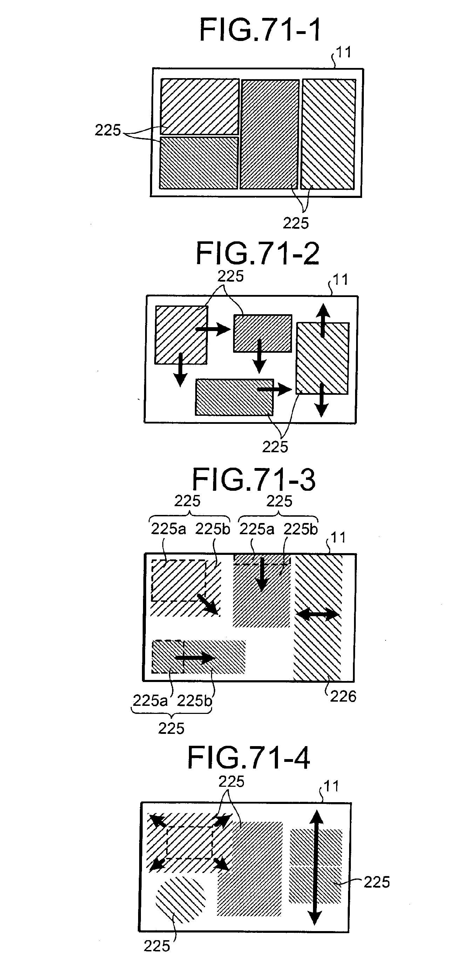

The display layout of the displaying unit 11 can also be arbitrarily changed. FIGS. 68-1 to 71-4 are diagrams showing examples of the display layout of the displaying unit. FIGS. 68-1 to 68-4 are diagrams showing examples of layout of the display areas. FIG. 68-1 depicts the case in which the display areas 222 of an arbitrary size are arranged arbitrarily on the displaying unit 11, FIG. 68-2 the case in which a plurality of the display areas 222 of the same size are arranged in juxtaposition over the entire displaying unit 11, FIG. 68-3 the case in which the display areas 222 of the same size are arranged regularly in grid on the displaying unit 11, and FIG. 68-4 the case in which the display area 222 is displayed over the entire screen of the displaying unit 11.

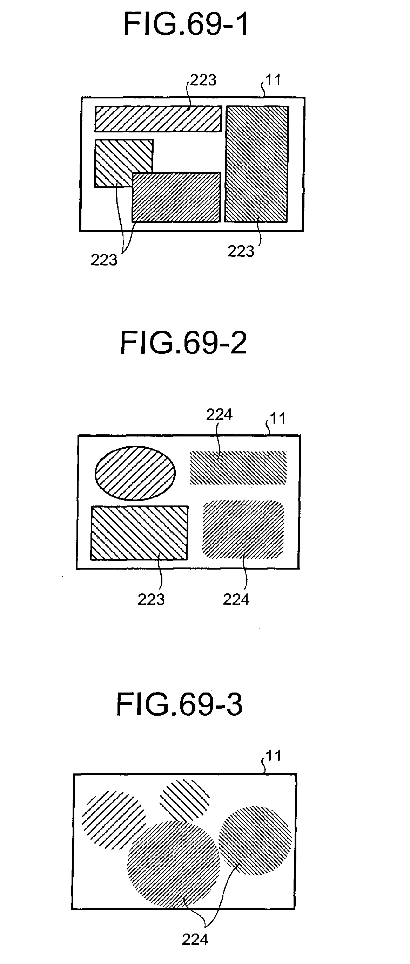

FIGS. 69-1 to 69-3 are diagrams showing examples of the boundary of the display areas. FIG. 69-1 depicts the case in which the display areas 223 having a boundary are arranged on the displaying unit 11, FIG. 69-2 the case in which the display areas 223 having a boundary and the display areas 224 having no boundary are arranged in a mixture on the displaying unit 11, and FIG. 69-3 the case in which the display areas 224 having no boundary are arranged on the displaying unit 11.

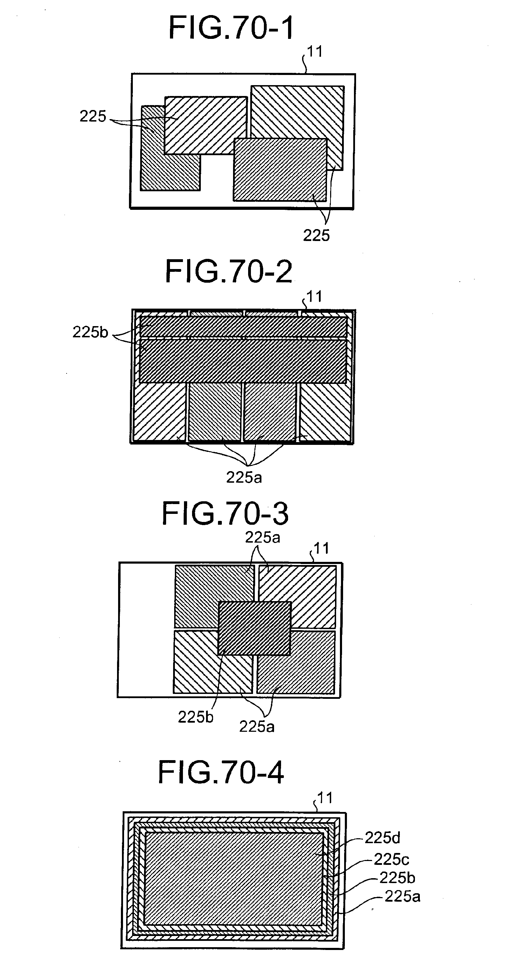

FIGS. 70-1 to 70-4 are diagrams showing examples of the manner in which the display areas are superposed one on another. FIG. 70-1 depicts the case in which a plurality of display areas 225 are superposed at random, FIG. 70-2 the case in which after the displaying unit 11 is covered by the display areas 225a arranged in juxtaposition like in FIG. 68-2, the display areas 225b extending in lateral direction are superposed thereon, FIG. 70-3 the case in which after the four display areas 225a are arranged regularly on the displaying unit 11 like in FIG. 68-3, a display area 225b having the same shape as the display areas 225a is arranged in such a manner as to cover the display areas 225a uniformly, and FIG. 70-4 the case in which the display areas 225b to 225d progressively reduced in area at a predetermined rate from the lowest display area 225a substantially equivalent to the total screen display are superposed one on another concentrically.

FIGS. 71-1 to 71-4 are diagrams showing examples of development of the display areas. FIG. 71-1 depicts the case in which four display areas are fixedly arranged, FIG. 71-2 the case in which each of the display areas 225 is movable vertically or horizontally or in a combined direction, FIG. 71-3 the case in which each of the display areas 225 can be enlarged/compressed between the sizes 225a and 225b and the display area 226 can be deformed laterally in the drawing, and FIG. 71-4 the case in which the display areas 225 can be opened or closed.

In the embodiment described above, the user information reading units 13 detects the user by reading the user information storage medium 100 and the user interface unit 19 detects the input from the user by the access from the user reservation terminal 110 or the portable information communication terminal 130 held by the user or the actual operation by the user. Nevertheless, these processing units may alternatively be configured by a speech recognition technique to control the object corresponding to the user. According to this speech recognition technique, even when the users A and B issue the same instruction in the apparently same voice, for example, the expression of the user A affects only the object of the user A and the speech of the user B affects only the object of the user B. Therefore, the process corresponding to each user can be executed.

### INDUSTRIAL APPLICABILITY

As described above, the information providing apparatus according to this invention is effectively applicable as an information display method such as a notice board or an advertisement in which the information are displayed in a space where a multiplicity of persons gather and in which the information related to each user can be displayed to the extent not losing the generality of the displayed information. Also, this invention is effectively applicable as an information providing apparatus and an information providing system in which the information can be displayed in a space where a multiplicity of persons gather, in such a manner that the contents and layout of display can be changed to satisfy the greater majority of the persons present at the particular place.

## Claims

1. An information providing apparatus that displays the general information aimed at a multiplicity of unspecified persons, comprising:
a displaying unit;
a display processing unit that causes the displaying unit to display the information;
a user information reading unit that reads the user information from a user information storage medium held by the user of the information providing apparatus; and
an accompanying information generating unit that executes a predetermined process based on the user information read by the user information reading unit and generating the accompanying information related to the user;
wherein the display processing unit causes the displaying unit to display an image including the accompanying information and the general information superposed one on the other.

2. The information providing apparatus according to claim 1, wherein the display processing unit displays the accompanying information in a manner distinguishable from the general information.

3. The information providing apparatus according to claim 1, further comprising a user detecting unit that detects the user existing in a predetermined range from the displaying unit,
wherein the display processing unit, upon detection of the user by the user detecting unit, causes the displaying unit to display an image including the menu information indicating the contents processed in the accompanying information generating unit and the general information in superposed relation with each other.

4. The information providing apparatus according to claim 1, wherein the accompanying information generating unit can generate the accompanying information for a plurality of users, and
the display processing unit causes the displaying unit to display pieces of the accompanying information in a manner distinguishable from each other.

5. The information providing apparatus according to claim 1, wherein a plurality of the user information reading units are provided, and
a plurality of the accompanying information generating units are provided corresponding to the user information reading units for each process executed.

6. The information providing apparatus according to claim 3, further comprising a user determining unit that classifies the users based on the predetermined attribute information in the user information read by the user information reading unit from the user information storage medium of the user approaching the information providing apparatus,
wherein the display processing unit has the function of causing the displaying unit to display the menu information varied according to the classification of the users and the general information in superposed relation with each other,
a plurality of the accompanying information generating units are provided for each process to be executed, and
the user information reading unit changes the correspondence with the accompanying information generating unit according to the menu information.

7. An information providing apparatus that displays the general information aimed at a multiplicity of unspecified persons, comprising:
a displaying unit;
a display processing unit that causes the displaying unit to display the information; and
a user detecting unit that detects the user existing in a predetermined range from the displaying unit;
wherein the display processing unit, upon detection of the user by the user detecting unit, causes the displaying unit to display an image including the detailed information of the general information on display and the general information in superposed relation with each other.

8. The information providing apparatus according to claim 7, wherein the display processing unit, upon detection of the user by the user detecting unit, divides the displaying unit into a display area for displaying the general information aimed at a multiplicity of unspecified persons and a display area for displaying the detailed information aimed at the user, and causes the displaying unit to display the display information corresponding to the respective display areas.

9. The information providing apparatus according to claim 8, wherein a plurality of the user detecting units are provided and
the display processing unit, upon detection of the movement of the user by the user detecting unit, displays by moving the detailed information aimed at the user in the displaying unit according to the movement of the user.

10. An information providing apparatus comprising:
a displaying unit;
a display processing unit that causes the displaying unit to display the reservation situation information on services and goods;
a user interface unit constituting an interface with the user reserving the services or services;
a select information determination processing unit that specifies the select information selected by the user interface unit from the reservation situation information displayed on the displaying unit; and
a reservation processing unit that processes the reservation of the select information specified by the select information determination processing unit.

11. An information providing apparatus that displays the display information having predetermined contents, comprising:
a displaying unit;
a display processing unit that causes the displaying unit to display the display information;
a user interface unit that allows the user to access the display information displayed on the displaying unit; and
a select information determination processing unit that specifies the display information selected by the user interface unit and displayed on the displaying unit;
wherein the display processing unit has the function of moving the display information specified by the select information determination processing unit to the position pointed by the user through the user interface unit.

12. An information providing apparatus that displays the display information having predetermined contents, comprising:
a displaying unit;
a registered information storage unit that stores the registered information with the correspondence between the registered contents related to the user of the information providing apparatus and the user identification information for identifying the user;
a display information storage unit that stores the display information related to the registered contents;
a user information reading unit that reads the user identification information from the user storage medium held by the user existing within a predetermined range;
a registered content-wise user number counting unit that counts the number of the users for each registered content by accessing, from the registered information storage unit, the registered information corresponding to all the user identification information read by the user reading unit; and
a display processing unit that lays out the display information related to the registered contents related to the user extracted from the display information storage unit, according to a predetermined rule corresponding to the number of the users counted by the registered content-wise user number counting unit, and causing the displaying unit to display the layout.

13. An information providing apparatus that displays the display information having predetermined contents, comprising:
a displaying unit;
a display information storage unit that stores the display information displayed on the displaying unit and the content information indicating pieces of the display information that can be displayed on the displaying unit;
a display processing unit that extracts the display information from the display information storage unit and causing the displaying unit to display the display information; and
a request counting unit that counts the requests for the display information in the content information, that are received from the users existing in the neighborhood of the place of installation of the information providing apparatus;
wherein the display processing unit changes the manner in which the plurality of the display information in the content information are displayed, according to the result of counting by the request counting unit.

14. The information providing apparatus according to claim 13, wherein the display processing unit has the presentation order changing function for causing the displaying unit to display the plurality of the display information in the content information in the descending order of the number of requests.

15. The information providing apparatus according to claim 13, wherein the display processing unit has the layout changing function for causing the displaying unit to display pieces of the display information in the content information by changing the size of the display area according to the number of requests.

16. An information providing apparatus for voting, comprising:
a displaying unit;
a display information storage unit that stores the display information on the object to be voted by the user of the information providing apparatus;
a voter information storage unit that stores the voter authentication information for authenticating the user having the voting right;
a display processing unit that causes the displaying unit divided into the display areas to simultaneously display the display information on a plurality of voting objects extracted from the display information storage unit;
a user authenticating unit that is supplied with the user authentication information corresponding to the display areas and that compares the input user authentication information with the voter authentication information stored in the voter information storage unit thereby to determine whether the user has the voting right; and
a vote counting unit that counts the votes cast for the voting objects by the users having the voting right.

17. The information providing apparatus according to any one of claims 1, 7, 10 to 13 and 16, wherein the display processing unit further comprises:
the function of dividing the displaying unit into a plurality of small display areas and displaying different display information in the small display areas; and
the function of displaying the display information displayed in a small display area selected by the user, in a large display area selected according to a predetermined rule and containing a plurality of adjacent small display areas including the selected small display area.

18. An information providing system comprising, interconnected according to a predetermined communication scheme, an information providing apparatus that displays an image or a video and distributing the audio data corresponding to the image or the video and a user communication terminal held by the user for distributing the audio data to the user terminal, wherein
the information providing apparatus includes a displaying unit, a display processing unit that causes the displaying unit to display the information, an audio data storage unit that stores the audio data corresponding to the information displayed on the displaying unit and the distribution information for establishing the correspondence between the information displayed on the displaying unit and the source of the audio data corresponding to the displayed information, and a data communication processing unit that transmits the distribution information to the user communication terminal of the user existing in the neighborhood of the place of installation of the displaying unit and distributing the audio data based on the instruction from the user; and
the user communication terminal includes a displaying unit that displays the distribution information received from the information providing apparatus, and an audio data playing unit that receives the audio data selected by the user from the distribution information apparatus and playing the selected audio data.

19. An information providing system comprising, interconnected by a network, an information providing apparatus installed at a predetermined place for displaying the display information related to the place and an information management server for managing the information displayed on the information providing apparatus, wherein
the information management server includes a display information storage unit that stores the display information containing the general information having the contents related to the place of installation of the information management server and the additional information having the predetermined contents registered by the user of the information providing system; and
the information providing apparatus includes a displaying unit, a display processing unit that causes the displaying unit to display the display information of the display information storage unit of the information management unit, a user interface unit that allows the user to access the information displayed on the displaying unit, and an additional information acquisition unit that acquires, from the display information storage unit of the information management server, the additional information corresponding to the user obtained from the user interface unit.

20. An information providing system comprising, interconnected through a network, an information providing apparatus installed at a predetermined place for displaying the information related to the place and an information management server for managing the information displayed on the information providing apparatus, wherein
the information management server includes a display information storage unit that stores the display information containing the general information having the contents related to the place of installation of the information management server and not changing with time and the real-time information having the contents changing with time; and
the information providing apparatus includes a displaying unit, a user interface unit that allows the user to access the information displayed on the displaying unit, an additional information acquisition unit that acquires the additional information corresponding to the general information selected by the user interface unit, from the display information storage unit of the information management server, and a display processing unit that causes the displaying unit to display the general information when the user makes no access from the user interface unit and to display the additional information corresponding to the access when the user makes access from the user interface unit.

21. An information providing system comprising, interconnected by a network, an information providing apparatus installed in a conference room for displaying the display information related to the conference and a conference information management server for managing the information displayed on the information providing apparatus, wherein
the conference management server includes a conference information storage unit that stores the conference information containing the schedule for and the names of attendants at the conference held in the conference room, a material storage unit that stores the materials used in the conference room, and a display information storage unit that stores the display information including the menu information displayed on the information providing apparatus installed in the conference room and the layout information for displaying the materials; and
the information providing apparatus includes a displaying unit, a user information reading unit that reads the user information containing the information for identifying the user in the user information storage medium held by the user of the conference room, a menu item processing unit that extracts the materials used by the user in the conference room from the material storage unit of the conference management server based on the user information read by the user information reading unit, and a display processing that displays the menu screen on the displaying unit using the menu information stored in the display information storage unit of the conference management server and displaying the materials extracted by the menu item processing unit on the displaying unit using the layout information.

22. The information providing apparatus according to claim 1, comprising a plurality of the user information reading units each corresponding to a different color or a different pattern, wherein
the display processing unit displays the menu information in a color or a pattern corresponding to the user information reading unit at a position on the displaying unit corresponding to the same user information reading unit, and
a plurality of the accompanying information generating units corresponding to the user information reading units for each process to be executed are provided to generate the accompanying information in a color or a pattern corresponding to the corresponding user information reading unit.

23. The information providing apparatus according to claim 1, comprising a plurality of the user information reading units for reading the user identification marks set by the user together with the user information from the user information storage medium, wherein
the accompanying information generating unit generates the accompanying information using the user identification mark read by the user information reading units, and
the display processing unit displays the accompanying information containing the user identification mark on the displaying unit.

24. The information providing apparatus according to claim 1, comprising a plurality of the user information reading units, wherein
the accompanying information generating unit issues the user identification mark for identifying the user read by the user information reading unit and generates the accompanying information using the user identification mark, and
the display processing unit displays the accompanying information containing the user identification mark on the displaying unit.

25. The information providing apparatus according to claim 1, comprising a plurality of the user information reading units and a plurality of the accompanying information generating units corresponding to the user information reading units for each process to be executed, wherein
the display processing unit displays the accompanying information generated by the accompanying information generating unit in the neighborhood of the position on the displaying unit corresponding to the user information reading unit that has read the user information.

26. The information providing apparatus according to claim 1 or 12, wherein the display processing unit displays the menu information operated by the user information reading units in an area adjacent to the user information reading units on the displaying unit.

27. The information providing apparatus according to claim 1, further comprising an advertisement content information storage unit that establishes correspondence between the business information for a business that wishes to advertise and a predetermined attribute in the user information or the accompanying information, wherein
the accompanying information generating unit generates, in addition to the accompanying information, the business information extracted from the advertisement content information storage unit based on a predetermined attribute in the user information read or the accompanying information, and
the display processing unit displays the accompanying information and the business information on the displaying unit.

28. The information providing apparatus according to claim 12 or 13, further comprising a user detecting unit that detects the user existing within a predetermined range from the displaying unit, wherein
the display processing unit, upon detection of no user by the user detecting unit, sequentially displays, as general information, the display information stored in the display information storage unit, and upon detection of the user by the user detecting unit, displays a user interface for switching the display of the contents on the displaying unit, in a predetermined area in the displaying unit.

## Amended claims

### Amended claims under Art. 19.1 PCT

**1.** An information providing apparatus (10) that displays the general information aimed at a multiplicity of unspecified persons, comprising:
a user information reading unit (13) that reads the user information from a user information storage medium held by the user of the information providing apparatus (10);
an accompanying information generating unit (15) that executes a predetermined process based on the user information read by the user information reading unit (13) and generating the accompanying information related to the user; and
a display processing unit (16) that causes the displaying unit (11) to display the general information and to display an image including the accompanying information and the general information in superposed relation with each other;
wherein, a plurality of the user information reading units (13) are provided,
a plurality of the accompanying information generating units (15) are provided corresponding to the user information reading units (13) for each of the predetermined process executed, and generates the accompanying information for each of the users, and
the display processing unit (16) causes the displaying unit (11) to display pieces of the accompanying information in a manner distinguishable from each other.

**2.** The information providing apparatus (10) according to claim 1, wherein the display processing unit (16) displays the accompanying information in a manner distinguishable from the general information.

**3.** The information providing apparatus (10) according to claim 1, further comprising a user detecting unit (12) that detects the user existing in a predetermined range from the displaying unit (11),
wherein the display processing unit (16), upon detection of the user by the user detecting unit (12), causes the displaying unit (11) to display an image including the menu information indicating the contents processed in the accompanying information generating unit (15) and the general information in superposed relation with each other.

**4.** The information providing apparatus (10) according to claim 3, further comprising a user determining unit (18) that classifies the users based on the predetermined attribute information in the user information read by the user information reading unit (13) from the user information storage medium of the user approaching the information providing apparatus (10),
wherein the display processing unit (16) has the function of causing the displaying unit (11) to display the menu information varied according to the classification of the users and the general information in superposed relation with each other, and
the user information reading unit (13) changes the correspondence with the accompanying information generating unit (15) according to the menu information.

**5.** The information providing apparatus (10) according to claim 3, wherein the display processing unit (16), upon detection of the user by the user detecting unit (12), causes the displaying unit (11) to display an image including the detailed information of the general information on display and the general information in superposed relation with each other.

**6.** The information providing apparatus (10) according to claim 3, wherein the display processing unit (16), upon detection of the user by the user detecting unit (12), divides the displaying unit (11) into a display area for displaying the general information aimed at a multiplicity of unspecified persons and a display area for displaying the detailed information aimed at the user, and causes the displaying unit (11) to display the display information corresponding to the respective display areas.

**7.** The information providing apparatus (10) according to claim 5, wherein a plurality of the user detecting units (12) are provided and
the display processing unit (16), upon detection of the movement of the user by the user detecting unit (12), displays by moving the detailed information aimed at the user in the displaying unit (11) according to the movement of the user.

**8.** The information providing apparatus (10) according to claim 3, wherein the user information reading units (13) each correspond to a different color or a different pattern,
the display processing unit (16) displays the menu information in a color or a pattern corresponding to the user information reading unit (13) at a position on the displaying unit (11) corresponding to the same user information reading unit (13), and
the accompanying information generating units (15) corresponding to the user information reading units (13) for each process to be executed are provided to generate the accompanying information in a color or a pattern corresponding to the corresponding user information reading unit (13).

**9.** The information providing apparatus (10) according to claim 3, wherein the user information reading units (13) read the user identification marks set by the user together with the user information from the user information storage medium, the accompanying information generating unit (15) generates the accompanying information using the user identification mark read by the user information reading units (13), and
the display processing unit (16) displays the accompanying information containing the user identification mark on the displaying unit (11).

**10.** The information providing apparatus (10) according to claim 3, wherein
the accompanying information generating unit (15) issues the user identification mark for identifying the user read by the user information reading unit (13) and generates the accompanying information using the user identification mark, and
the display processing unit (16) displays the accompanying information containing the user identification mark on the displaying unit (11).

**11.** The information providing apparatus (10) according to claim 3, wherein
the display processing unit (16) displays the accompanying information generated by the accompanying information generating unit (15) in the neighborhood of the position on the displaying unit (11) corresponding to the user information reading unit (13) that has read the user information.

**12.** The information providing apparatus (10) according to claim 3, wherein the display processing unit (16) displays the menu information operated by the user information reading units (13) in an area adjacent to the user information reading units (13) on the displaying unit (11).

**13.** The information providing apparatus (10) according to claim 3, further comprising an advertisement content information storage unit that establishes correspondence between the business information for a business that wishes to advertise and a predetermined attribute in the user information or the accompanying information, wherein
the accompanying information generating unit (15) generates, in addition to the accompanying information, the business information extracted from the advertisement content information storage unit based on a predetermined attribute in the user information read or the accompanying information, and
the display processing unit (16) displays the accompanying information and the business information on the displaying unit (11).

**14.** The information providing apparatus (10) according to claim 3, comprising:
a display information storage unit (14) that stores the display information on the object to be voted by the user of the information providing apparatus (10);
a voter information storage unit (31) that stores the voter authentication information for authenticating the user having the voting right;
a voter display processing unit (16) that causes the displaying unit (11) divided into the display areas to simultaneously display the display information on a plurality of voting objects extracted from the display information storage unit (14);
a user authenticating unit that is supplied with the user authentication information corresponding to the display areas and that compares the input user authentication information with the voter authentication information stored in the voter information storage unit (31) thereby to determine whether the user has the voting right; and
a vote counting unit (33) that counts the votes cast for the voting objects by the users having the voting right.

**15.** The information providing apparatus (10) according to claim 14, wherein the voter display processing unit (16) further comprises:
the function of dividing the displaying unit (11) into a plurality of small display areas and displaying different display information in the small display areas; and
the function of displaying the display information displayed in a small display area selected by the user, in a large display area selected according to a predetermined rule and containing a plurality of adjacent small display areas including the selected small display area.

**16.** An information providing system comprising, interconnected by a network (150), an information providing apparatus (10) installed at a predetermined place for displaying the display information related to the place and an information management server (70) for managing the information displayed on the information providing apparatus (10), wherein
the information management server (70) includes a display information storage unit (14) that stores the display information containing the general information having the contents related to the place of installation of the information management server (70) and the additional information having the predetermined contents registered by the user of the information providing system; and
the information providing apparatus (10) includes a user interface unit (19) that allows the user to access the information displayed on an displaying unit (11), an additional information acquisition unit that acquires, from the display information storage unit (14) of the information management server, the additional information corresponding to the general information selected by the user interface unit (19), and a display processing unit (16) that causes the displaying unit (11) to display the display information of the display information storage unit (14) of the information management server, and to display an image including the additional information and the general information in superposed relation with each other;
wherein, a plurality of the user interface units (19) are provided,
a plurality of the additional information acquisition units are provided corresponding to the user interface unit (19), and generates the additional information for each of the users, and
the display processing unit (16) causes the displaying unit (11) to display pieces of the additional information in a manner distinguishable from each other.

**17.** The information providing system according to claim 16, wherein,
the general information includes the contents not changing with time, and the additional information is the real-time information having the contents changing with time; and
the display processing unit (16) causes the displaying unit (11) to display the general information and to display the additional information corresponding to the access when the user makes access from the user interface unit (19).

**18.** A computer program product having a computer readable medium including programmed instructions for displaying the general information aimed at a multiplicity of unspecified persons, wherein the instructions, when executed by a computer, cause the computer to perform:
reading the user information from a user information storage medium held by the user of the information providing apparatus (10);
executing a predetermined process based on the user information read by the user information reading unit (13) and generating the accompanying information related to the user; and
causing the displaying unit (11) to display the general information and to display an image including the accompanying information and the general information in superposed relation with each other; and
wherein, a plurality of the user information reading units (13) are provided,
a plurality of the accompanying information generating units (15) are provided corresponding to the user information reading units (13) for each of the predetermined process executed, and generates the accompanying information for each of the users, and
the display processing unit (16) causes the displaying unit (11) to display pieces of the accompanying information in a manner distinguishable from each other.

**19.** An information providing method for an information providing apparatus (10) that displays the general information aimed at a multiplicity of unspecified persons, comprising:
reading the user information from a user information storage medium held by the user of the information providing apparatus (10);
executing a predetermined process based on the user information read by the user information reading unit (13) and generating the accompanying information related to the user; and
causing the displaying unit (11) to display the general information and to display an image including the accompanying information and the general information in superposed relation with each other;
wherein, a plurality of the user information reading units (13) are provided,
a plurality of the accompanying information generating units (15) are provided corresponding to the user information reading units (13) for each of the predetermined process executed, and generates the accompanying information for each of the users, and
the display processing unit (16) causes the displaying unit (11) to display pieces of the accompanying information in a manner distinguishable from each other.
